# EUROPEAN PATENT APPLICATION

(11) **EP 4 338 592 A1**
(43) Date of publication of application: **20.03.2024**
(21) Application number: 22195815.0
(22) Date of filing: 15.09.2022
(51) Int. Cl.: A01N 25/30, A01N 57/20, A01P 13/00

(54) **USE OF COMPOUND FOR IMPROVING THE EFFICACY OF HERBICIDES**

(71) Applicant: BASF SE, 67056 Ludwigshafen am Rhein (DE)
(72) Inventor: FIESS, Markus, 67117 Limburgerhof (DE); MEINERS, Ingo, Durham, North Carolina 27709-3528 (US); KIENLE, Marcel Patrik, 67117 Limburgerhof (DE); MOLAWI, Kian, 67056 Ludwigshafen am Rhein (DE); NORD, Simon, 67117 Limburgerhof (DE)
(74) Representative: Reitstötter Kinzebach

(57) **Abstract**

The present invention relates to use of at least one compound of the formula (I)

[R-O((A-O)ₙ-SO₃]⁻M⁺ (I)

in which
M⁺
is a cation;
A
is C₂-C₃-alkandiyl;
R
is selected from linear or branched C₁₁-C₂₀-alkyl and mixtures thereof; and
n
is a natural positive number of 2 to 12 where the number average of n is in the range of 3 to 10;
for increasing the herbicidal effect of one or more herbicide compounds.

The present invention also relates to a method for controlling undesired plants, in which at least one compound of the formula (I) and at least one herbicide compound are applied to the undesired plant or its habitat.

Furthermore, the present invention also relates to an herbicidal formulation comprising at least one compound of the formula (I) and at least one herbicide compound and to an aqueous spray liquor comprising at least one compound of the formula (I) and at least one herbicide compound.

## Description

The present invention relates to use of at least one compound of the formula (I) as defined hereinafter for increasing the herbicidal effect of one or more herbicide compounds, and to a method for controlling undesired plants, in which at least one compound of the formula (I) and at least one herbicide compound, as defined hereinafter, are applied to the undesired plant or its habitat.

The present invention also relates to an herbicidal formulation comprising at least one compound of the formula (I) and at least one herbicide compound, as defined hereinafter. Moreover, the present invention relates to an aqueous spray liquor comprising at least one compound of the formula (I) and at least one herbicide compound, as defined hereinafter.

### BACKGROUND ON THE INVENTION

In agriculture, herbicides are widely applied in order to control growth of undesirable plants, such as weeds, because the undesired plants compete with crop plants for water, nutrition and sunlight and therefore reduce crop yields and crop quality. Herbicides may be applied to clear cropland from undesirable plants before sowing or planting crop plants. However, depending on the crops and their compatibility with the herbicide, the herbicide may also be applied to fields where the crop plants grow.

In order to be effective, herbicides must overcome a variety of barriers (morphological, biological, and environmental) to their entry into target plants. For example, trichomes on the leaf surface can reduce herbicide efficacy by intercepting spray droplets before they contact the epidermal surface. Environmental stress (e.g., hot, dry weather) may develop a thicker than normal wax layer, or increase other defensive structures such as reducing the plant's metabolic and transport processes that are required for adequate weed control. Consequently, the biological activity of an herbicide may not be satisfactory or at least lower than expected. While higher application rates may achieve better herbicidal efficacy, this is often not possible for regulatory reasons and is not desirable for ecological and economic reasons. Rather, there is great interest in increasing the biological effectiveness, also termed efficacy or biological efficacy, of herbicides in order to reduce application rates in this way.

It is well known that the efficacy of herbicides can be increased by certain adjuvants. Adjuvants (from Latin, *adiuvare:* to aid) are commonly used in agriculture to improve the performance of herbicides or other pesticides, including better mixing and handling, increased effectiveness and safety, better distribution, and drift reduction. Broadly defined, an adjuvant is an ingredient that aids or modifies the action of the principal active ingredient. Adjuvants can be roughly classified into 3 groups: activators, spray modifiers and utility modifiers.

Activators will mainly increase the efficacy of the herbicides by various modes of action. Activators are typically surfactants, in particular non-ionic surfactants (NIS), including silicone surfactants, oils, such as high surfactant oils, crop oil concentrates, vegetable oil concentrates and modified vegetable oil concentrates, and wetting agents. Spray modifiers will alter the properties of the aqueous spray liquor and thus facilitate aiming the herbicide spray, reduce herbicide drift in the air or may cause the spray to more readily adhere to the plant by various mechanisms. Utility modifiers help minimize handling and application problems. They widen the conditions when an herbicide can be used or maintain the integrity of the spray solution. For example, utility modifiers reduce foaming, increase solubility, modify pH, or reduce spray drift. In contrast to activators, spray modifiers and utility modifiers usually do not improve the biological efficacy of the pesticide but facilitate the application of the aqueous pesticide spray liquor.

A review about adjuvant technology is given by Z. Pacanosky, Herbicide Adjuvants (2015), DOI: 10.5772/60842. A summary of commercially available adjuvants for herbicides, hereinafter herbicide adjuvants, is given by B. G. Young et al. (ed.) "Compendium of Herbicide Adjuvants", 13th Edition (2016), Purdue Extension and Southern Illinois University (https://mdc.itap.purdue.edu/item.asp?ltem_Number=PPP-115).

Water-soluble herbicides, such as glufosinate, are chemical substances that penetrate and damage and/or destroy plant cells, tissues or parasitic organisms in or on the plant. Formulations containing water-soluble herbicides are commonly used in the form of liquid or solid concentrated preparations that facilitate user handling or provide increased effectiveness of the active ingredient. The formulations are typically diluted with water prior to use and then applied by spray application. Water-soluble concentrates (Soluble Liquids, SL) are a particularly important form of herbicide formulations, wherein the active ingredient is often used as a water-soluble salt obtained by neutralizing the acid form of the herbicide with suitable bases.

Particularly in the case of water-soluble herbicide compounds, such as glufosinate, the type and quantity of adjuvants used have a decisive influence on the efficacy of the formulation. Aqueous formulations of glufosinate ammonium are known, for example, from EP-A-0048436, EP-A-0336151, EP-A-1093722, WO 2007/147500 A1 or WO2007/092351 A2, wherein alkyl ether sulfates are used as adjuvants.

Up to now, alkyl ether sulfates having a C₁₂ alkyl chain and 1 or 2 ethylene oxide unit(s), such as sodium lauryl ether sulfate (SLES) or sodium myristyl ether sulfate, have been used as adjuvant in commercially available formulations of glufosinate. However, they are associated with certain drawbacks.

One drawback of the commercially available adjuvants for glufosinate, especially SLES is that they are under pressure for regulatory reasons. In particular, the allowed maximum amount is may be limited amounts. Even though SLES enhances the effectiveness of the active ingredients the enhancement may not be satisfactory at the allowed maximum application rates. Therefore, it is object to provide adjuvants which provide effects at least comparable to the conventional adjuvants such as SLES and which are allowed to be applied at higher application rates. A further drawback of SLES is that it is prepared from palm kernel oil or coconut oil. Such sources of raw materials are, however, have a poor supply chain reliability. Therefore, it is required to find adjuvants for formulations that can be obtained from sustainable resources and/or through reliable supply chains and at the same time provide effects at least comparable to the conventional adjuvants.

A problem with the provision of further adjuvants is that their activity is not predictable. In particular, some analogues of SLES which are prepared based on petrochemical sources provided insufficient enhancement of the herbicidal activity. Thus, there is an ongoing need to find adjuvants for formulations containing water-soluble herbicides that may satisfactorily enhance the herbicidal efficacy of the active ingredient in the formulation and at the same time may have no adverse effect on the physicochemical properties of the formulation.

### SUMMARY OF THE INVENTION

It is therefore an object of the present invention to provide further compounds which increase the activity of herbicides, in particular, of water-soluble herbicides. Moreover, such compounds should have no adverse effect on the physicochemical properties of the formulation, at best they should lead better foaming behavior for easy handling or spraying of the formulation containing water-soluble herbicides such as glufosinate. Moreover, it is also an object of the present invention to provide further adjuvants which are obtainable from sustainable resources and/or through reliable supply chains and at the same time provide effects at least comparable to the conventional adjuvants.

Surprisingly, it has now been found that the compounds of formula (I) as described herein solve the above mentioned problems. In particular, they increase the effectiveness of herbicide compounds at least to a similar extent as the commercially available alkylether sulfates, such as sodium lauryl ether sulfate or sodium myristyl ether sulfate, whithout being limited to the regulatory restrictions. Moreover the compounds of the formula (I) can be obtained from sustainable resources and/or through reliable supply chains,

Also surprisingly, it has been found that combinations of the compounds of the formula (I), as described herein, with above-mentioned commercially available adjuvant, e.g. SLES improve the herbicidal effect of one or more herbicide compounds, compared to single use of one or more herbicide compounds or use of one or more herbicide compounds in sole presence of the above-mentioned commercially available adjuvant, e.g. SLES. It has been found that such combinations provide at least the same herbicidal effect, compared to single use of herbicide compound(s) or use thereof in sole presence of SLES.

Therefore, the present invention relates to use of at least one compound of the formula (I)

[R-O-(A-O)ₙ-SO₃]⁻M⁺ (I)

in which
- M⁺: is a cation;
- A: is C₂-C₃ alkandiyl;
- R: is selected from linear or branched C₁₁-C₂₀-alkyl and mixtures thereof; and
- n: is a natural positive number of 2 to 12 where the number average of n is in the range of 3 to 10;
for increasing the herbicidal effect of one or more herbicide compounds.

The present invention also relates to a method for controlling undesired plants, wherein at least one compound of the formula (I), as defined herein, and at least one herbicide compound are applied to the undesired plants or their habitat.

The compounds of the formula (I) can be easily incorporated in conventional herbicide formulations of one or more herbicide compounds, in particular into liquid herbicide formulations. Therefore, a further aspect of the present invention is a herbicidal formulation comprising
i. at least one compound of the formula (I) as defined herein; and
ii. at least one herbicide compound.

For controlling undesired plants, the at least one compound of the formula (I), as defined herein, and at least one herbicide compound are usually applied as an aqueous spray liquor. Therefore, the present invention relates to an aqueous spray liquor comprising
i. at least one compound of the formula (I) as defined herein; and
ii. at least one herbicide compound.

The compound of the formula (I) of the present invention has several advantages. First of all, it improves the herbicidal effect of herbicide compounds. In particular, it improves the effectiveness of various herbicide compounds, e. g. glufosinate as well as salts of glufosinate, to a greater extent than other alkyl ether sulfates known as activator adjuvants for herbicides, such as SLES. In particular, it improves the efficacy of the herbicide with regard undesired plants which are difficult to control and thus broadens the applicability of the respective herbicide compound(s). For this, the compound formula (I) can be co-formulated with the herbicide compound in aqueous as well as in a non-aqueous herbicide formulations. It may also be mixed with a conventional formulation of the herbicide compound in an aqueous spray liquor (tank-mix).

### DETAILED DESCRIPTION OF THE INVENTION

As used herein "herbicide" refers to one or more agents, compounds and/or compositions having herbistatic and/or herbicidal activity.

As used herein "herbicide compound" refers to a single chemical compound, in particular an organic compound, which has herbistatic and/or herbicidal activity.

As used herein, the terms "the herbicidal effect", "the effectiveness of the herbicide" and "the efficacy of herbicide" are used synonymously. The terms "improving the herbicidal effect" and "increasing the herbicidal effect", refer to an increase or enhancement of the herbicidal activity of the respective herbicide compound against a certain undesired plant. This means that the combined use of the herbicide compound and the compound of the formula (I) provides greater herbicidal activity against a target plant at a given application rate of the herbicide compound compared to the activity of the herbicide compound at the same application rate in the absence of the compound of formula (I).

As used herein, the terms "controlling" and "combating" are synonyms, referring to inhibition of growth, control of growth, reduction of growth or complete destruction of undesired plants.

As used herein, the terms "undesirable plants", "undesirable vegetation", "undesirable species", "harmful plants", "weeds", "undesirable weeds", "volunteer plants" or "harmful weeds" are used synonymously.

As used herein, the terms "action improver", "action improver system", "booster" "activator adjuvant" and "adjuvant" are used synonymously.

Here and throughout the specification, the terms "wt%", "wt.-%", "wt.%", "weight percent" and "% by weight" are used synonymously.

Here and throughout the specification, the term "more herbicide compounds" is to be understood by "more than one herbicide compounds" and therefore includes a "mixture of herbicide compounds". As used herein, the term "mixture of herbicide compounds" refers to a physical and/or chemical mixture comprising at least one herbicide compound.

As used herein, the term "herbicide compound(s)" refers to one or more herbicide compounds.

According to the invention, the compound of formula (I) is an alkyl ether sulfate salt having C₁₁-C₂₀-alkyl as alkyl rest, a linker -(A-O)ₙ- formed by 2 to 12, on average 3 to 10 C₂-C₃-alkylene oxide unit(s) A-O between C₁₁-C₂₀-alkyl and sulfate group, and a cation M⁺ as counterion for sulfate group.

In this context, the term "C₁₁-C₂₀-alkyl" refers to linear or branched saturated alkyl radicals generally having from 11 to 20 carbon atoms (C₁₁-C₂₀-alkyl), in particular 12 to 18 carbon atoms (C₁₂-C₁₈-alkyl).

Suitable examples of C₁₁-C₂₀-alkyl include, but are not limited to undecanyl, dodecyl, tridecyl, isotridecyl, tetramethylnonyl, ethyldimethylnonyl, tetradecyl, pentadecyl, hexadecyl, heptadecyl, octadecyl, nonadecyl, eicosyl, including the linear isomers, such as n-undecyl, n-dodecyl, n-tridecyl, n-tetradecyl, n-pentadecyl, n-hexadecyl, n-heptadecyl, n-octadecyl, n-nonadecyl and n-eicosyl, and the branched isomers thereof, also termed iso-isomers, such as isoundecyl, e. g. 2-methyldecyl, 9-methyldecyl, the dimethylnonyl isomers, the trimethyloctyl isomers, the tetramethylheptyl isomers and the ethyldimethylnonyl isomers; iso-dodecyl, e. g. 2-methylundecyl, 10-methylundecyl, 2-butyloctyl, the dimethyldecyl isomers, the trimethylnonyl isomers and the tetramethyloctyl isomers; isotridecyl, e. g. 2-methyldodecyl, 11-methyldodecyl, the dimethylundecyl isomers, the trimethyldecyl isomers, the tetramethylnonyl isomers, such as 2,4,6,8-tetramethyl-1-nonyl, 3,4,6,8-tetramethyl-1-nonyl, the pentamethyloctyl isomers and 5-ethyl-4,7-dimethyl-1-nonyl; isotetradecyl, e. g. 2-methyltridecyl, 12-methyltridecyl, 2-pentylnonyl, the dimethyldodecyl isomers, the trimethylundecyl isomers, the tetramethyldecyl isomers and the pentamethylnonyl isomers; isopentadecyl; isohexadecyl; isoheptadecyl; isooctadecyl such as 2-octyldecyl; isononadecyl; and isoeicosyl.

Here and throughout the specification, the terms "C₂-C₃-alkylene" and "C₂-C₃-alkandiyl" are used synonymously and refer to linear or branched divalent alkyl radicals having from 2 or 3 carbon atoms, such as 1,2-ethandiyl (= CH₂CH₂) and 1,2-propandiyl (= CH₂CH(CH₃)).

According to the invention, the variable n in the formula (I) is natural positive number of 2 to 12, in particular in the range of 3 to 10, especially in the range of 3 to 8, i. e. n is 3, 4, 5, 6, 7 or 8. The compound of the formula (I) is typically a mixture of compounds with different n. The average of n is typically in the range of 3 to 10, in particular in the range of 3 to 8, preferably in the range of 3 to 7, more preferably in the range of 3 to 6.5. Any reference to average of n refers to the number average of the repeating units A-O per molecule, i. e. to the relative molar amounts of repeating units A-O with respect to R, i. e. the average is the number average.

In the compounds of the formula (I) the radicals R may be identical, i. e. all molecules or at least 95 mol-% of the molelcules of the formula (I) have the same group R. In the compounds of the formula (I) the radicals R may by different, i. e. the compounds of the formula (I) are mixtures of compounds having different radicals R. The difference of R may result from different isomers of the respective radical R having the same number of carbon atoms or from differences in the number of carbon atoms in the radical R or from both.

In particular, the radical R comprises at least 40% by weight, more particularlyl at least 50% by weight, or up to 100% by weight, based on the total weight alkyl radicals R present in the compounds of the formula (I), of alkyl radicals R having 12 to 14 carbon atoms (C₁₂-C₁₄-alkyl).

In a particular group (A) of embodiments, R is selected from the group consisting of linear C₁₂-C₁₈-alkyl. In this particular group (A) of embodiments, the radical R frequently comprises at least 40% by weight, more particularlyl at least 45% by weight or up to 100% by weight, based on the total weight alkyl radicals R present in the compounds of the formula (I), of linear alkyl radicals R having 12 to 14 carbon atoms (C₁₂-C₁₄-alkyl). In this particular group (A) of embodiments, the radical R preferably comprises 45 to 95% by weight, more particularlyl 50 to 90% by weight, based on the total weight alkyl radicals R present in the compounds of the formula (I), of linear alkyl radicals R having 12 to 14 carbon atoms (C₁₂-C₁₄-alkyl) and 5 to 45% by weight, in particular 10 to 50% by weight of linear alkyl radicals R having 15 to 18 carbon atoms (C₁₅-C₁₈-alkyl). In this particular group (A) of embodiments, the radical R more preferably comprises 45 to 95% by weight, more particularlyl 50 to 90% by weight, based on the total weight alkyl radicals R present in the compounds of the formula (I), of linear alkyl radicals R having 12 or 14 carbon atoms (C₁₂ or C₁₄-alkyl) and 5 to 45% by weight, in particular 10 to 50% by weight of linear alkyl radicals R having 16 or 18 carbon atoms (C₁₆- or C₁₈-alkyl). In this particular group (A) of embodiments, the radical R especially comprises 40 to 80% by weight of linear C₁₂ alkyl, 5 to 40% by weight of linear C₁₄ alkyl, 5 to 30% by weight of linear C₁₆ alkyl and 5 to 30% by weight of linear C₁₈ alkyl, based in each case on the weight of total weight of the moieties R.

In this particular group (A) of embodiments, the number average of n is preferably in the range of 4 to 10, in particular in the range of 5 to 8 and especially in the range of 5.5 to 6.5.

In a particular group (B) of embodiments, R is selected from the group consisting of branched C₁₂-C₁₄-alkyl, such as iso-dodecyl, isotridecyl and isotetradecyl. In this particular group (B) of embodiments, R is preferably isotridecyl, e.g. 2-methyldodecyl, 11-methyldodecyl, the dimethylundecyl isomers, the trimethyldecyl isomers, the tetramethylnonyl isomers, such as 2,4,6,8-tetramethyl-1-nonyl, 3,4,6,8-tetramethyl-1-nonyl, the pentamethyloctyl isomers and 5-ethyl-4,7-dimethyl-1-nonyl, or a mixture of branced C₁₂-C₁₄-alkyl comprsing at least 90% by weight of isotridecyl, based on the total amount weight of radicals R in the compounds of the formula (I).

In this particular group (B) of embodiments, the number average of n is preferably in the range of 3 to 5, in particular in the range of 3 to 4 and especially 3.

The cation M⁺ may bear a single cationic charge, i.e. it is a monovalent cation or it may bear more than one cationic charge, e. g. 2, or 3 cationic charges, and thus it is multivalent. It is apparent to a skilled person that in case of multivalent cations, the cation M⁺ in the formula (I) refers to a cation equivalent of the cation for reasons of electroneutrality. Preferably, the cation M⁺ is monovalent.

In the formula (I) the cation M⁺ may be any cation suitable for agricultural purposes. The cation may be monovalent, i.e. it bears a single cationic charge, or polyvalent, i.e. it bears more than one cationic charge. In this case, M⁺ refers to the cation equivalent of the cation. Suitable cations include alkali metal cations, such as sodium or potassium ions, alkaline earth metal cations, such as calcium ion, ammonium (NH₄⁺), and cations based on organic amines. Preferably, M⁺ refers to monovalent cation. The monovalent cation M⁺ of the compound of the formula (I) is preferably selected from the group consisting of alkali metal cations, such as sodium or potassium cations, ammonium (NH₄⁺) and H₄₋ₘNR¹ₘ⁺, where R¹ is selected from the group consisting of alkyl, optionally substituted by hydroxyl, methoxy, amino, alkylamino or dialkylamino, cycloalkyl, (Alk-NR')BN(R")₂, (CH₂CH₂O)ₖCH₂CH₂OH and
(CH₂CH(CH₃)O)ₜCH₂CH(CH₃)OH, where t is 0, 1 or 2, k is 0, 1 or 2, Alk is alkylene, B is alkylene, R' is hydrogen or alkyl, R" is hydrogen or alkyl and m is an integer in the range of 1 to 4.

In the context of R¹, R', R", the term "alkyl" and likewise the alkyl moiety of alkylamino and dialyklamino refer to linear or branched saturated alkyl radicals having usually from 1 to 10 carbon atoms (C₁-C₁₀-alkyl), especially 1 to 6 carbon atoms (C₁-C₆-alkyl) or 1 to 4 carbon atoms (C₁-C₄-alkyl), including methyl, ethyl, n-propyl, 2-propyl, 2-methylpropyl (isopropyl), n-butyl, 2-butyl, isobutyl, tert.-butyl, pentyl, 1-methylbutyl, 2-methylbutyl, 3-methylbutyl, 2,2-dimethylpropyl, 1-ethylpropyl, hexyl, 1,1-dimethylpropyl, 1,2-dimethylpropyl, 1-methylpentyl, 2-methylpentyl, 3-methylpentyl, 4-methylpentyl, 1,1-dimethylbutyl, 1,2-dimethylbutyl, 1,3-dimethylbutyl, 2,2-dimethylbutyl, 2,3-dimethylbutyl, 3,3-dimethylbutyl, 1-ethylbutyl, 2-ethylbutyl, 1,1,2-trimethylpropyl, 1,2,2-trimethylpropyl, 1-ethyl-1-methylpropyl and 1-ethyl-2-methylpropyl.

In the context of R¹, the alkyl moiety of cycloalkyl refers to a mono- or bicyclic cycloaliphatic radicals, which is unsubstituted or substituted by 1, 2, 3 or 4 methyl radicals, wherein the total number of carbon atoms are usually from 3 to 10 carbon atoms (C₃-C₁₀-cycloalkyl), especially 3 to 8 carbon atoms (C₃-C₈-cycloalkyl), in particular 5 or 6 carbon atoms (C₅-C₆-cycloalkyl). Examples thereof include but are not limited to cyclobutyl, cyclopentyl, cyclohexyl, cycloheptyl, cyclooctyl, methylcyclobutyl, methylcyclopentyl, methylcyclohexyl, dimethylcyclohexyl, norbornyl (= bicyclo[2.2.1]heptyl) and isobornyl (= 1,7,7-trimethylbicyclo[2.2.1]heptyl).

In the context of Alk and B, the term "alkylene" refers to linear or branched divalent alkyl radicals having usually from 2 to 4 carbon atoms (C₂-C₄ alkylene), such as 1,2-ethandiyl (= CH₂CH₂), 1,2-propandiyl (= CH₂CH(CH₃)), 1,3-propandiyl (= CH₂CH₂CH₂), 1,2-butandiyl (= CH₂CH(CH₂CH₃)), 1,3-butandiyl (= CH₂CH₂CH(CH₃)), 1,4-butandiyl (= CH₂CH₂CH₂CH₂) and 1-methyl-1,2propandiyl (= CH(CH₃)CH(CH₃)).

Suitable examples of the cation M⁺ are, but not limited to alkali metal cations such as sodium, potassium and lithium cations, and substituted or unsubstituted ammonium cations, for example NH₄⁺ (ammonium), hydroxyethylammonium, di(hydroxyethyl)ammonium, tri(hydroxyethyl)ammonium cations, 2-hydroxypropylammonium, di(2-hydroxypropyl)ammonium and tri(2-hydroxypropyl)ammonium cations.

In particular, the cation M⁺ is H₄₋ₘNR¹ₘ⁺, where R¹ is in particular selected from the group consisting of alkyl radicals having preferably 1 to 4 carbon atoms, OH substituted alkyl radicals having preferably 2 to 4 carbon atoms, such as CH₂CH₂OH and CH₂CH(OH)CH₃, and m is an integer in the range of 1 to 4, in particular 1, 2 or 3.

Preferably, the cation M⁺ is selected from the group consisting of hydroxyethylammonium, di(hydroxyethyl)ammonium, tri(hydroxyethyl)ammonium cations, 2-hydroxypropylammonium, di(2-hydroxypropyl)ammonium and tri(2-hydroxypropyl)ammonium cations.

Even more preferably, the cation M⁺ is selected from the group consisting of hydroxyethylammonium and di(hydroxyethyl)ammonium cations.

The variable A in the formula (I) is in particular 1,2-ethandiyl (= CH₂CH₂), 1,2-propandiyl (= CH₂CH(CH₃)) or a combination thereof. The repeating units A-O of the moiety may be identical or different. Preferably, A is CH₂CH₂ or a combination of CH₂CH₂ and CH₂CH(CH₃). In other words, the repeating units A-O in the moiety are preferably ethylene oxide (= CH₂CH₂O) or 1,2-propylene oxide (= CH₂CH(CH₃)O) units. Hereinafter, ethylene oxide is also referred to as EO and propylene oxide is referred to as PO.

In a particular group (1) of embodiments, the moiety -(A-O)ₙ- in formula (I) is EOₙ, where n is on average in the range of 3 to 10, preferably in the range of 3 to 8, in particular in the range of 3 to 7, more preferably in the range of 3 to 6.5. Compounds of the formula (I) of embodiment (1) can be described by the following formula (I-1):

[R-O-EOₙ-SO₃]⁻M⁺ (I-1)

where R, EO, M⁺ and n are as defined herein.

Particular preferred examples of compounds of formula (I-1) are the compounds of formula (I-1), where n is on average about 3 or 6, i. e. in the range of 3 to 6.5.

In another particular group (2) of embodiments, the moiety -(A-O)ₙ- in formula (I) is POₚEO_{q}, where p is a natural positive number of 1 to 5, in particular 1 to 3 and especially 1 or 2 and q is a natural positive number of 2 to 5, and in particular 2 to 5, p+q=n and where the average of p+q is in the range of 3 to 10, preferably in the range of 3 to 8, in particular in the range of 3 to 7, more preferably in the range of 3 to 6.5. In the moiety POₚEO_{q} the EO and PO repeating units may be distributed randomly or blockwise. Compounds of the formula (I) of embodiment (2) can be described by the following formula (I-2):

[R-O-POₚEO_{q}-SO₃]⁻M⁺ (1-2)

where R, EO, PO, M⁺, p and q are as defined herein and where the EO and PO repeating units may be distributed randomly or blockwise in the moiety POₚEO_{q}.

Particular preferred examples of compounds of formula (1-2) are the compounds of formula (1-2), where p is on average in the range of 0.7 to 1.9 and q is on average in the range of 2.3 to 4.6.

In a particular group (3) of embodiments, the compounds of formula (I) are a mixture of the compounds of the group (1) and the group (2) of embodiments. In this mixture, the average of p is preferably in the range of 0.2 to 4, in particular in the range of 0.5 to 3 and the average of q is preferably in the range of 2.8 to 4 and in particular in the range of 2.5 to 4, where the average of p+q is preferably in the range of 3 to 8, in particular in the range of 3 to 7, more preferably in the range of 3 to 6.5.

In another particular group (4) of embodiments, R of the formulae (I), (I-1) and (I-2) is selected from the group consisting of branched saturated alkyl radicals generally having from 12 to 20 carbon atoms (C₁₂-C₂₀-alkyl), in particular 12 to 18 carbon atoms (C₁₂-C₁₈-alkyl), especially 12 to 14 carbon atoms (C₁₂-C₁₄-alkyl), preferably 13 carbon atoms (C₁₃-alkyl).

In a preferred subgroup (4-a) of (4), R of the formulae (I), (I-1) and (I-2) is as defined for group (B) of embodiments and the number average of n of the formula (I) is preferably in the range of 3 to 5, particularly in the range of 3 to 4.5, especially in the range of 3 to 4. In this group, A of the formula (I) is preferably CH₂CH₂.

Therefore, suitable examples of the compounds of this subgroup (4-a) include, but are not limited to sodium, potassium and ammonium salts of branched C₁₂-C₁₄-alkyl ether sulfate, where R is as defined for group (B) of embodiments, such as: sodium, potassium and ammonium salts of isotridecyl ether sulfate,
wherein the ether moiety -(A-O)ₙ- in formula (I) is EOₙ or POₚEO_{q}, preferably EOₙ, as described for groups (1) to (3) of embodiments,
wherein the number average of n of the formula (I) is preferably in the range of 3 to 5, particularly in the range of 3 to 4.5, especially in the range of 3 to 4, particularly especially n is 3.

Preference is given to hydroxyethylammonium, di(hydroxyethyl)ammonium, tri(hydroxyethyl)ammonium, 2-hydroxypropylammonium, di(2-hydroxypropyl)ammonium, tri(2-hydroxypropyl)ammonium salts of branched C₁₃-alkyl ether sulfates such as hydroxyethylammonium, di(hydroxyethyl)ammonium, tri(hydroxyethyl)ammonium, 2-hydroxypropylammonium, di(2-hydroxypropyl)ammonium, tri(2-hydroxypropyl)ammonium salts of isotridecyl, 2,4,6,8-tetramethyl-1-nonyl, 3,4,6,8-tetramethyl-1-nonyl, and 5-ethyl-4,7-dimethyl-1-nonyl etherl sulfate,
wherein the ether moiety -(A-O)ₙ- in formula (I) is EOₙ or POₚEO_{q}, preferably EOₙ, as described for groups (1) to (3) of embodiments,
wherein the number average of n of the formula (I) is preferably in the range of 3 to 5, particularly in the range of 3 to 4.5, especially in the range of 3 to 4, particularly especially n is 3.

Particular preference is given to hydroxyethylammonium and di(hydroxyethyl)ammonium salts of branched C₁₃-alkyl ether sulfates such as hydroxyethylammonium and di(hydroxyethyl)ammonium salts of isotridecyl ether sulfate,
wherein the ether moiety -(A-O)ₙ- in formula (I) is EOₙ or POₚEO_{q}, preferably EOₙ, as described for groups (1) to (3) of embodiments,
wherein the number average of n of the formula (I) is preferably in the range of 3 to 5, particularly in the range of 3 to 4.5, especially n is 3.

In another preferred subgroup (4-b) of (4), the compounds of formulae (I), (I-1) and (I-2) are a mixture of the compounds of the subgroup (4-a).

Suitable examples of the compounds of the subgroup (4-b) include, but are not limited to mixtures of sodium, potassium and ammonium salts of isotridecyl sulfates,
wherein the ether moiety -(A-O)ₙ- in formula (I) is EOₙ or POₚEO_{q}, preferably EOₙ, as described for groups (1) to (3) of embodiments,
wherein the number average of n of the formula (I) is preferably in the range of 3 to 5, particularly in the range of 3 to 4.5, especially in the range of 3 to 4, particularly especially n is 3.

Preference is given to mixtures of ammonium salts of isotridecyl ether sulfates, wherein the ether moiety -(A-O)ₙ- in formula (I) is EOₙ or POₚEO_{q}, preferably EOₙ, as described for groups (1) to (3) of embodiments,
wherein the number average of n of the formula (I) is preferably in the range of 3 to 5, particularly in the range of 3 to 4.5, especially n is 3.

Particular preference is given to mixtures of hydroxyethylammonium or di(hydroxyethyl)ammonium salts of isotridecyl ether sulfate,
wherein the ether moiety -(A-O)ₙ- in formula (I) is EOₙ or POₚEO_{q}, preferably EOₙ, as described for groups (1) to (3) of embodiments,
wherein the number average of n of the formula (I) is preferably in the range of 3 to 5, particularly in the range of 3 to 4.5, especially n is 3.

Another particular preference is given to mixtures of hydroxyethylammonium and di(hydroxyethyl)ammonium salts of isotridecyl ether sulfates,
wherein the ether moiety -(A-O)ₙ- in formula (I) is EOₙ or POₚEO_{q}, preferably EOₙ, as described for groups (1) to (3) of embodiments,
wherein the number average of n of the formula (I) is preferably in the range of 3 to 5, particularly in the range of 3 to 4.5, especially n is 3.

In further particular group (5) of embodiments, R of the formulae (I), (I-1) and (I-2) is selected from the group consisting of linear alkyl radicals generally having from 12 to 20 carbon atoms (C₁₂-C₂₀-alkyl), in particular 12 to 18 carbon atoms (C₁₂-C₁₈-alkyl).

In a preferred subgroup (5-a) of (5), R of the formulae (I), (I-1) and (I-2) is as defined for group (A) of embodiments and the number average of n of the formula (I) is preferably in the range of 5 to 8, particularly in the range of 5.5 to 8, especially in the range of 5.5 to 6.5. In this group, A of the formular (I) is preferably CH₂CH₂.

Suitable examples of R of the subgroup (5-a) include, but not limited to linear saturated C₁₂-C₁₈-alkyl such as: n-dodecyl, n-tridecyl, n-tetradecyl, n-pentadecyl, n-hexadecyl, n-heptadecyl, and n-octadecyl.

Therefore, suitable examples of the compounds of this subgroup (5-a) include, but are not limited to sodium, potassium and ammonium salts of linear C₁₂-C₁₈-alkyl ether sulfates,
wherein R is as defined for group A of embodiments,
wherein the ether moiety -(A-O)ₙ- in formula (I) is EOₙ or POₚEO_{q}, preferably EOₙ, as described for groups (1) to (3) of embodiments,
wherein the number average of the variable n is preferably in the range of 3 to 8, particularly in the range of 4 to 7, especially n is 6.

Preference is given to hydroxyethylammonium, di(hydroxyethyl)ammonium, tri(hydroxyethyl)ammonium, 2-hydroxypropylammonium, di(2-hydroxypropyl)ammonium and tri(2-hydroxypropyl)ammonium salts of linear C₁₂-C₁₈-alkyl ether sulfates such as: hydroxyethylammonium, di(hydroxyethyl)ammonium, tri(hydroxyethyl)ammonium, 2-hydroxypropylammonium, di(2-hydroxypropyl)ammonium and tri(2-hydroxypropyl)ammonium salts of n-dodecyl, n-tridecyl, n-tetradecyl, n-pentadecyl, n-hexadecyl, n-heptadecyl and n-octadecyl ether sulfate,
wherein the ether moiety -(A-O)ₙ- in formula (I) is EOₙ or POₚEO_{q}, preferably EOₙ, as described for groups (1) to (3) of embodiments,
wherein the number average of the variable n is preferably in the range of 3 to 8, particularly in the range of 4 to 7, especially n is 6.

Particular preference is given to hydroxyethylammonium and di(hydroxyethyl)ammonium salts of n-dodecyl, n-tridecyl, n-tetradecyl, n-pentadecyl, n-hexadecyl, n-heptadecyl and n-octadecyl ether sulfate,
wherein the ether moiety -(A-O)ₙ- in formula (I) is EOₙ or POₚEO_{q}, preferably EOₙ, as described for groups (1) to (3) of embodiments,
wherein the number average of the variable n is preferably in the range of 3 to 8, particularly in the range of 4 to 7, especially n is 6.

In another preferred subgroup (5-b) of (5), the compounds of formulae (I), (I-1) and (I-2) are a mixture of the compounds of the subgroup (5-a).

Prefered examples of the compounds of the subgroup (5-b) are based on mixtures of linear C₁₂-C₁₈-fatty alcohol ethoxylates that are based on linear C₁₂-C₁₈-fatty alcohols, e.g. n-dodecanol, n-tridecanol, n-tetradecanol, n-pentadecanol, n-hexadecanol, n-heptadecanol and n-octadecanol, especially 1-dodecanol, 1-tridecanol, 1-tetradecanol, 1-pentadecanol, 1-hexadecanol, 1-heptadecanol and 1-octadecanol. Particular examples thereof are based on mixtures of linear C₁₂-C₁₈-fatty alcohols, such as n-dodecanol, n-tetradecanol, n-hexadecanol and n-octadecanol, especially 1-dodecanol, 1-tetradecanol, 1-hexadecanol and 1-octadecanol.

Such linear C₁₂-C₁₈-fatty alcohol ethoxylates have frequently 3 to 10 EO, preferably 5 to 9 EO, more preferably 6, 7 or 9 EO.

Mixture of linear C₁₂-C₁₈-fatty alcohol ethoxylates is commercially available for examples as Dehydol LT 6, Dehydol LT 7, Dehydol LT 7/MB, Dehydol 100, Dehydol 100/MB.

Preferably, such mixture of linear saturated C₁₂-C₁₈-fatty alcohol ethoxylates comprises
- at least 40% by weight, more particularlyl at least 45% by weight or up to 100% by weight, based on the total weight alkyl radicals R present in the compounds of the formula (I), of linear alkyl radicals R having 12 to 14 carbon atoms (C₁₂-C₁₄-alkyl);
- 5 to 45% by weight, in particular 10 to 50% by weight of linear alkyl radicals R having 15 to 18 carbon atoms (C₁₅-C₁₈-alkyl);
- 5 to 45% by weight, in particular 10 to 50% by weight of linear alkyl radicals R having 16 or 18 carbon atoms (C₁₆- or C₁₈-alkyl).

Particularly preferably, the mixture of (5-b) comprises
- 48 to 58% by weight, based on the total weight of the mixture, of the compounds of the subgroup (5-a) based on linear saturated C₁₂-fatty alcohol, i. e. compounds of the formula (I) based on 1-dodecanol;
- 18 to 24% by weight, based on the total weight of the mixture, of the compounds of the subgroup (5-a) based on linear saturated C₁₄-fatty alcohol, i. e. compounds of the formula (I) based on 1- tetradecanol;
- 8 to 12% by weight, based on the total weight of the mixture, of the compounds of the subgroup (5-a) based on linear saturated C₁₆-fatty alcohol, i. e. compounds of the formula (I) based on 1- hexadecanol; and
- 11 to 15% by weight, based on the total weight of the mixture, of the compounds of the subgroup (5-a) based on linear saturated C₁₈-fatty alcohol; i. e. compounds of the formula (I) based on 1- octadecanol.

Suitable examples of the compounds of the subgroup (5-b) include, but are not limited to mixtures of sodium, potassium and ammonium salts of linear C₁₂-C₁₈-alkyl ether sulfates, wherein R is as defined for group A of embodiments,
wherein the ether moiety -(A-O)ₙ- in formula (I) is EOₙ or POₚEO_{q}, preferably EOₙ, as described for groups (1) to (3) of embodiments,
wherein the number average of the variable n is frequently in the range of 3 to 9, preferably in the range of 3 to 8, particularly in the range of 4 to 7, especially n is 6.

Preference is given to mixtures of ammonium salts of n-dodecyl, n-tridecyl, n-tetradecyl, n-pentadecyl, n-hexadecyl, n-heptadecyl and n-octadecyl ether sulfate, in particular n-dodecyl, n-tetradecyl, n-hexadecyl and n-octadecyl ether sulfate,
wherein the ether moiety -(A-O)ₙ- in formula (I) is EOₙ or POₚEO_{q}, preferably EOₙ, as described for groups (1) to (3) of embodiments,
wherein the number average of the variable n is frequently in the range of 3 to 9, preferably in the range of 3 to 8, particularly in the range of 4 to 7, especially n is 6.

Particular preference is given to mixtures of hydroxyethylammonium or di(hydroxyethyl)ammonium salts of n-dodecyl, n-tridecyl, n-tetradecyl, n-pentadecyl, n-hexadecyl, n-heptadecyl and n-octadecyl ether sulfate, in particular n-dodecyl, n-tetradecyl, n-hexadecyl and n-octadecyl ether sulfate,
wherein the ether moiety -(A-O)ₙ- in formula (I) is EOₙ or POₚEO_{q}, preferably EOₙ, as described for groups (1) to (3) of embodiments,
wherein the number average of the variable n is frequently in the range of 3 to 9, preferably in the range of 3 to 8, particularly in the range of 4 to 7, especially n is 6.

The inventive compounds of the formula (I) can be prepared by sulfation of a C₂-C₃-alkoxylated C₁₁-C₂₀-alkyl alcohols of the formula (II)

R-O-(A-O)ₙ-H (II)

wherein the variables R, A and n are as defined for formula (I),
in a manner known per se using sulfuric acid or sulfuric acid derivatives, such as chlorosulfonic acid followed by neutralization to give the compounds of the formula (I). The sulfation method can be carried out by analogy to the methods described in WO2005/077893, WO 2019/57769 and the references cited therein. Preferably, the sulfation can be carried out by analogy to the methods described in WO 2019/57769 and references cited therein, more preferably by analogy to the method described in the inventive example 2b) of WO 2019/57769 (see page 24, line 33 to page 25, line 6).

As used herein, the terms "alkoxylated alcohol" and "alcohol alkoxylate" are used synonymously.

The C₂-C₃-alkoxylated C₁₁-C₂₀-alkyl alcohol of the formula (II) can be prepared by alkoxylation of alcohols of the formula (III)

R-OH (III)

wherein the variable R is as defined for formula (I),
in a manner known per se using with ethylene oxide or propylene oxide. The alkoxylation method can be carried out by analogy to the methods described in WO 2019/57769 and the references cited therein. Preferably, the alkoxylation can be carried out by analogy to the method described in the inventive example 2a) of WO 2019/57769 (see page 23, line 32 to page 24, line 12).

As a rule, the alcohol moiety of the alcohol alkoxylates to be used in accordance with the invention is based on alcohols or alcohol mixtures known perse which have 11 to 20, preferably 12 to 18 or in particular 12 to 14 carbon atoms. Fatty alcohols having approximately 12 to 18 carbon atoms must be mentioned in particular.

The alcohol moiety of the alkoxylates to be used is linear or branched. In case of a branched alcohol moiety, the main chain of the alcohol moiety has, as a rule, 1 to 4 branchings, it also being possible to use alcohols with a higher or lower degree of branching in a mixture with other alcohol alkoxylates as long as the mean number of branchings of the mixture is in the above-stated range.

In general, the branchings independently of one another have 1 to 10, preferably 1 to 6, in particular 1 to 3, carbon atoms. Particular branchings are methyl, ethyl, n-propyl or isopropyl groups.

Suitable alcohols and, in particular, fatty alcohols are obtainable both from natural sources, for example by obtaining and, if required or desired, by hydrolyzing, transesterifying and/or hydrogenating glycerides and fatty acids, and by synthetic routes, for example by building up from starting materials having a smaller number of carbonatoms. Thus, for example, the SHOP process (Shell Higher Olefin Process) gives, starting from ethene, olefin fractions having a number of carbon atoms suitable for further processing to produce surfactants. The functionalization of the olefins to form the corresponding alcohols is carried out, for example, by hydroformylation and hydrogenation.

Olefins having a number of carbon atoms suitable for further processing to give suitable alcohols can also be obtained by oligomerization of C-C-alkenes, in particular propene or butene or mixtures of these.

Moreover, lower olefins can be oligomerized by means of heterogeneous, acidic catalysts, e.g. supported phosphoric acid, and subsequently functionalized to give alcohols.

A general possibility of synthesizing to produce branched alcohols is, for example, the reaction of aldehydes or ketones with Grignard reagents (Grignard synthesis). Instead of Grignard reagents, it is also possible to employ aryllithium or alkyllithium compounds, which are distinguished by higher reactivity. Moreover, the branched alcohols can be obtained by aldol condensation, the skilled worker being familiar with the reaction conditions.

In accordance with the preferred groups (A) of embodiments, the alcohol alkoxylates to be used are based on linear C₁₂-C₁₈-alkyl alcohols and mixtures of linear C₁₂-C₁₈-alkyl alcohols, preferably linear saturated C₁₂-C₁₈-alkyl alcohols and mixtures of linear saturated C₁₂-C₁₈-alkyl alcohols.

Suitable linear C₁₂-C₁₈-alkyl alcohols and mixtures thereof can generally be obtained by hydration of naturally based fatty acids.

In accordance with other preferred groups (B) of embodiments, the alcohol alkoxylates to be used are based on branched C₁₂-C₁₄-alkyl alcohols, particularly branched C₁₃-alkyl alcohols, and mixtures thereof. More preferably, they are based on branched saturated C₁₂-C₁₄-alkyl alcohols, particularly branched saturated C₁₃-alkyl alcohols, and mixtures thereof.

As a rule, the term "branched C₁₃-alkyl alcohol" refers to an alcohol mixture whose main component is formed by at least one branched C₁₃-alkyl alcohol, preferably isotridecanol. Such C₁₃-alkyl alcohols include, but are not limited to isotridecanol, e. g. 2-methyldodecan-1-ol, the dimethylundecan-1-ols, the trimethyldecan-1-ols and the tetramethylnonan-1-ols, for example 2,4,6,8-tetramethyl-1-nonanol or 3,4,6,8-tetramethyl-1-nonanol and furthermore ethyldimethylnonan-1-ols such as 5-ethyl-4,7-dimethyl-1-nonanol.

Suitable branched C₁₃-alkyl alcohols and mixtures thereof can generally be obtained by hydrogenation of the hydroformylated trimeric butene, as described in US8877681 B2.

As a rule, branched C₁₂-C₁₄-alkyl alcohols, especially branched C₁₃-alkyl alcohol mixtures have a mean degree of branching of from 1 to 4, preferably from 2.1 to 2.5, in particular from 2.2 to 2.4. The degree of branching is defined as the number of methyl groups in one molecule of the alcohol minus 1. The mean degree of branching is the statistical mean of the degrees of branching of the molecules of a sample. The mean number of methyl groups in the molecules of a sample can be determined readily by ¹H-NMR spectroscopy. For this purpose, the signal area corresponding to the methyl protons in the ¹H-NMR spectrum of a sample is divided by three and then divided by the signal area of the methylene protons if the CH₂-OH group divided by two.

The degree of ethoxylation of the ethoxylated linear C₁₂-C₁₈-alkyl alcohols, branched C₁₂-C₁₄-alkyl alcohols, especially branched C₁₃-alkyl alcohols, and mixtures thereof to be used as a starting material for the production of the compounds of the formula (I), in particular for the formula (I-1), is asdefined for n in the context of the formula (I) in particular in the context of the formula (I-1).

The degrees of alkoxylation of the EO/PO block alkoxylates as a starting material for the production of the compounds of the formula (I), in particular for the formula (I-1), is as defined for n in the context of the formula (I) in particular in the context of the formula (I-1).

As mentioned above, combinations of the compounds of the formula (I), especially the compounds of the groups (4) to (5) and the subgroups thereof, with above-mentioned commercially available adjuvant, e.g. SLES improve the herbicidal effect or provide at least the same herbicidal effect of one or more herbicide compounds, compared to single use of one or more herbicide compounds or use of one or more herbicide compounds in sole presence of the above-mentioned commercially available adjuvant, e.g. SLES.

Thereofore, in a preferred group of embodiments, at least one compound of the formula (I), especially of the groups (4) to (5), in particular of the subgroups of (4-a), (4-b), (5-a), and (5-b) is used in combination with at least one further adjuvant, which is different from the compounds of the formula (I), in particular at least one of commercially available adjuvants X, which is different from the compounds of the formula (I).

Preferably, X is selected from the group consisting of sodium, potassium and ammonium salts of C₁₂-alkyl ether sulfates, wherein the ether unit thereof is generally 1 or 2 EO units.

Especially, X is sodium lauryl ether sulfate.

In said combination, the weight ratio of the compounds of the formula (I) to the further adjuvant, which is different from the compounds of the formula (I), in particular the adjuvant X is preferably in the range of 1:50 to 50:1, preferably in the range of 1:30 to 30:1, in particular in the range of 1:10 to 10:1, especially 1:1.

Particular preference is given to combinations comprising
- 99 to 20% by weight, in particular 95 to 50% by weight, based on the total weight of the compound of the formula (I) and the further adjuvant, which is different from the compounds of the formula (I), in particular the adjuvant X, of at least one compound of the formula (I), especially of the groups (4) to (5), in particular of the subgroups of (4-a), (4-b), (5-a), and (5-b); and
- 1 to 80% by weight, in particular 5 to 50% by weight, based on the total weight of the compound of the formula (I) and the further adjuvant, which is different from the compounds of the formula (I), in particular adjuvant X, of at least one further adjuvant, which is different from the compounds of the formula (I), in particular the adjuvant X.

Especially, the compound of the formula (I) and the further adjuvant, which is different from the compounds of the formula (I), in particular the adjuvant X are used in such an amount that the further adjuvant, which is different from the compounds of the formula (I), in particular adjuvant X is used in an amount of 1 to 45% by weight, preferably 1 to 30% by weight, especially 1 to 15% by weight, based on the total weight of the herbicide formulation.

Preferably, the compound of the formula (I) and the further adjuvant, which is different from the compounds of the formula (I), in particular adjuvant X are used in such an amount that the weight ratio of the combination of the compound of the formula (I) and the further adjuvant, which is different from the compounds of the formula (I), in particular the adjuvant X to the herbicide compound is in the range of 1:10 to 10:1, in particular in the range of 1:5 to 5:1, especially in the range of 1:3 to 3:1.

Preferably, the compound of the formula (I) is used in such an amount that the weight ratio of the compound of the formula (I) to the herbicide compound is in the range of 1:10 to 10:1, in particular in the range of 1:5 to 7:1, especially in the range of 1:1 to 6:1.

As described above, the alkyl ether sulfate salt of the formula (I) improves the herbicidal effect of one or more herbicide compounds compared to the single use of one or more herbicide compounds.

In particular, the alkyl ether sulfate salt of the formula (I) is capable of increasing the herbicidal effect of herbicide compounds of the groups (a) to (o):
(a) herbicide compounds of the group of the glutamine synthetase inhibitors;
(b) herbicide compounds of the group of the enolpyruvyl shikimate 3-phosphate synthase inhibitors (EPSP inhibitors);
(c) herbicide compounds of the group of acetolactate synthase inhibitors (ALS inhibitors),
(d) herbicide compounds of the group of protoporphyrinogen-IX oxidase inhibitors;
(e) herbicide compounds of the group of auxinic herbicides and auxin transport inhibitors;
(f) herbicide compounds of the group of photosynthesis inhibitors;
(g) herbicide compounds of the group of lipid biosynthesis inhibitors (acetyl-CoA carboxylase inhibitors, ACCase inhibitors)
(h) lipid biosynthesis inhibitors other than ACCase-inhibitors;
(i) bleacher herbicides;
(j) 7,8-dihydropteroate synthase inhibitors (DHP inhibitors);
(k) mitosis inhibitors;
(l) inhibitors of the synthesis of very long chain fatty acids (VLCFA inhibitors);
(m) cellulose biosynthesis inhibitors;
(n) decoupler herbicides;
(o) other herbicides selected from the group consisting of bromobutide, chlorflurenol, chlorflurenol-methyl, cinmethylin, cumyluron, cyclopyrimorate and its salts and esters, dazomet, difenzoquat, difenzoquat-metilsulfate, dimethipin, DSMA, dymron, endothal and its salts, etobenzanid, flamprop, flamprop-isopropyl, flamprop-methyl, flamprop-M-isopropyl, flamprop-M-methyl, flurenol, flurenol-butyl, flurprimidol, fosamine, fosamine-ammonium, indanofan, maleic hydrazide, mefluidide, metam, methiozolin, methyl azide, methyl bromide, methyl-dymron, methyl iodide, MSMA, oleic acid, oxaziclomefone, pelargonic acid, pyributicarb, quinoclamine, tetflupyrolimet, tridiphane and 6 chloro-3-(2-cyclopropyl-6-methylphenoxy)-4-pyridazinol (CAS 499223-49-3) and its salts and esters, and 6-chloro-4-(2,7-dimethyl-1-naphthyl)-5-hydroxy-2-methyl-pyridazin-3-one (CAS 2414510-21-5) (HST-inhibitor; FMC).

Therefore, the herbicide compound is selected from at least one herbicide compound of the groups (a) to (o), as defined above.

Particularly preferably, the herbicide compound comprises a herbicide compound of the group (a), which is in particular selected from the group consisting of glufosinate, glufosinate salts and combinations thereof.

Examples of herbicide compounds of the group (a) include but are not limited to bilanaphos (bialaphos), bilanaphos-sodium, glufosinate, glufosinate-P and glufosinate salts, e.g. glufosinate-ammonium.

Glufosinate (CAS Reg. No. 51276-47-2), with IUPAC-Name (2RS)-2-amino-4-[hydroxy(methyl)phosphinoyl]butyric acid, or 4-[hydroxy(methyl)phosphinoyl]-DL-homoalanine) or DL-4-[hydroxyl(methyl)phosphinoyl]-DL-homoalaninate, is known, as well as agronomically acceptable salts thereof, in particular glufosinate-ammonium (IUPAC-Name: ammonium (2RS)-2-amino-4-(methylphosphinato)butyric acid, CAS Reg. No. 77182-82-2). US 4,168,963 describes phosphorus-containing compounds with herbicidal activity, of which, in particular, phosphinothricin (2-amino-4-[hydroxy(methyl)phosphinoyl]butanoic acid; common name: glufosinate) and its salts have acquired commercial importance in the agrochemistry (agricultural chemistry) sector.

For example, glufosinate and its salts, such as glufosinate ammonium, and its herbicidal activity have been described e.g. by F. Schwerdtle et al. Z. Pflanzenkr. Pflanzenschutz, 1981, Sonderheft IX, pp. 431-440.

Formulations of glufosinate as its racemate and its salts are commercially available, e.g. under the trade-names BastaTM and LibertyTM.

Glufosinate is represented by the following structure (IV): 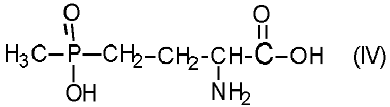 The compound of formula (IV) is a racemate.

Glufosinate is a racemate of two enantiomers, out of which only one shows sufficient herbicidal activity (see e.g. US 4265654 and JP92448/83). Even though various methods to prepare L-glufosinate (and respective salts) are known, the mixtures known in the art do not point at the stereochemistry, meaning that the racemate is present (e.g. WO 2003024221, WO2011104213, WO 2016113334, WO 2009141367).

The term "glufosinate" as used in the present invention typically comprises, in one embodiment of the invention, about 50% by weight of the L-enantiomer and about 50% by weight of the D-enantiomer; and in another embodiment of the invention, more than 70% by weight of the L-enantiomer; preferably more than 80% by weight of the L-enantiomer; more preferably more than 90% of the L-enantiomer, most preferably more than 95% of the L-enantiomer. The L-enantiomer of glufosinate is also referred to as glufosinate-P.

Glufosinate in the form of its racemate, and its salts as well as formulations thereof, are commercially available, e.g. under the trade-names BastaTM and LibertyTM.

In one embodiment, the herbicide compound is selected from racemic glufosinate mixtures as described above, wherein the glufosinate comprises about 50% by weight of the L-enantiomer and about 50% by weight of the D-enantiomer.

In another embodiment, the herbicide compound is glufosinate, wherein at least 70% by weight of the glufosinate is L-glufosinate or a salt thereof.

L-glufosinate, with IUPAC-Name (2S)-2-amino-4-[hydroxy(methyl)phosphinoyl]butyric acid (CAS Reg. No. 35597-44-5) and also called glufosinate-P, can be obtained commercially or may be pre-pared for example as described in WO2006/104120, US5530142, EP0248357A2, EP0249188A2, EP0344683A2, EP0367145A2, EP0477902A2, EP0127429 and J. Chem. Soc. Perkin Trans. 1, 1992, 1525-1529.

Preferably, the salts of glufosinate or (L)-glufosinate are the sodium, potassium or ammonium (NH₄⁺) salts of glufosinate or L-glufosinate, in particular glufosinate-P-ammonium (IUPAC-Name: ammonium (2S)-2-amino-4-(methylphosphinato)butyric acid, CAS Reg. No. 73777-50-1), glufosinate-P-sodium (IUPAC-Name: sodium (2S)-2-amino-4-(methylphosphinato)butyric acid; CAS Reg. No. 70033-13-5) and glufosinate-P-potassium (IUPAC-Name: potassium (2S)-2-amino-4-(methylphosphinato)butyric acid) for L-glufosinate.

In a particular group of embodiments, the herbicide compound comprises a glufosinate salt, which is selected from the group consisting of the sodium, potassium or ammonium (NH₄⁺) salts of glufosinate.

Hence, the herbicide compound preferably comprises or is (L)-glufosinate-ammonium or (L)-glufosinate-sodium or (L)-glufosinate-potassium and (L)-glufosinate as free acid. Especially preferred is (L)-glufosinate-ammonium, i.e. the ammonium (NH₄⁺) salt of glufosinate.

In a particular group of embodiments, the herbicide compound of the group (a) is a L-glufosinate salt, which is in particular selected from the group consisting of the sodium, potassium and ammonium (NH₄⁺) salts of L-glufosinate. Even more preferably, the herbicide compound of the group (a) is a L-glufosinate salt, which is selected from the group consisting of glufosinate-P-ammonium, glufosinate-P-sodium and glufosinate-P-potassium.

Especially, the herbicide compound is an ammonium salt of L-glufosinate.

The herbicide compound of group (a), in particular the aforementioned glufosinate or a salt thereof as described herein may be sole herbicide compound which is used in combination with the compound of formula (I).

However, the compound of the formula (I) may also be used with a combination of at least two herbicide compounds. In this case, the herbicide compound which is used in combination with compound of the formula (I) comprises in particular a herbicide compound of group (a), in particular the aforementioned glufosinate or a salt thereof as described herein, and at least one further herbicide compound which is selected from groups (b) to (o):
(b) herbicide compounds of the group of the enolpyruvyl shikimate 3-phosphate synthase inhibitors (EPSP inhibitors);
(c) herbicide compounds of the group of acetolactate synthase inhibitors (ALS inhibitors),
(d) herbicide compounds of the group of protoporphyrinogen-IX oxidase inhibitors;
(e) herbicide compounds of the group of auxinic herbicides and auxin transport inhibitors;
(f) herbicide compounds of the group of photosynthesis inhibitors;
(g) herbicide compounds of the group of lipid biosynthesis inhibitors (acetyl-CoA carboxylase inhibitors, ACCase inhibitors)
(h) lipid biosynthesis inhibitors other than ACCase-inhibitors;
(i) bleacher herbicides;
(j) 7,8-dihydropteroate synthase inhibitors (DHP inhibitors);
(k) mitosis inhibitors;
(l) inhibitors of the synthesis of very long chain fatty acids (VLCFA inhibitors);
(m) cellulose biosynthesis inhibitors;
(n) decoupler herbicides;
(o) other herbicides selected from the group consisting of bromobutide, chlorflurenol, chlorflurenol-methyl, cinmethylin, cumyluron, cyclopyrimorate and its salts and esters, dazomet, difenzoquat, difenzoquat-metilsulfate, dimethipin, DSMA, dymron, endothal and its salts, etobenzanid, flamprop, flamprop-isopropyl, flamprop-methyl, flamprop-M-isopropyl, flamprop-M-methyl, flurenol, flurenol-butyl, flurprimidol, fosamine, fosamine-ammonium, indanofan, maleic hydrazide, mefluidide, metam, methiozolin, methyl azide, methyl bromide, methyl-dymron, methyl iodide, MSMA, oleic acid, oxaziclomefone, pelargonic acid, pyributicarb, quinoclamine, tetflupyrolimet, tridiphane and 6 chloro-3-(2-cyclopropyl-6-methylphenoxy)-4-pyridazinol (CAS 499223-49-3) and its salts and esters, and 6-chloro-4-(2,7-dimethyl-1-naphthyl)-5-hydroxy-2-methyl-pyridazin-3-one (CAS 2414510-21-5) (HST-inhibitor; FMC).

Suitable examples of herbicide compounds of the group (b) of the enolpyruvyl shikimate 3-phosphate synthase inhibitors (EPSP inhibitors) include, but are not limited to glyphosate, glyphosate-isopropylammonium salt, glyphosate-trimesium salt, glyphosate-ammonium salt, glyphosate-diammonium salt, glyphosate-dimethylammonium salt, glyphosate-monoethanolamine salt, glyphosate-sodium salt, glyphosate-potassium salt, glyphosate-guanidine salt, agricultural salts and derivatives thereof.

Suitable salts of glyphosate are, for example, but not limited to glyphosate-ammonium, glyphosate-diammonium, glyphosate-dimethylammonium, glyphosate-isopropylammonium, glyphosate-potassium, glyphosate-sodium, glyphosate-trimesium as well as the ethanolamine and diethanolamine salts, preferably glyphosate-diammonium, glyphosate-isopropylammonium and glyphosate-trimesium (sulfosate).

Acetolactate synthase inhibitors (ALS inhibitors) of the group (c) of herbicicde compounds, also termed AHAS inhibitors or inhibitors of acetohydroxy acid synthase, are compounds, which have a mode of action comprising the inhibition of a step of the branched chain amino acids biosynthesis in plants and which belong to the group B of the HRAC classification system (see HRAC, Classification of Herbicides According to Mode of Action, ).

Suitable examples of herbicide compounds of the group (c) of ALS inhibitors are include but are not limited to:
- imidazolinone herbicides such as imazapic, imazamethabenz, imazamethabenz-methyl, imazamox, imazapyr, imazaquin, and imazethapyr and the salts thereof;
- sulfonylurea herbicides such as amidosulfuron, azimsulfuron, bensulfuron, bensulfuron-methyl, chlorimuron, chlorimuron-ethyl, chlorsulfuron, cinosulfuron, cyclosulfamuron, ethametsulfuron, ethametsulfuron-methyl, ethoxysulfuron, flazasulfuron, flucetosulfuron, flupyrsulfuron, flupyrsulfuron-methyl-sodium, foramsulfuron, halosulfuron, halosulfuron-methyl, imazosulfuron, iodosulfuron, iodosulfuron-methyl-sodium, iofensulfuron, iofensulfuron-sodium, mesosulfuron, mesosulfuron-methyl, metazosulfuron, metsulfuron, metsulfuron-methyl, nicosulfuron, orthosulfamuron, oxasulfuron, primisulfuron, primisulfuron-methyl, propyrisulfuron, prosulfuron, pyrazosulfuron, pyrazosulfuron-ethyl, rimsulfuron, sulfometuron, sulfometuron-methyl, sulfosulfuron, thifensulfuron, thifensulfuron-methyl, triasulfuron, tribenuron, tribenuron-methyl, triflusulfuron, triflusulfuron-methyl, trifloxysulfuron, trifloxysulfuron-sodium salt, triflusulforon and tritosulfuron and the salts, and esters thereof;

- triazolopyrimidine herbicides and sulfonanilides such as cloransulam, cloransulam-methyl, diclosulam, florasulam, flumetsulam, metosulam, penoxsulam, pyrimisulfan and pyroxsulam, and the salts and esters thereof;
- pyrimidinyl(thio) benzoate herbicides such as bispyribac, pyribenzoxim, pyriftalid, pyrimisulfan, pyrithiobac, pyriminobac, the salts and esters thereof such as bispyribac-sodium, pyrithiobac-sodium and pyriminobac-methyl, as well as 4-[[[2-[(4,6-dimethoxy-2-pyrimidinyl)oxy]phenyl]methyl]amino]-benzoic acid-1-methylethyl ester (CAS 420138-41-6), 4-[[[2-[(4,6-dimethoxy-2-pyrimidinyl)oxy]phenyl]methyl]amino]-benzoic acid propyl ester (CAS 420138-40-5) and N-(4-bromophenyl)-2-[(4,6-dimethoxy-2-pyrimidinyl)oxy]benzenemethanamine (CAS 420138-01-8); and
- sulfonylamino-carbonyl-triazolinone herbicides such as flucarbazone, propoxycarbazone, thiencarbazone and triafamone, and the salts and esters thereof such as flucarbazone-sodium, propoxycarbazone-sodium and thiencarbazone-methyl.

Particularly, the herbicide of group (c) is selected from the group consisting of imidazolinone herbicides and salts thereof, in particular from the group consisting of imazapic, imazamox, imazapyr, imazaquin, imazethapyr, a combination thereof, salts thereof and combination of salts thereof.

Suitable salts of the imidazolinone herbicides are imazapic salts, imazamox salts, imazapyr salts, imazaquin salts, imazethapyr salts. A suitable salt of imazamox is for example imazamox-ammonium. Suitable salts of imazapic are for example imazapic-ammonium and imazapic-isopropylammonium. Suitable salts of imazapyr are for example imazapyr-ammonium and imazapyr-isopropylammonium. A suitable salt of imazaquin is for example imazaquin-ammonium. Suitable salts of imazethapyr are for example imazethapyr-ammonium and imazethapyr-isopropylammonium.

Inhibitors of protoporphyrinogen-IX-oxidase (PPO inhibitor) of the group (d) of herbicicde compounds are compounds, which have a mode of action comprising the inhibition of a step of the chlorophyll biosynthesis in plants and which belong to the group E of the HRAC classification system (see HRAC, Classification of Herbicides According to Mode of Action, http://www.plantprotection.org/hrac/MOA.html).

Suitable examples of herbicide compounds of the group (d) of PPO inhibitors include but are not limited to:
- pyrimidinedione herbicides e.g. benzfendizone, butafenacil, saflufenacil, tiafenacil, ethyl [3-[2-chloro-4-fluoro-5-(1-methyl-6-trifluoromethyl-2,4-dioxo-1,2,3,4-tetrahydropyrimidin-3-yl)phenoxy]-2-pyridyloxy]acetate (CAS 353292-31-6), 1-methyl-6-trifluoro¬methyl-3-(2,2,7-tri¬fluoro-3-oxo-4-prop-2-ynyl-3,4-dihydro-2H-benzo[1,4]oxazin-6-yl)-1H-pyrimidine-2,4-dione and 3-[7-chloro-5-fluoro-2-(trifluoromethyl)-1H-benzimidazol-4-yl]-1-methyl-6-(trifluoromethyl)-1H-pyrimidine-2,4-dione (CAS 212754-02-4) and their salts, in particular the lithium salts, sodium salts, potassium salts, ammonium salts or substituted ammonium salts as defined above, in particular mono-, di- and tri-C1-C8-alkylammonium salts such as methylammonium, dimethylammonium and isopropylammonium;
- triazolinone herbicides e.g. azafenidin, bencarbazone, carfentrazone, carfentrazone-ethyl, ipfencarbazone and sulfentrazone and their salts, in particular the sodium salts, potassium salts, ammonium salts or substituted ammonium salts as defined above, in particular mono-, di- and tri-C₁-C₈-alkylammonium salts such as methylammonium, dimethylammonium and isopropylammonium, and their esters, in particular the C₁-C₈-alkyl esters, such as methyl ester, ethyl ester or isopropyl ester;
- diphenyl ether herbicides e.g. ethoxyfen, acifluorfen, acifluorfen-sodium salt, aclonifen, chlormethoxynil, bifenox, chlomethoxyfen, chlornitrofen, etnipromid, fluorodifen, fluoroglycofen, fluoroglycofen-ethyl, fluoronitrofen, fomesafen, fomesafen-sodium salt, fucaomi, furyloxyfen, halosafen, lactofen, nitrofen, nitrofluorfen and oxyfluorfen and their salts, in particular the sodium salts, potassium salts, ammonium salts or substituted ammonium salts as defined above, in particular mono-, di- and tri-C₁-C₈-alkylammonium salts such as methylammonium, dimethylammonium and isopropylammosdnium, and their esters, in particular the C₁-C₈-alkyl esters, such as methyl ester, ethyl ester or isopropyl ester;
- N-phenyl (phthal)imide herbicides e.g. fluthiacet, fluthiacet-methyl,cinidon, cinidon-ethyl, flumioxazin, pentoxazone, flumiclorac, flumiclorac-pentyl, flumipropyn and 2-(2,2,7-trifluoro-3-oxo-4-prop-2-ynyl-3,4-dihydro-2H-benzo[1,4]oxazin-6-yl)-4,5,6,7-tetrahydro-isoindole-1,3-dione (CAS 1300118-96-0). Also included are the salts of cinidon and flumiclorac, in particular their sodium salts, potassium salts, ammonium salts or substituted ammonium salts as defined above, in particular mono-, di and tri-C₁-C₈-alkylammonium salts such as isopropylammonium salts, and the esters of cinidon and flumiclorac, in particular their C₁-C₈-alkyl esters, such as methylesters, ethylesters, isopropyl esters;
- N-Phenyl-oxadiazolone herbicides e.g. oxadiazon, oxadiargyl;
- phenylpyrazole herbicides e.g. pyraflufen, pyraflufen-ethyl, fluazolate;
- pyridazinone herbicides e.g. flufenpyr, flufenpyr-ethyl; and
- other herbicides e.g. pyraclonil, chlorphthalim, cyclopyranil, profluazol, thidiazimin, trifludimoxazin, epyrifenacil, N-ethyl-3-(2,6-dichloro-4-trifluoro¬methylphenoxy)-5-methyl-1H-pyrazole-1-carboxamide (CAS 452098-92-9), N tetrahydrofurfuryl-3-(2,6-dichloro-4-trifluoromethylphenoxy)-5-methyl-1H-pyrazole-1-carboxamide (CAS 915396-43-9), N-ethyl-3-(2-chloro-6-fluoro-4-trifluoromethyhphenoxy)-5-methyl-1H-pyrazole-1-carboxamide (CAS 452099-05-7), N tetrahydro¬furfuryl-3-(2-chloro-6-fluoro-4-trifluoro¬methylphenoxy)-5-methyl-1H-pyrazole-1-carboxamide (CAS 452100-03-7), 3-[7-fluoro-3-oxo-4-(prop-2-ynyl)-3,4-dihydro-2H-benzo[1,4]oxazin-6-yl]-1,5-dimethyl-6-thioxo-[1,3,5]triazinan-2,4-dione (CAS 451484-50-7), 1-methyl-6-trifluoro¬methyl-3-(2,2,7-tri¬fluoro-3-oxo-4-prop-2-ynyl-3,4-dihydro-2H-benzo[1,4]oxazin-6-yl)-1H-pyrimidine-2,4-dione (CAS 1304113-05-0), methyl (E)-4-[2-chloro-5-[4-chloro-5-(difluoromethoxy)-1H-methyl-pyrazol-3-yl]-4-fluoro-phenoxy]-3-methoxy-but-2-enoate (CAS 948893-00-3), and 3-[7-chloro-5-fluoro-2-(trifluoromethyl)-1H-benzimidazol-4-yl]-1-methyl-6-(trifluoromethyl)-1H-pyrimidine-2,4-dione (CAS 212754-02-4), 2-[2-chloro-5-[3-chloro-5-(trifluoromethyl)-2-pyridinyl]-4-fluorophenoxy]-2-methoxy-acetic acid methyl ester (CAS 1970221-16-9), 2-[2-[[3-chloro-6-[3,6-dihydro-3-methyl-2,6-dioxo-4-(trifluoromethyl)-1(2H)-pyrimidinyl]-5-fluoro-2-pyridinyl]oxy]phenoxy]-acetic acid methyl ester (CAS 2158274-96-3), 2-[2-[[3-chloro-6-[3,6-dihydro-3-methyl-2,6-dioxo-4-(trifluoromethyl)-1(2H)-pyrimidinyl]-5-fluoro-2-pyridinyl]oxy]phenoxy] acetic acid ethyl ester (CAS 2158274-50-9), methyl 2-[[3-[2-chloro-5-[4-(difluoromethyl)-3-methyl-5-oxo-1,2,4-triazol-1-yl]-4-fluoro-phenoxy]-2-pyridyl]oxy]acetate (CAS 2271389-22-9), ethyl 2-[[3-[2-chloro-5-[4-(difluoromethyl)-3-methyl-5-oxo-1,2,4-triazol-1-yl]-4-fluoro-phenoxy]-2-pyridyl]oxy]acetate (CAS 2230679-62-4), 2-[[3-[[3-chloro-6-[3,6-dihydro-3-methyl-2,6-dioxo-4-(trifluoromethyl)-1(2H)-pyrimidinyl]-5-fluoro-2-pyridinyl]oxy]-2-pyridinyl]oxy]-acetic acid methyl ester (CAS 2158275-73-9), 2-[[3-[[3-chloro-6-[3,6-dihydro-3-methyl-2,6-dioxo-4-(trifluoromethyl)-1(2H)-pyrimidinyl]-5-fluoro-2-pyridinyl]oxy]-2-pyridinyl]oxy] acetic acid ethyl ester (CAS 2158274-56-5), 2-[2-[[3-chloro-6-[3,6-dihydro-3-methyl-2,6-dioxo-4-(trifluoromethyl)-1(2H)-pyrimidinyl]-5-fluoro-2-pyridinyl]oxy]phenoxy]-N-(methylsulfonyl)-acetamide (CAS 2158274-53-2), 2-[[3-[[3-chloro-6-[3,6-dihydro-3-methyl-2,6-dioxo-4-(trifluoromethyl)-1(2H)-pyrimidinyl]-5-fluoro-2-pyridinyl]oxy]-2-pyridinyl]oxy]-N-(methylsulfonyl)-acetamide (CAS 2158276-22-1), 3-[2-chloro-5-[3,6-dihydro-3-methyl-2,6-dioxo-4-(trifluoromethyl)-1(2H)-pyrimidinyl]-4-fluorophenyl]-4,5-dihydro-5-methyl-5-isoxazolecarboxylic acid ethyl ester (CAS 1949837-17-5).

Auxinic herbicides and auxin transport inhibitors of the group (e) of herbicicde compounds, also termed synthetic auxins, are compounds which act like the phytohormones auxins such as indole-3-acetic acid. Synthetic auxins belong to the group O of the HRAC classification system (see HRAC, Classification of Herbicides According to Mode of Action, http://www.plantprotection.org/hrac/MOA.html).

Suitable examples of herbicide compounds of the group (e) of auxinic herbicides and auxin transport inhibitors include e.g.
- benzoic acid herbicides such as dicamba, tricamba, chloramben and 2,3,6-TBA (2,3,6-trichlorobenzoic acid), and the salts and esters thereof, e. g. dicamba diethalonamine salt, dicamba ethanolamine salt, dicamba N,N-bis-(3-aminopropyl)methylamine salt (dicamba BAPMA salt) and dicamba potassium salt;
- quinolinecarboxylic acid herbicides such as quinclorac and quinmerac, and their salts and esters, such as quinclorac-dimethylammonium;
- pyridine carboxylic acid herbicides such as aminopyralid and its salts (potassium salt, tris(2-hydroxypropyl)ammonium salt, and choline salt), clopyralid and its salts (olamine salt, potassium salt, triethylammonium salt, and choline salt), halauxifen, halauxifen-methyl, florpyrauxifen, florpyrauxifen-benzyl, (CAS 1390661-72-9), picloram and its salts (potassium salt, tris(2-hydroxypropyl)ammonium salt, and choline salt), aminocyclopyrachlor and its salts and esters, triclopyr and its salts or esters (butotyl ester, and triethylammonium salt), and fluroxypyr, and their salts and their esters, such as aminopyralid-dimethylammonium, aminopyralid-tris(2-hydroxypropyl)-ammonium, fluroxypyr-butometyl and fluroxypyr-meptyl; and
- phenoxy carboxylic acid herbicides such as clomeprop, phenoxy acetic acid herbicides such as 2,4-D, 3,4-DA, MCPA and its salts or esters, such as dimethylammonium salt, 2-ethylhexyl ester, isooctyl ester, sodium salt, and choline salt, MCPA-thioethyl, 2,4,5-T, phenoxypropionic acid herbicides such as 2,4-DP (dichlorprop) and its salt or ester (butotyl ester, dimethylammonium salt, 2-ethylhexyl ester, isooctyl ester, methyl ester, potassium salt, sodium salt, and choline salt), 2,4-DP-P, 2,4-DP-P dimethylammonium, 4-CPP, 3,4-DP, fenoprop, CMPP (mecoprop) and its salts or esters (dimethylammonium salt, dioramine salt, ethadyl ester, 2-ethylhexyl ester, isooctyl ester, methyl ester, potassium salt, sodium salt, trolamine salt, and choline salt), CMPP-P (mecoprop-P) and its salts or esters (dimethylammonium salt, 2-ethylhexyl ester, isobutyl salt, potassium salt, and choline salt), and phenoxybutyric acid herbicides such as 4-CPB, 2,4-DB and its salts or esters such as dimethylammonium salt, isooctyl ester, and choline salt, 3,4-DB, 2,4,5-TB, MCPB, and their salts and their esters
- other herbicides e.g. benazolin, benazolin-ethyl, 4-amino-3-chloro-5-fluoro-6-(7-fluoro-1H-indol-6-yl)picolinic acid (CAS 1629965-65-6), diflufenzopyr, diflufenzopyr-sodium, naptalam and naptalam-sodium.

Herbicides of group (f) of herbicide compounds are inhibitors of electron transfer in photosynthesis in plants have a mode of action comprising the inhibition of the electron transfer in photosystem II of the photosynthesis in plants. They are also termed PS II inhibitors). They belong to the groups C1 to C3 of the HRAC classification system (see HRAC, Classification of Herbicides According to Mode of Action, http://www.plantprotection.org/hrac/MOA.html).

Photosynthesis inhibitors (PS II inhibitors) are known e.g. from K.-W. Münks and K.-H. Müller "Photosynthesis Inhibitors" in "Modern Crop Protection Compounds" Vol. 1, Wiley-VHC 2007, pp 359-400; C.D.S. Tomlin, "The Pesticide Manual", 13th Edition, BCPC (2003) and also from The Compendium of Pesticide Common Names, http://www.alanwood.net/pesticides/.

The term photosynthesis inhibitors (PS II inhibitor) is meant herein to also include the respective salts, isomers and esters of the above mentioned compounds. Suitable salts are e.g. salts of alkaline or earth alkaline metals or ammonium or organoammonium salts, for instance, sodium, pottasium, ammonium, isopropyl ammonium etc. Suitable isomers are e.g. stereo isomers such as the enantiomers. Suitable esters are e.g. C₁-C₈-(branched or non-branched) alkyl esters, such as methyl esters, ethyl esters and isopropyl esters.

Suitable examples of herbicide compounds of the group (f) of photosynthesis inhibitorsinclude e.g.:
- arylurea herbicides, e.g. chlorbromuron, chlorotoluron, chloroxuron, dimefuron, diuron, ethidimuron, fenuron, fluometuron, isoproturon, isouron, linuron, benzthiazuron, methabenzthiazuron, metobenzuron, metobromuron, metoxuron, monolinuron, neburon, siduron, tetrafluron, tebuthiuron, thiadiazuron and their salts and esters;
- triazin(di)one herbicides, e.g. ametridione, amibuzin, ethiozin, hexazinone, isomethiozin, metamitron, metribuzin and their salts and esters;
- triazine herbicides, e.g. chlorotriazine, triazinones, triazindiones, methylthiotriazines, chloridazone, terbuthylazin, trietazin, ametryn, atrazine, aziprotryne, chlorazine, cyanatryn, cyanazine, cyprazine, desmetryn, dimethametryn, eglinazine, ipazine, mesoprazine, methoprotryne, prometryn, procyazine, proglinazine, prometon, propazine, sebuthylazine, simazine, simetryn, terbumeton, terbuthylazine, terbutryn, trietazine and their salts and esters, such as eglinazine-ethyl and proglinazine-ethyl;
- pyridazinone herbicides, e.g. brompyrazon, chloridazon, dimidazon, metflurazon, norflurazon, oxapyrazon, pydanon and their salts and esters. A preferred pyridazinone herbicide is chloridazon;
- phenylcarbamate herbicides e.g. desmedipham, karbutilate, phenisopham, phenmedipham and their salts and esters, such as phenmedipham-ethyl;
- nitrile herbicides, e.g. bromobonil, bromofenoxim, bromoxynil, bromoxynil-octanoate, chloroxynil, dichlobenil, iodobonil, ioxynil, ioxynil-octanoate and their salts and esters, in particular in case of bromoxynil, chloroxynil and ioxynil. A preferred nitrile herbicide is bromoxynil;
- benzothiadiazinone herbicides, e.g. bentazone and its salts, in particular its alkalimetal salts, such as bentazone-sodium;
- uracil herbicides, e.g. bromacil, flupropacil, isocil, lenacil, terbacil and the salts of bromacil, in particular its alkalimetal salts, such as bromacil-lithium and bromacil-sodium;
- phenyl-pyridazine herbicides e.g. pyridate; and
- amide herbicide e.g. amicarbazone, propanil,
- other herbicides e.g. 1-(6-tert-butylpyrimidin-4-yl)-2-hydroxy-4-methoxy-3-methyl-2H-pyrrol-5-one (CAS 1654744-66-7), 1-(5-tert-butylisoxazol-3-yl)-2-hydroxy-4-methoxy-3-methyl-2H-pyrrol-5-one (CAS 1637455-12-9), 1-(5-tert-butylisoxazol-3-yl)-4-chloro-2-hydroxy-3-methyl-2H-pyrrol-5-one (CAS 1637453-94-1), 1-(5-tert-butyl-1-methyl-pyrazol-3-yl)-4-chloro-2-hydroxy-3-methyl-2H-pyrrol-5-one (CAS 1654057-29-0), 1-(5-tert-butyl-1-methyl-pyrazol-3-yl)-3-chloro-2-hydroxy-4-methyl-2H-pyrrol-5-one (CAS 1654747-80-4), 4-hydroxy-1-methoxy-5-methyl-3-[4-(trifluoromethyl)-2-pyridyl]imidazolidin-2-one; (CAS 2023785-78-4), 4-hydroxy-1,5-dimethyl-3-[4-(trifluoromethyl)-2-pyridyl]imidazolidin-2-one (CAS 2023785-79-5), 5-ethoxy-4-hydroxy-1-methyl-3-[4-(trifluoromethyl)-2-pyridyl]imidazolidin-2-one (CAS 1701416-69-4), 4-hydroxy-1-methyl-3-[4-(trifluoromethyl)-2-pyridyl]imidazolidin-2-one (CAS 1708087-22-2), 4-hydroxy-1,5-dimethyl-3-[1-methyl-5-(trifluoromethyl)pyrazol-3-yl]imidazolidin-2-one (CAS 2023785-80-8), 1-(5-tert-butylisoxazol-3-yl)-4-ethoxy-5-hydroxy-3-methyl-imidazolidin-2-one (CAS 1844836-64-1), pyridafol, pentanochlor, diquat, diquat-dibromide, paraquat, paraquat-dichloride and paraquat-dimetilsulfate.

Among these, a preference is given to aryl urea herbicides.

Herbicides of group (g) of herbicide compounds are inhibitors of the lipid biosynthesis (acetyl-CoA carboxylase inhibitors, ACCase inhibitors). They are compounds which have a mode of action comprising the inhibition of the lipid biosynthesis in plants and which belong to the group A of the HRAC classification system (see HRAC, Classification of Herbicides According to Mode of Action, http://www.plantprotection.org/hrac/MOA.html).

Suitable ACCase inhibitors are known from e.g. C.D.S. Tomlin, "The Pesticide Manual", 13th Edition, BCPC (2003) and also from The Compendium of Pesticide Common Names http://www.alanwood.net/pesticides/.

The term "ACCase inhibitor" is meant herein to also include the respective salts, isomers and esters of the above mentioned compounds. Suitable salts are e.g. salts of alkaline or earth alkaline metals or ammonium or organoammonium salts, for instance, sodium, pottasium, ammonium, isopropyl ammonium etc. Suitable isomers are e.g. stereo isomers such as the enantiomers. Suitable esters are e.g. propargyl esters, tefuryl (tetrahydrofurfuryl) esters, etotyl (ethoxyethyl) esters, C₁-C₈-(branched or non-branched) alkyl esters, such as methyl esters, ethyl esters, isopropyl esters, butyl esters and isobutyl esters.

Suitable ACCase inhibitors of group (g) of herbicide compounds include e.g.
- aryloxyphenoxy-propionate herbicides such as chlorazifop, clodinafop, clofop, cyhalofop, diclofop, fenoxaprop, fenthiaprop, fluazifop, haloxyfop, isoxapyrifop, kuicaoxi, metamifop, propaquizafop, quizalofop, trifop and their enantiomers, salts and esters, such as fenoxaprop-P, fluazifop-P, haloxyfop-P, quizalofop-P, haloxyfop-sodium, chlorazifop-propargyl, clodinafop-propargyl, clofop-isobutyl, cyhalofop-butyl, diclofop-methyl, fenoxaprop-ethyl, fenoxaprop-P-ethyl, fenthiaprop-ethyl, fluazifop-methyl, fluazifop-butyl, fluazifop-P-butyl, haloxyfop-etotyl, haloxyfop-methyl, haloxyfop-P-etotyl, haloxyfop-P-methyl, quizalofop-ethyl, quizalofop-tefuryl, quizalofop-P-ethyl and quizalofop-P-tefuryl;
- cyclohexanedione herbicides such as alloxydim, butroxydim, clethodim, cloproxydim, cycloxydim, profoxydim, sethoxydim, tepraloxydim, tralkoxydim and their salts, such as alloxydim-sodium;
- phenylpyrazoline herbicides such as pinoxaden; and
- unclassified herbicides such as 4-(4'-chloro-4-cyclopropyl-2'-fluoro[1,1'-biphenyl]-3-yl)-5-hydroxy-2,2,6,6-tetramethyl-2H-pyran-3(6H)-one (CAS 1312337-72-6); 4-(2',4'-dichloro-4-cyclopropyl[1,1'-biphenyl]-3-yl)-5-hydroxy-2,2,6,6-tetramethyl-2H-pyran-3(6H)-one (CAS 1312337-45-3); 4-(4'-chloro-4-ethyl-2'-fluoro[1,1'-biphenyl]-3-yl)-5-hydroxy-2,2,6,6-tetramethyl-2H-pyran-3(6H)-one (CAS 1033757-93-5); 4-(2',4'-cichloro-4-ethyl[1,1'-biphenyl]-3-yl)-2,2,6,6-tetramethyl-2H-pyran-3,5(4H,6H)-dione (CAS 1312340-84-3); 5-(acetyloxy)-4-(4'-chloro-4-cyclopropyl-2'-fluoro[1,1'-biphenyl]-3-yl)-3,6-dihydro-2,2,6,6-tetramethyl-2H-pyran-3-one (CAS 1312337-48-6); 5-(acetyloxy)-4-(2',4'-dichloro-4-cyclopropyl- [1,1'-biphenyl]-3-yl)-3,6-dihydro-2,2,6,6-tetramethyl-2H-pyran-3-one; 5-(acetyloxy)-4-(4'-chloro-4-ethyl-2'-fluoro[1,1'-biphenyl]-3-yl)-3,6-dihydro-2,2,6,6-tetramethyl-2H-pyran-3-one (CAS 1312340-82-1); 5-(acetyloxy)-4-(2',4'-dichloro-4-ethyl[1,1'-biphenyl]-3-yl)-3,6-dihydro-2,2,6,6-tetramethyl-2H-pyran-3-one (CAS 1033760-55-2); 4-(4'-chloro-4-cyclopropyl-2'-fluoro[1,1'-biphenyl]-3-yl)-5,6-dihydro-2,2,6,6-tetramethyl-5-oxo-2H-pyran-3-yl carbonic acid methyl ester (CAS 1312337-51-1); 4-(2',4'-Dichloro -4-cyclopropyl- [1,1'-biphenyl]-3-yl)-5,6-dihydro-2,2,6,6-tetramethyl-5-oxo-2H-pyran-3-yl carbonic acid methyl ester; 4-(4'-chloro-4-ethyl-2'-fluoro[1,1'-biphenyl]-3-yl)-5,6-dihydro-2,2,6,6-tetramethyl-5-oxo-2H-pyran-3-yl carbonic acid methyl ester (CAS 1312340-83-2); and 4-(2',4'-dichloro-4-ethyl[1,1'-biphenyl]-3-yl)-5,6-dihydro-2,2,6,6-tetramethyl-5-oxo-2H-pyran-3-yl carbonic acid methyl ester (CAS 1033760-58-5), as described in WO 2010/136431, WO 2011/073615 and WO 2011/073616.

Suitable non-ACCase inhibitors of group (h) of herbicide compounds include e.g. benfuresate, butylate, cycloate, dalapon, dimepiperate, EPTC, esprocarb, ethofumesate, flupropanate, molinate, orbencarb, pebulate, prosulfocarb, TCA, thiobencarb, tiocarbazil, triallate, vernolate.

Suitable herbicide compounds of group (i) include e.g. PDS inhibitors: beflubutamid, diflufenican, fluridone, flurochloridone, flurtamone, norflurazon, picolinafen, 4-(3-trifluoromethyl¬phenoxy)-2-(4-trifluoromethylphenyl)¬pyrimidine (CAS 180608-33-7), rimisoxafen, HPPD inhibitors: benzobicyclon, benzofenap, bicyclopyrone, clomazone, fenquinotrione, isoxaflutole, mesotrione, oxotrione (CAS 1486617-21-3), pyrasulfotole, pyrazolynate, pyrazoxyfen, sulcotrione, tefuryltrione, tembotrione, tolpyralate, topramezone, bipyrazone, fenpyrazone, cypyrafluone, tripyrasulfone, benquitrione, dioxopyritrione; bleacher, unknown target: aclonifen, amitrole flumeturon,2-chloro-3-methylsulfanyl-N-(1-methyltetrazol-5-yl)-4-(trifluoromethyl)benzamide (CAS 1361139-71-0), bixlozone and 2-(2,5-dichlorophenyl)methyl-4,4-dimethyl-3-isoxazolidinone (CAS 81778-66-7).

Suitable herbicide compounds of group (j) include e.g. DHP synthase inhibitors: asulam.

Suitable herbicide compounds of group (k) include e.g. compounds of group K1: dinitroanilines such as benfluralin, butralin, dinitramine, ethalfluralin, fluchloralin, oryzalin, pendimethalin, prodiamine and trifluralin, phosphoramidates such as amiprophos, amiprophos-methyl, and butamiphos, benzoic acid herbicides such as chlorthal, chlorthal-dimethyl, pyridines such as dithiopyr and thiazopyr, benzamides such as propyzamide and tebutam; compounds of group K2: carbetamide, chlorpropham, flamprop, flamprop-isopropyl, flamprop-methyl, flamprop-M-isopropyl, flamprop-M-methyl and propham ; among these, compounds of group K1, in particular dinitroanilines are preferred.

Suitable herbicide compounds of group (I) include e.g. chloroacetamides such as acetochlor, alachlor, amidochlor, butachlor, dimethachlor, dimethenamid, dimethenamid-P, metazachlor, metolachlor, S-metolachlor, pethoxamid, pretilachlor, propachlor, propisochlor and thenylchlor, oxyacetanilides such as flufenacet and mefenacet, acetanilides such as diphenamid, naproanilide, napropamide and napropamide-M, tetrazolinones such fentrazamide, and other herbicides such as anilofos, cafenstrole, fenoxasulfone, ipfencarbazone, piperophos, pyroxasulfone, dimesulfazet and isoxazoline compounds of the formulae II.1, II.2, II.3, II.4, II.5, II.6, II.7, II.8 and II.9 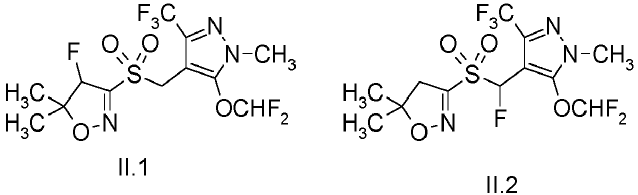 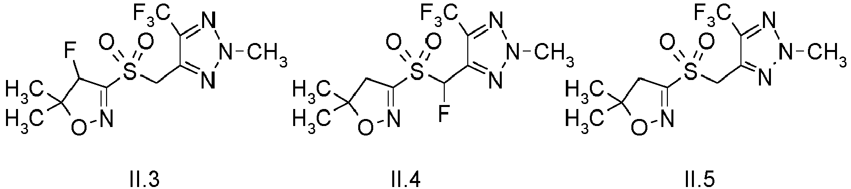 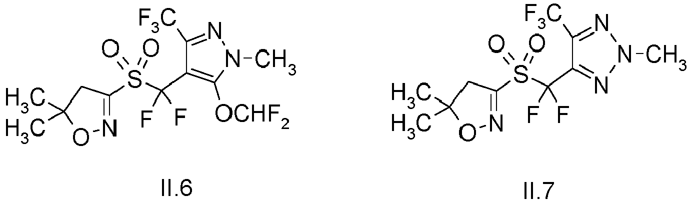 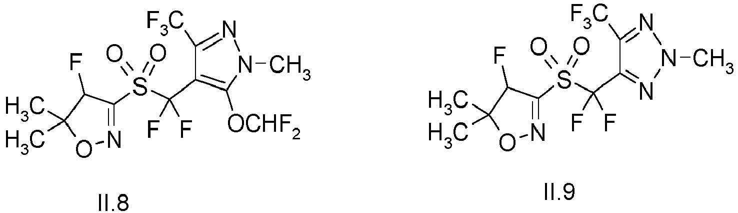 the isoxazoline compounds of the formula (II) are known in the art, e.g. from WO 2006/024820, WO 2006/037945, WO 2007/071900 and WO 2007/096576;
among the VLCFA inhibitors, preference is given to chloroacetamides and pyroxasulfone.

Suitable herbicide compounds of group (m) include e.g. chlorthiamid, dichlobenil, flupoxam, indaziflam, isoxaben, triaziflam and 1-cyclohexyl-5-pentafluorphenyloxy-14-[1,2,4,6]thiatriazin-3-ylamine (CAS 175899-01-1).

Suitable herbicide compounds of group (n) include e.g. dinoseb, dinoterb and DNOC and its salts.

Suitable herbicides of other herbicides of group (o) selected from the group consisting of bromobutide, chlorflurenol, chlorflurenol-methyl, cinmethylin, cumyluron, cyclopyrimorate and its salts and esters, dazomet, difenzoquat, difenzoquat-metilsulfate, dimethipin, DSMA, dymron, endothal and its salts, etobenzanid, flamprop, flamprop-isopropyl, flamprop-methyl, flamprop-M-isopropyl, flamprop-M-methyl, flurenol, flurenol-butyl, flurprimidol, fosamine, fosamine-ammonium, indanofan, maleic hydrazide, mefluidide, metam, methiozolin, methyl azide, methyl bromide, methyl-dymron, methyl iodide, MSMA, oleic acid, oxaziclomefone, pelargonic acid, pyributicarb, quinoclamine, tetflupyrolimet, tridiphane and 6 chloro-3-(2-cyclopropyl-6-methylphenoxy)-4-pyridazinol (CAS 499223-49-3) and its salts and esters, and 6-chloro-4-(2,7-dimethyl-1-naphthyl)-5-hydroxy-2-methyl-pyridazin-3-one (CAS 2414510-21-5) (HST-inhibitor; FMC).

In a particular group (1) of embodiments, the herbicide compound is selected from the herbicide compound of the group (a), which is in particular selected from the group consisting of glufosinate, glufosinate salts and combination thereof. In this particular group (1) of embodiments, the herbicide of group (a) is the sole herbicide.

In one subgroup (1.1) of the group (1) of embodiments, the herbicide compound is selected from racemic glufosinate mixtures as described above, wherein the glufosinate comprises about 50% by weight of the L-enantiomer and about 50% by weight of the D-enantiomer. In another subgroup (1.2) of the group (1) of embodiments, the herbicide compound the herbicide compound is glufosinate, wherein at least 70% by weight of the glufosinate is L-glufosinate or a salt thereof, in particular L-glufosinate ammonium.

In a particular group (2) of embodiments, the herbicide compound is selected from a combination of the herbicide compound of the group (a) and at least on further herbicide compound, which is selected from the herbicide compounds of one of the groups (b) to (o) with particular preference given to the herbicides of groups (b), (c), (d), (e), (f), (g), (i), (I), (m) and (o).

In a particular subgroup (2.b) of the group (2) of embodiments, the herbicide compound is selected from a combination of the herbicide compound of the group (a) and at least on further herbicide compound, which is selected from the herbicide compounds group (b). In this subgroup (2.b), the herbicide (b) is in particular glyphosate or a salt thereof.

In a particular subgroup (2.c) of the group (2) of embodiments, the herbicide compound is selected from a combination of the herbicide compound of the group (a) and at least on further herbicide compound, which is selected from the herbicide compounds group (c). In this subgroup (2.c), the herbicide (c) is in particular selected from imidazolinones. Particularly preferred herbicides (c) are imazamox, imazapyr, imazethapyr and imazapic and their salts.

In a particular subgroup (2.d) of the group (2) of embodiments, the herbicide compound is selected from a combination of the herbicide compound of the group (a) and at least on further herbicide compound, which is selected from the herbicide compounds group (d). In this subgroup (2.d), the herbicide (d) is in particular selected from the group consisting of saflufenacil, trifludimoxazin, tiafenacil, sulfentrazone, flumioxazin, epyrifenacil, 2-[2-[[3-chloro-6-[3,6-dihydro-3-methyl-2,6-dioxo-4-(trifluoromethyl)-1(2H)-pyrimidinyl]-5-fluoro-2-pyridinyl]oxy]phenoxy]-acetic acid methyl ester (CAS 2158274-96-3), 2-[2-[[3-chloro-6-[3,6-dihydro-3-methyl-2,6-dioxo-4-(trifluoromethyl)-1(2H)-pyrimidinyl]-5-fluoro-2-pyridinyl]oxy]phenoxy] acetic acid ethyl ester (CAS 2158274-50-9), 2-[[3-[[3-chloro-6-[3,6-dihydro-3-methyl-2,6-dioxo-4-(trifluoromethyl)-1(2H)-pyrimidinyl]-5-fluoro-2-pyridinyl]oxy]-2-pyridinyl]oxy]-acetic acid methyl ester (CAS 2158275-73-9), 2-[[3-[[3-chloro-6-[3,6-dihydro-3-methyl-2,6-dioxo-4-(trifluoromethyl)-1(2H)-pyrimidinyl]-5-fluoro-2-pyridinyl]oxy]-2-pyridinyl]oxy] acetic acid ethyl ester (CAS 2158274-56-5), 2-[2-[[3-chloro-6-[3,6-dihydro-3-methyl-2,6-dioxo-4-(trifluoromethyl)-1(2H)-pyrimidinyl]-5-fluoro-2-pyridinyl]oxy]phenoxy]-N-(methylsulfonyl)-acetamide (CAS 2158274-53-2), 2-[[3-[[3-chloro-6-[3,6-dihydro-3-methyl-2,6-dioxo-4-(trifluoromethyl)-1(2H)-pyrimidinyl]-5-fluoro-2-pyridinyl]oxy]-2-pyridinyl]oxy]-N-(methylsulfonyl)-acetamide (CAS 2158276-22-1), 3-[2-chloro-5-[3,6-dihydro-3-methyl-2,6-dioxo-4-(trifluoromethyl)-1(2H)-pyrimidinyl]-4-fluorophenyl]-4,5-dihydro-5-methyl-5-isoxazolecarboxylic acid ethyl ester (CAS 1949837-17-5) and mixtures thereof.

In a particular subgroup (2.e) of the group (2) of embodiments, the herbicide compound is selected from a combination of the herbicide compound of the group (a) and at least on further herbicide compound, which is selected from the herbicide compounds group (e). In this subgroup (2.e), the herbicide (e) is in particular selected from the group consisting of dicamba and its salts, e. g. dicamba diethalonamine salt, dicamba ethanolamine salt, dicamba N,N-bis-(3-aminopropyl)methylamine salt (dicamba BAPMA salt) and dicamba potassium salt, quinclorac and its salts, such as quinclorac-dimethylammonium, halauxifen, halauxifen-methyl, florpyrauxifen, florpyrauxifen-benzyl (CAS 1390661-72-9), 2,4-D and its salts or esters, such as the choline salt; and mixtures thereof.

In a particular subgroup (2.f) of the group (2) of embodiments, the herbicide compound is selected from a combination of the herbicide compound of the group (a) and at least on further herbicide compound, which is selected from the herbicide compounds group (f). In this subgroup (2.f), the herbicide (f) is in particular selected from the group consisting of diuron, fluometuron, thidiazuron, metribuzin, atrazine, prometryn and mixtures thereof.

In a particular subgroup (2.g) of the group (2) of embodiments, the herbicide compound is selected from a combination of the herbicide compound of the group (a) and at least on further herbicide compound, which is selected from the herbicide compounds group (g). In this subgroup (2.g), the herbicide (g) is in particular clethodim.

In a particular subgroup (2.i) of the group (2) of embodiments, the herbicide compound is selected from a combination of the herbicide compound of the group (a) and at least on further herbicide compound, which is selected from the herbicide compounds group (i). In this subgroup (2.i), the herbicide (i) is in particular selected from diflufenican, picolinafen, bicyclopyrone, clomazone, isoxaflutole, mesotrione, tembotrione, tolpyralate, topramezone, bixlozone and mixtures thereof.

In a particular subgroup (2.1) of the group (2) of embodiments, the herbicide compound is selected from a combination of the herbicide compound of the group (a) and at least on further herbicide compound, which is selected from the herbicide compounds group (I). In this subgroup (2.1), the herbicide (I) is in particular selected from acetochlor, dimethenamid, dimethenamid-P, metazachlor, metolachlor, S-metolachlor, pethoxamid, pyroxasulfone and mixtures thereof.

In a particular subgroup (2.m) of the group (2) of embodiments, the herbicide compound is selected from a combination of the herbicide compound of the group (a) and at least on further herbicide compound, which is selected from the herbicide compounds group (m). In this subgroup (2.m), the herbicide (m) is in particular selected from indaziflam and triaziflam and mixtures thereof.

In a particular subgroup (2.o) of the group (2) of embodiments, the herbicide compound is selected from a combination of the herbicide compound of the group (a) and at least on further herbicide compound, which is selected from the herbicide compounds group (o). In this subgroup (2.o), the herbicide (o) is in particular selected from cinmethylin and tetflupyrolimet and mixtures thereof.

In group (2) of embodiments and likewise in subgroups (2.b) to (2.o) of embodiments, the herbicide of group (a) is in particular selected from the group consisting of glufosinate, glufosinate salts and combinations thereof.

In one subgroup (2.1) of the group (2) of embodiments, the herbicide compound is more in particular selected from racemic glufosinate mixtures as described above, wherein the glufosinate comprises about 50% by weight of the L-enantiomer and about 50% by weight of the D-enantiomer. In another subgroup (2.2) of the group (2) of embodiments, the herbicide compound the herbicide compound is glufosinate, wherein at least 70% by weight of the glufosinate is L-glufosinate or a salt thereof, in particular L-glufosinate ammonium.

In the groups (1) and (2) of embodiments, and likewise in subgroups (1.1), (1.2), (2.b), (2.c), (2.d), (2.e), (2.f), (2.g), (2.i), (2.1), (2.m) and (2.o) of embodiments, the herbicide compound (a) is in particular selected from the group consisting of the sodium, potassium or ammonium (NH₄⁺) salts of glufosinate and L-glufosinate, in particular glufosinate ammonium and L-glufosinate ammonium.

In the group (2) of embodiments, the relative weight ratio of the herbicide compound (a) to the further herbicide is preferably in the range from 1:10 to 1000:1, in particular in the range from 1:5 to 500:1 and more preferably from 1:1 to 1:250.

In the method and likewise in the use of the present invention the compound of the formula (I) and the one or more herbicide compounds may be formulated in a single formulation or they may be used in separate formulations.

Herbicidal formulations comprising at least one compound of the formula (I) and at least one herbicide compound as defined herein, in particular a herbicide compound of the group (a) to (o) of herbicides are novel and therefore, they are a further aspect of the present invention.

In the formulations of the invention any statements regarding preferred meanings of the variables M⁺ and n in formula (I) and their combinations apply in the same way as given above.

As regards the herbicides, the preferences given above also apply to the formulations. In particular, the formulations of the invention comprise at least one compound of the formula (I) and at least one herbicide compound according to the groups (1) or (2) of embodiments. More particularly, the formulations of the invention comprise at least one herbicide compound of group (a), which is in particular selected from glufosinate and the salts thereof, and optionally at least one further herbicide, which is selected from the herbicide of groups (b) to (o) as defined above.

Particularly, the herbicide compound of the group (a) of the herbicidal formulations of the invention comprises a glufosinate salt, which is selected from the group consisting of the sodium, potassium and ammonium (NH₄⁺) salts of glufosinate.

Especially, the herbicide compound of the group (a) of the herbicidal formulation of the invention is a L-glufosinate salt, which is in particular selected from the group consisting of the sodium, potassium and ammonium (NH₄⁺) salts of L-glufosinate.

According to a particular group of embodiments, the herbicide compound of group (a), which is in particular selected from glufosinate and the salts thereof, is the sole herbicide contained in the formulation.

According to another particular group of embodiments, the formulation contains a herbicide compound of group (a), which is in particular selected from glufosinate and the salts thereof, and at least one further herbicide compound, which is selected from groups (b) to (o) of herbicide compounds as defined above.

Furthermore, the inventive herbicidal formulation or the inventive aqueous spray liquor may comprise water and organic solvent, as described above. The examples of suitable organic solvent are as described above. The concentration of water and the organic solvent is also as described above.

In the herbicide formulations, the weight ratio of the compound of the formula (I) to the herbicide compound is preferably in the range of 1:10 to 10:1, in particular in the range of 1:5 to 5:1 and especially in the range of 1:3 to 3:1.

In the formulations of the present invention, the concentration of the compound of the formula (I) is usually in the range of 1 to 80% by weight, in particular in the range of 5 to 50% by weight, based on the total weight of the formulation.

In the formulations of the present invention, the concentration of the herbicide compound is usually in the range of 1 to 80% by weight, in particular in the range of 5 to 50% by weight, based on the total weight of the formulation.

Besides the compound of the formula (I) and the herbicide compound or mixture of herbicide compounds, the formulation of the present invention may contain conventional formulation auxiliaries, including solvents, liquid carriers, solid carriers or fillers, surfactants, dispersants, emulsifiers, wetters, adjuvants, solubilizers, penetration enhancers, protective colloids, adhesion agents, thickeners, humectants, anti-freezing agents, anti-foaming agents, colorants, crystal growth inhibitors, tackifiers and binders.

Suitable surfactants include but are not limited to the alkali metal salts, alkaline earth metal salts, ammonium salts of aromatic sulfonic acids, e.g. lignin-, phenol-, naphthalene- and dibutylnaphthalenesulfonic acid, and also of fatty acids, alkyl- and alkylarylsulfonates, alkyl-, lauryl ethers and fatty alcohol sulfates, and also salts of sulfated hexa-, hepta- and octadecanols and of fatty alcohol glycol ethers, condensation products of sulfonated naphthalene and its derivatives with formaldehyde, condensation products of naphthalene and of naphthalenesulfonic acids with phenol and formaldehyde, polyoxyethylene octyl phenol ether, ethoxylated isooctyl, octyl or nonylphenol, alkylphenyl, tributylphenyl polyglycol ether, alkylaryl polyether alcohols, isotridecyl alcohol, fatty alcohol ethylene oxide condensates, ethoxylated castor oil, polyoxyethylene or polyoxypropylene alkyl ethers, lauryl alcohol polyglycol ether acetate, sorbitol esters, lignosulfite spent liquors or methylcellulose.

Suitable liquid carriers include water and organic solvents. Suitable organic solvents are aliphatic hydrocarbons, preferably an aliphatic C₅-C₁₆-hydrocarbon, more preferably a C₅-C₁₆-alkane, or C₅-C₁₆-cycloalkane, such as pentane, hexane, cyclohexane, or petrol ether; aromatic hydrocarbons, preferably an aromatic C₆-C₁₀-hydrocarbons, such as benzene, toluene, o-, m-, and p-xylene; halogenated hydrocarbons, preferably halogenated aliphatic C₁-C₆-alkanes, or halogenated aromatic C₆-C₁₀-hydrocarbons, such as CH₂Cl₂, CHCl₃, CCl₄, CH₂ClCH₂Cl, CCl₃CH₃, CHCl₂CH₂Cl, CCl₂CCl₂, or chlorobenzene; ethers, preferably C₁-C₆-cycloalkyl ethers, C₁-C₆-alkyl-C₁-C₆-alkyl ethers and C₁-C₆-alkyl-C₆-C₁₀-aryl ethers, such as CH₃CH₂OCH₂CH₃, (CH₃)₂CHOCH(CH₃)₂, CH₃OC(CH₃)₃ (MTBE), CH₃OCH₃ (DME), CH₃OCH₂CH₂OCH₃, dioxane, anisole, and tetrahydrofurane (THF); esters, preferably esters of aliphatic C₁-C₆-alcohols with aliphatic C₁-C₆-carboxylic acids, esters of aromatic C₆-C₁₀-alcohols with aromatic C₆-C₁₀-carboxylic adcids, cyclic esters of ω-hydroxy-C₁-C₆-carboxylic acids, such as CH₃C(O)OCH₂CH₃, CH₃C(O)OCH₃, CH₃C(O)OCH₂CH₂CH₂CH₃, CH₃C(O)OCH(CH₃)CH₂CH₃, CH₃C(O)OC(CH₃), CH₃CH₂CH₂C(O)OCH₂CH₃, CH₃CH(OH)C(O)OCH₂CH₃, CH₃CH(OH)C(O)OCH₃, CH₃C(O)OCH₂CH(CH₃)₂, CH₃C(O)OCH(CH₃)₂, CH₃CH₂C(O)OCH₃, benzyl benzoate, and γ-butyrolactone; carbonates, such as ethylene carbonate, propylene carbonate, CH₃CH₂OC(O)OCH₂CH₃, and CH₃OC(O)OCH₃; nitriles, preferably C₁-C₆-nitriles, such as CH₃CN, and CH₃CH₂CN; ketones, preferably C₁-C₆-alkyl-C₁-C₆-alkyl ketones, such as CH₃C(O)CH₃, CH₃C(O)CH₂CH₃, CH₃CH₂C(O)CH₂CH₃, and CH₃C(O)C(CH₃)₃ (MTBK); alcohols, preferably C₁-C₄-alcohols, such as CH₃OH, CH₃CH₂OH, CH₃CH₂CH₂OH, CH₃CH(OH)CH₃, CH₃(CH₂)₃OH, C(CH₃)₃OH, propylene glycol, dipropylene glycol, propylene glycol monomethylether (1-methoxy-2-propanol); amides and urea derivatives, preferably dimethyl formamide (DMF), N-methyl-2-pyrrolidone (NMP), dimethyl acetamide (DMA), 1,3-dimethyl-2-imidazolidinone (DMI), 1,3-dimethyl-3,4,5,6-tetrahydro-2(1H)-pyrimidinone (DMPU), hexamethylphosphamide (HMPA); moreover dimethyl sulfoxide (DMSO), and sulfolane. Preferred solvents are propylene glycol, dipropylene glycol and propyleneglycol monomethyl ether, more preferred propylene glycol and dipropylene glycol.

Solid carriers are mineral earths such as silicas, silica gels, silicates, talc, kaolin, limestone, lime, chalk, bolus, loess, clay, dolomite, diatomaceous earth, calcium sulfate and magnesium sulfate, magnesium oxide, ground plastics, fertilizers, such as ammonium sulfate, ammonium phosphate, ammonium nitrate, ureas and vegetable products such as corn meal, tree bark, wood flour and nut shell flour, cellulose powder or other solid carriers.

Suitable surfactants are surface-active compounds, such as anionic, cationic, nonionic and amphoteric surfactants, block polymers, polyelectrolytes, and mixtures thereof, wherein such surfactants are other than alkylether sulfate salts of the formula (I). Such surfactants can be used as emulsifier, dispersant, solubilizer, wetter, penetration enhancer, protective colloid, or adjuvant. Examples of surfactants are listed in McCutcheon's, Vol.1: Emulsifiers & Detergents, McCutcheon's Directories, Glen Rock, USA, 2008 (International Ed. or North American Ed.).

Suitable anionic surfactants are alkali, alkaline earth or ammonium salts of sulfonates, sulfates, phosphates, carboxylates, and mixtures thereof. Examples of sulfonates are alkylarylsulfonates, diphenylsulfonates, alpha-olefin sulfonates, lignine sulfonates, sulfonates of fatty acids and oils, sulfonates of ethoxylated alkylphenols, sulfonates of alkoxylated arylphenols, sulfonates of condensed naphthalenes, sulfonates of dodecyl- and tridecylbenzenes, sulfonates of naphthalenes and alkylnaphthalenes, sulfosuccinates or sulfosuccinamates. Examples of sulfates are sulfates of fatty acids and oils, of ethoxylated alkylphenols, of alcohols, of ethoxylated alcohols other than those of the formula (I), or of fatty acid esters. Examples of phosphates are phosphate esters. Examples of carboxylates are alkyl carboxylates, and carboxylated alcohol or alkylphenol ethoxylates.

Suitable nonionic surfactants are alkoxylates, N-substituted fatty acid amides, amine oxides, esters, sugar-based surfactants, polymeric surfactants, and mixtures thereof. Examples of alkoxylates are compounds such as alcohols, alkylphenols, amines, amides, arylphenols, fatty acids or fatty acid esters which have been alkoxylated with 1 to 50 equivalents. Ethylene oxide and/or propylene oxide may be employed for the alkoxylation, preferably ethylene oxide. Examples of N-substituted fatty acid amides are fatty acid glucamides or fatty acid alkanolamides. Examples of esters are fatty acid esters, glycerol esters or monoglycerides. Examples of sugar-based surfactants are sorbitans, ethoxylated sorbitans, sucrose and glucose esters or alkylpolyglucosides. Examples of polymeric surfactants are home- or copolymers of vinylpyrrolidone, vinylalcohols, or vinylacetate.

Suitable cationic surfactants are quaternary surfactants, for example quaternary ammonium compounds with one or two hydrophobic groups, or salts of long-chain primary amines. Suitable amphoteric surfactants are alkylbetains and imidazolines. Suitable block polymers are block polymers of the A-B or A-B-A type comprising blocks of polyethylene oxide and polypropylene oxide, or of the A-B-C type comprising alkanol, polyethylene oxide and polypropylene oxide. Suitable polyelectrolytes are polyacids or polybases. Examples of polyacids are alkali salts of polyacrylic acid or polyacid comb polymers. Examples of polybases are polyvinylamines or polyethyleneamines.

Suitable thickeners are polysaccharides (e.g., xanthan gum, carboxymethylcellulose), anorganic clays (organically modified or unmodified), polycarboxylates, and silicates. Suitable bactericides are bronopol and isothiazolinone derivatives such as alkylisothiazolinones and benzisothiazolinones. Suitable anti-freezing agents are ethylene glycol, propylene glycol, urea and glycerin. Suitable anti-foaming agents are silicones, long chain alcohols, and salts of fatty acids. Suitable colorants (e.g., in red, blue, or green) are pigments of low water solubility and water-soluble dyes. Examples are inorganic colorants (e.g., iron oxide, titan oxide, iron hexacyanoferrate) and organic colorants (e.g., alizarin-, azo- and phthalocyanine colorants). Suitable tackifiers or binders are polyvinylpyrrolidons, polyvinylacetates, polyvinyl alcohols, polyacrylates, biological or synthetic waxes, and cellulose ethers.

The inventive formulation is prepared in a known manner, such as described by Mollet and Grubemann, Formulation technology, Wiley VCH, Weinheim, 2001; or Knowles, New developments in crop protection product formulation, Agrow Reports DS243, T&F Informa, London, 2005.

The formulation type of the inventive formulation is of minor importance and will depend from the herbicide compound in a known way. Basically, the formulation containing the herbicide compound and the compound of the formula (I) can be easily diluted with water. Suitable formulations of herbicide active ingredients include, but are not limited to water-soluble concentrates (SL or LS formulations), dispersible concentrates (DC formulations), emulsifiable concentrates (EC formulations), emulsions (EW, EO or ES formulations), suspension concentrates which may be water-based or oil-based (SC, OD or FS formulations), microemulsions (ME formulations), microcapsule formulations (CS formulations), wettable powders or dusts (e.g., WP, SP, WS, DP, DS), wettable granules (e.g., WG, SG, GR, FG, GG, MG) and the like. These and further compositions types are defined in the "Catalogue of pesticide formulation types and international coding system", Technical Monograph No. 2, 6th Ed. May 2008, CropLife International.

Preferably, the inventive herbicidal formulation is a liquid formulation, especially a soluble liquid (SL) formulation. If the inventive formulation contains a herbicide of group (a) it is in particular an aqueous solution or soluble liquid of the respective herbicide (a) and the compound of the formula (I). Especially, the alkyl ether sulfate salt of the formula (I) contained in the formulation of the present invention is an ammonium salt of 2-propylheptyl ether sulfate, where M⁺ is H₄₋ₘNR¹ₘ⁺, where R¹ is as defined above and in particular selected from the group consisting of unbranched or branched alkyl radicals having preferably 1 to 4 carbon atoms, OH substituted alkyl radicals having preferably 2 to 4 carbon atoms, such as CH₂CH₂OH and CH₂CH(OH)CH₃, and m is an integer in the range of 1 to 4, in particular 1, 2 or 3, where the variable n is preferably in the range of 1 to 5, particularly in the range of 1 to 3, especially n is 2 and where the average of n is preferably in the range of 1.1 to 5.0, in in particular in the range of 1.5 to 4.5 and especially in the range of 1.7 to 3.5.

The inventive herbicidal formulation may also be an aqueous suspension concentrate (SC). In such suspension concentrates, the active substance is present in a finely divided particulate form, i. e. in a form where the active substance is present as particles which are suspended in an aqueous phase. The diameter of the active substance particles will generally not exceeded 50 µm. In particular at least 90% by weight of the active substance particles will have a diameter of below 30 µm, in particular below 20 µm. Advantageously, at least 40% by weight and in particular at least 60% by weight of the particles in the SCs according to the invention have diameters of below 5 µm.

The SC formulation, hereinafter SC, of the present invention comprises the alkylether sulfate salt of the formula (I) and the one or more herbicide compounds, in particular glufosinate or a salt thereof.

Preferably, the alkylether sulfate salt of the formula (I) contained in the SC is an ammonium salt of 2-propylheptyl ether sulfate or of isodecylether sulfate, where M⁺ is H₄₋ₘNR¹ₘ⁺, where R¹ is as defined above and in particular selected from the group consisting of unbranched or branched alkyl radicals having preferably 1 to 4 carbon atoms, OH substituted alkyl radicals having preferably 2 to 4 carbon atoms, such as CH₂CH₂OH and CH₂CH(OH)CH₃, and m is an integer in the range of 1 to 4, in particular 1, 2 or 3, where the variable n is preferably in the range of 1 to 5, particularly in the range of 1 to 3, especially n is 2 and where the average of n is preferably in the range of 1.1 to 5.0, in in particular in the range of 1.5 to 4.5 and especially in the range of 1.7 to 3.5.

The amount of the active substance, i.e. the total amount of one or more herbicide compound(s), in particular at least one herbicide compound of the groups (a) to (o), preferably a herbicide compound of the group (a), which is in particular selected from glufosinate and the salts thereof, if appropriate, further active substance(s), which is selected from the groups (b) to (o) of the herbicide compounds as defined above, in such SCs is usually in the range of from 5 to 60% by weight, in particular in the range of from 10 to 50% by weight, based on the total weight of the suspension concentrate.

The amount of the alkylether sulfate salt of the formula (I) in such SC is usually in the range of from 1 to 50% by weight, in particular in the range of from 5 to 40% by weight, based on the total weight of the suspension concentrate.

Besides the alkylether sulfate salt of the formula (I), aqueous suspension concentrates may comprise surface-active substances other than those of the formula (I) and, if appropriate, one or more auxiliaries, such as antifoam agents, thickeners, antifreeze agents, stabilizers (biocides), pH regulators and anticaking agents.

Suitable surface-active substances other than those of the formula (I) are, preferably, anionic and nonionic surfactants. Other suitable surface-active substances other than those of the formula (I) are protective colloids. As a rule, the amount of surface-active substances other than those of the formula (I) will amount to from 0 to 30% by weight, in particular 0 to 20% by weight, based on the total weight of the aqueous SCs according to the invention. If the surface-active substances other than those of the formula (I) comprise at least one anionic surface-active substance other than those of the formula (I) and at least one nonionic surface-active substance, the weight ratio of the anionic to the nonionic surface-active substance being typically in the range of 10:1 to 1:10.

Examples of anionic surface-active substances (surfactants) other than those of the formula (I) include alkylarylsulfonates, phenylsulfonates, alkyl sulfates, alkylsulfonates, alkyl ether sulfates other than those of the formula (I), alkylaryl ether sulfates, alkyl polyglycol ether phosphates, polyarylphenyl ether phosphates, alkyl sulfosuccinates, olefin sulfonates, paraffin sulfonates, petroleum sulfonates, taurides, sarcosides, fatty acids, alkylnaphthalenesulfonic acids, naphthalenesulfonic acids, lignosulfonic acids, condensates of sulfonated naphthalenes with formaldehyde or with formaldehyde and phenol and, if appropriate, urea, and condensates of phenolsulfonic acid, formaldehyde and urea, lignin-sulfite waste liquor and lignosulfonates, alkyl phosphates, alkylaryl phosphates, for example tristyryl phosphates, and also polycarboxylates such as, for example, polyacrylates, maleic anhydride/olefin copolymers (for example Sokalan^{®} CP9, BASF), including the alkali metal, alkaline-earth metal, ammonium and amine salts of the abovementioned substances. Preferred anionic surface-active substances other than those of the formula (I) are those which contain at least one sulfonate group and in particular their alkali metal salts and their ammonium salts.

Examples of nonionic surface-active substances comprise alkylphenol alkoxylates, alcohol alkoxylates, fatty amine alkoxylates, polyoxyethylene glycerol fatty acid esters, castor oil alkoxylates, fatty acid alkoxylates, fatty acid amide alkoxylates, fatty acid polydiethanolamides, lanolin ethoxylates, fatty acid polyglycol esters, isotridecyl alcohol, fatty acid amides, methylcellulose, fatty acid esters, alkyl polyglycosides, glycerol fatty acid esters, polyethylene glycol, polypropylene glycol, polyethylene glycol/polypropylene glycol block copolymers, polyethylene glycol alkyl ethers, polypropylene glycol alkyl ethers, polyethylene glycol/polypropylene glycol ether block copolymers (polyethylene oxide/polypropylene oxide block copolymers) and their mixtures. Preferred nonionic surface-active substances are fatty alcohol ethoxylates, alkyl polyglycosides, glycerol fatty acid esters, castor oil alkoxylates, fatty acid alkoxylates, fatty acid amide alkoxylates, lanolin ethoxylates, fatty acid polyglycol esters and ethylene oxide/propylene oxide block copolymers, and mixtures of these.

Protective colloids are, typically, water-soluble amphiphilic polymers. Examples are proteins and denatured proteins such as casein, polysaccharides such as water-soluble starch derivatives and cellulose derivatives, in particular hydrophobically modified starches and celluloses, furthermore polycarboxylates such as polyacrylic acid and acrylic acid copolymers, polyvinyl alcohol, polyvinyl pyrrolidone, vinylpyrrolidone copolymers, polyvinylamines, polyethyleneimines, and polyalkylene ethers.

Viscosity-modifying additives (thickeners) which are suitable for the aqueous SCs according to the invention are, in particular, compounds which impart a modified flowing behavior to the formulation, for example a high viscosity in the static state and low viscosity in the state of motion. Suitable compounds are, in principle, all those employed in suspension concentrates for this purpose. Substances to be mentioned are, for example, inorganic substances, for example layer silicates and organic modified layer silicates such as bentonites or attapulgites (for example Attaclay^{®} from Engelhardt), and organic substances such as polysaccharides and heteropolysaccharides such as Xanthan Gum^{®} (Kelzan^{®} from Kelco), Rhodopol^{®} 23 (Rhone Poulenc) or Veegum^{®} (from R.T. Vanderbilt), with Xanthan-Gum^{®} being used by preference. The amount of the viscosity-modifying additives is frequently 0 to 7% by weight, based on the total weight of the SCs.

Antifoam agents which are suitable for the aqueous SCs according to the invention are, for example, silicone emulsions which are known for this purpose (Silikon^{®} SRE, from Wacker or Rhodorsil^{®} from Rhodia), long-chain alcohols, fatty acids and their salts, antifoams of the aqueous wax dispersion type, solid antifoams (known as Compounds), organofluorine compounds and mixtures of these. The amount of antifoam agents is typically 0 to 1.5% by weight, based on the total weight of the SCs.

Preservatives may also be added to the suspension concentrates according to the invention for the purposes of stabilizing them. Suitable preservatives are those based on isothiazolones, for example Proxel^{®} from ICI or Acticide^{®} RS from Thor Chemie or Kathon^{®} MK from Rohm & Haas. The amount of preservative is typically 0 to 0.5% by weight, based on the total weight of the SCs.

Suitable antifreeze agents are liquid polyols, for example ethylene glycol, propylene glycol or glycerol, and also urea. The amount of antifreeze agents is, as a rule, 0 to 20% by weight, in particular 5 to 10% by weight, based on the total weight of the aqueous suspension concentrate.

If appropriate, the aqueous SCs according to the invention may comprise buffers to regulate the pH. Examples of buffers are alkali metal salts of weak inorganic or organic acids such as, for example, phosphoric acid, boric acid, acetic acid, propionic acid, citric acid, fumaric acid, tartaric acid, oxalic acid and succinic acid.

The inventive herbicidal formulation may also be an oil dispersion (OD). In such oil dispersions, the active substance is present in a finely divided particulate form, i. e. in a form where the active substance is present as particles, which are dispersed in an oil phase. The diameter of the active substance particles will generally not exceed 50 µm. In particular at least 90% by weight of the active substance particles will have a diameter of below 30 µm, in particular below 20 µm. Advantageously, at least 40% by weight and in particular at least 60% by weight of the particles in the ODs according to the invention have diameters of below 10 µm.

The OD formulation, hereinafter OD, of the present invention comprises the alkylether sulfate salt of the formula (I) and the one or more herbicide compounds, in particular glufosinate or a salt thereof.

Preferably, the alkylether sulfate salt of the formula (I) contained in the OD is an ammonium salt of 2-propylheptyl ether sulfate or of isodecylether sulfate, where M⁺ is H₄₋ₘNR¹ₘ⁺, where R¹ is as defined above and in particular selected from the group consisting of unbranched or branched alkyl radicals having preferably 1 to 4 carbon atoms, OH substituted alkyl radicals having preferably 2 to 4 carbon atoms, such as CH₂CH₂OH and CH₂CH(OH)CH₃, and m is an integer in the range of 1 to 4, in particular 1, 2 or 3, where the variable n is preferably in the range of 1 to 5, particularly in the range of 1 to 3, especially n is 2 and where the average of n is preferably in the range of 1.1 to 5.0, in in particular in the range of 1.5 to 4.5 and especially in the range of 1.7 to 3.5.

The amount of the active substance, i.e. the total amount of one or more herbicide compound(s), in particular at least one herbicide compound of the groups (a) to (o), preferably a herbicide compound of the group (a), which is in particular selected from glufosinate and the salts thereof, if appropriate, further active substance(s), which is selected from the groups (b) to (o) of the herbicide compounds as defined above, in such ODs is usually in the range of from 5 to 60% by weight, in particular in the range of from 10 to 50% by weight, based on the total weight of the oil dispersion.

The amount of the alkylether sulfate salt of the formula (I) in such OD is usually in the range of from 1 to 45% by weight, in particular in the range of from 5 to 40% by weight, based on the total weight of the oil dispersion.

Besides the alkylether sulfate salt of the formula (I), oil dispersions may comprise surface-active substances other than those of the formula (I) and, if appropriate, one or more auxiliaries, such as antifoam agents, thickeners, stabilizers (biocides), pH regulators and anticaking agents.

Suitable surface-active substances other than those of the formula (I) are, preferably, the abovementioned anionic and nonionic surfactants. As a rule, the amount of surface-active substances other than those of the formula (I) will amount to from 0 to 30% by weight, in particular 0 to 20% by weight, based on the total weight of the OD according to the invention. If the surface-active substances other than those of the formula (I) comprise comprise at least one anionic surface-active substance other than those of the formula (I) and at least one nonionic surface-active substance, the weight ratio of the anionic to the nonionic surface-active substance being typically in the range of from 10:1 to 1:10.

The herbicidal formulation according to the invention may be a physical mixture of at least one compound of the formula (I) with at least one herbicide compound, as defined herein. The formulation can, however, also be any desired combination of the compound of the formula (I) with at least one herbicide compound, where the compound of the formula (I) and the herbicide compound must not be formulated together.

One example of the herbicidal formulation according to the invention, in which at least one compound of the formula (I) and at least one herbicide compound are not formulated together, is a two-component kit. Accordingly, the present invention also provides a two-component kit comprising a first component which comprises the compound of the formula (I), and a second component which comprises at least one herbicide compound, a liquid or solid carrier and optionally at least one surfactant and/or at least one customary auxiliary.

In the method of the present invention, the compounds of the formula (I) and at least one herbicide compound are applied to the undesired plants or their habitat. The order, in which the compound of the formula (I), the herbicide compound(s) and if present, the further herbicide are applied, is of minor importance. It is merely essential that the compound of the formula (I) and the herbicide compound(s) are present at the site of action at the same time, i.e. at the same time have contact with the plant to be controlled or are absorbed by this.

As mentioned above, the compound of the formula (I) and the at least one herbicide may be co-formulated or separately formulated. In the latter case, the compounds of the formula (I) and the at least one herbicide are typically applied as an aqueous spray liquor. Thus, the invention also relates to an aqueous spray liquor comprising
i. at least one compound of the formula (I), as defined herein; and
ii. at least one herbicide compound, as defined herein.

For this, the compound of the formula (I) and the herbicide or suitable formulations thereof are typically mixed with the application water (make-up water) prior to application of the combination, i. e. the herbicide and the compound of the formula (I) are tank mixed.

The concentration of the compound of the formula (I) in the spray liquor depends on its application rate, which is typically in the range from 10 g/ha to 2 kg/ha, in particular in the range of 20 g/ha to 1.5 kg/ha, especially in the range of 25 g/ha to 1.2 kg/ha, calculated as free acid (M⁺ = H). The concentration of the compound of the formula (I) in the aqueous spray liquor is generally in the range of 10 to 150000 ppm, in particular in the range of 10 to 100000 ppm, especially in the range of 10 to 50000 ppm, based on the total weight of the aqueous spray liquor, calculated as free acid (M⁺ = H). The concentration of the herbicide compound in the aqueous spray liquor depends of its application rate, which is typically in the range from 10 g/ha to 1.2 kg/ha, in particular in the range of 20 g/ha to 1.0 kg/ha, especially in the range of 25 g/ha to 0.8 kg/ha, calculated as active herbicide compound.

The amount of application water per hectare is generally in the range of 50 to 1000 l/ha.

The aqueous spray liquor may have any pH value which is acceptable for agricultural purposes. Preferably, the aqueous spray liquor has a pH value in the range of 4 to 9, particularly in the range of 5 to 8, especially in the range of 5.5 to 7.5 as determined at 25 °C.

In addition to water, the compound of the formula (I) and the herbicide (including the herbicide active ingredient and optionally formulation auxiliaries), the aqueous spray liquor may contain one or more further agriculturally active ingredients. Further agriculturally active ingredients may be selected from fungicides, insecticides, nematicides, safeners, fertilizers, micronutrients, biopesticides, nitrification inhibitors, urease inhibitors, and/or growth regulators. Combinations of herbicides and safeners may be particularly useful. Suitable safeners include (quinolin-8-oxy)acetic acids, 1-phenyl-5-haloalkyl-1H-1,2,4-triazol-3-carboxylic acids, 1-phenyl-4,5-dihydro-5-alkyl-1H-pyrazol-3,5-dicarboxylic acids, 4,5-dihydro-5,5-diaryl-3-isoxazol carboxylic acids, dichloroacetamides, alpha-oximinophenylacetonitriles, acetophenonoximes, 4,6-dihalo-2-phenylpyrimidines, N-[[4-(aminocarbonyl)phenyl]sulfonyl]-2-benzoic amides, 1,8-naphthalic anhydride, 2-halo-4-(haloalkyl)-5-thiazol carboxylic acids, phosphorthiolates and N-alkyl-O-phenylcarbamates and their agriculturally acceptable salts and their agriculturally acceptable derivatives such amides, esters, and thioesters, provided they have an acid group.

The aqueous spray liquor containing the herbicide and the compound of the formula (I) is used for controlling undesired vegetation on crop area and on non-crop areas.

The aqueous spray liquor allows for very efficiently control undesired vegetation on non-crop area and in crops. On non-crop area very efficient control is achieved at high application rates. Depending on the herbicide active compound, application of the spray liquor allows for efficient control of broad-leafed weeds and grass weeds in crops such as wheat, rice, corn, soybeans and cotton without causing any significant damage to the crop plants. This effect is mainly observed at low rates of application.

The spray liquor is generally applied to the undesired plants mainly by spraying the leaves. Here, the application can be carried out by customary spraying techniques using spray liquor amounts of from about 10 to 1000 l/ha. Application of the spray liquor can be done before, during and/or after the emergence of the undesirable plants.

Preferably, in the herbicidal formulation or the aqueous spray liquor according to the invention, the weight ratio of the compound of the formula (I) to the herbicide compound is preferably in the range of 1:10 to 10:1, in particular in the range of 1:5 to 7:1 and especially in the range of 1:1 to 6:1.

Also preferably, the herbicide compound of the herbicidal formulation or the aqueous spray liquor according to the invention is selected from at least one herbicide compound of the groups (a) to (o):
(a) herbicide compounds of the group of the glutamine synthetase inhibitors;
(b) herbicide compounds of the group of the enolpyruvyl shikimate 3-phosphate synthase inhibitors (EPSP inhibitors);
(c) herbicide compounds of the group of acetolactate synthase inhibitors (ALS inhibitors),
(d) herbicide compounds of the group of protoporphyrinogen-IX oxidase inhibitors;
(e) herbicide compounds of the group of auxinic herbicides and auxin transport inhibitors;
(f) herbicide compounds of the group of photosynthesis inhibitors;
(g) herbicide compounds of the group of lipid biosynthesis inhibitors (acetyl-CoA carboxylase inhibitors, ACCase inhibitors);
(h) lipid biosynthesis inhibitors other than ACCase-inhibitors;
(i) bleacher herbicides;
(j) 7,8-dihydropteroate synthase inhibitors (DHP inhibitors);
(k) mitosis inhibitors;
(l) inhibitors of the synthesis of very long chain fatty acids (VLCFA inhibitors);
(m) cellulose biosynthesis inhibitors;
(n) decoupler herbicides;
(o) other herbicides selected from the group consisting of bromobutide, chlorflurenol, chlorflurenol-methyl, cinmethylin, cumyluron, cyclopyrimorate and its salts and esters, dazomet, difenzoquat, difenzoquat-metilsulfate, dimethipin, DSMA, dymron, endothal and its salts, etobenzanid, flamprop, flamprop-isopropyl, flamprop-methyl, flamprop-M-isopropyl, flamprop-M-methyl, flurenol, flurenol-butyl, flurprimidol, fosamine, fosamine-ammonium, indanofan, maleic hydrazide, mefluidide, metam, methiozolin, methyl azide, methyl bromide, methyl-dymron, methyl iodide, MSMA, oleic acid, oxaziclomefone, pelargonic acid, pyributicarb, quinoclamine, tetflupyrolimet, tridiphane and 6 chloro-3-(2-cyclopropyl-6-methylphenoxy)-4-pyridazinol (CAS 499223-49-3) and its salts and esters, and 6-chloro-4-(2,7-dimethyl-1-naphthyl)-5-hydroxy-2-methyl-pyridazin-3-one (CAS 2414510-21-5) (HST-inhibitor; FMC).

More preferably, the herbicide compound of the herbicidal formulation or the aqueous spray liquor according to the invention comprises a herbicide compound of the group (a), which is in particular selected from the group consisting of glufosinate, glufosinate salts and combinations thereof.

Particularly, the herbicide compound of the group (a) of the herbicidal formulation or the aqueous spray liquor according to the invention comprises a glufosinate salt, which is selected from the group consisting of the sodium, potassium and ammonium (NH₄⁺) salts of glufosinate.

Especially, the herbicide compound of the group (a) of the herbicidal formulation or the aqueous spray liquor according to the invention is a L-glufosinate salt, which is in particular selected from the group consisting of the sodium, potassium and ammonium (NH₄⁺) salts of L-glufosinate.

According to a preferred group of embodiments of the inventive herbicidal formulation or the inventive aqueous spray liquor, the herbicidal formulation or the aqueous spray liquor comprises at least one further herbicide. The examples of suitable further herbicide are as described above. The concentration of the further herbicide, the weight ratio of the compound of the formula (I) to the further herbicide, the weight ratio of the herbicide compound to the further herbicide are also as described above. In this group of embodiments, the weight ratio refers to the total weight of the herbicidal formulation or the total weight of the aqueous spray liquor.

Particularly preferably, the herbicide compound of the herbicidal formulation or the aqueous spray liquor according to the present invention comprises at least one further herbicide compound which is selected from groups (b) to (o):
(b) herbicide compounds of the group of the enolpyruvyl shikimate 3-phosphate synthase inhibitors (EPSP inhibitors);
(c) herbicide compounds of the group of acetolactate synthase inhibitors (ALS inhibitors),
(d) herbicide compounds of the group of protoporphyrinogen-IX oxidase inhibitors;
(e) herbicide compounds of the group of auxinic herbicides and auxin transport inhibitors;,
(f) herbicide compounds of the group of photosynthesis inhibitors;
(g) herbicide compounds of the group of lipid biosynthesis inhibitors (acetyl-CoA carboxylase inhibitors, ACCase inhibitors);
(h) lipid biosynthesis inhibitors other than ACCase-inhibitors;
(i) bleacher herbicides;
(j) 7,8-dihydropteroate synthase inhibitors (DHP inhibitors);
(k) mitosis inhibitors;
(l) inhibitors of the synthesis of very long chain fatty acids (VLCFA inhibitors);
(m) cellulose biosynthesis inhibitors;
(n) decoupler herbicides;
(o) other herbicides selected from the group consisting of bromobutide, chlorflurenol, chlorflurenol-methyl, cinmethylin, cumyluron, cyclopyrimorate and its salts and esters, dazomet, difenzoquat, difenzoquat-metilsulfate, dimethipin, DSMA, dymron, endothal and its salts, etobenzanid, flamprop, flamprop-isopropyl, flamprop-methyl, flamprop-M-isopropyl, flamprop-M-methyl, flurenol, flurenol-butyl, flurprimidol, fosamine, fosamine-ammonium, indanofan, maleic hydrazide, mefluidide, metam, methiozolin, methyl azide, methyl bromide, methyl-dymron, methyl iodide, MSMA, oleic acid, oxaziclomefone, pelargonic acid, pyributicarb, quinoclamine, tetflupyrolimet, tridiphane and 6 chloro-3-(2-cyclopropyl-6-methylphenoxy)-4-pyridazinol (CAS 499223-49-3) and its salts and esters, and 6-chloro-4-(2,7-dimethyl-1-naphthyl)-5-hydroxy-2-methyl-pyridazin-3-one (CAS 2414510-21-5) (HST-inhibitor; FMC).

The herbicidal formulation or the aqueous spray liquor according to the invention can be used for controlling undesired vegetation on crop area and on non-crop areas.

The herbicidal formulation or the aqueous spray liquor according to the invention controls undesired plant growth on uncultivated surfaces very well, particularly at high application rates. In cultures such as wheat, rice, corn, soya and cotton, it is effective against weeds and harmful grasses without notably damaging the cultivated plants. This effect arises primarily at low application rates.

The herbicidal formulation or the aqueous spray liquor allows for very efficiently control undesired vegetation on non-crop area and in crops. On non-crop area very efficient control is achieved at high application rates. Depending on the herbicide active compound, application of the spray liquor allows for efficient control of broad-leafed weeds and grass weeds in crops such as wheat, rice, corn, soybeans and cotton without causing any significant damage to the crop plants. This effect is mainly observed at low rates of application.

The spray liquor is generally applied to the undesired plants mainly by spraying the leaves. Here, the application can be carried out by customary spraying techniques using spray liquor amounts of from about 100 to 1000 l/ha. Application of the spray liquor can be done before, during and/or after, preferably during and/or after, the emergence of the undesirable plants. When employed in plant protection, the amounts of glufosinate or salt thereof without formulation auxiliaries, are, depending on the kind of effect desired, from 0.001 to 2 kg per ha, preferably from 0.005 to 2 kg per ha, more preferably from 0.05 to 0.9 kg per ha and in particular from 0.1 to 0.75 kg per ha.

Depending on the particular application method, the herbicidal formulation or the aqueous spray liquor according to the invention can also be used in a further number of cultivated plants for eliminating undesired plants. The following cultures, for example, are contemplated: Allium cepa, Ananas comosus, Arachis hypogaea, Asparagus officinalis, Beta vulgaris spec. altissima, Beta vulgaris spec. rapa, Brassica napus var. napus, Brassica napus var. napobrassica, Brassica rapa var. silvestris, Camellia sinensis, Carthamus tinctorius, Caryailli Boinensis, Citrus limon, Citrus sinensis, Coffea arabica (Coffea canephora, Coffea liberica), Cucumis sativus, Cynodon dactylon, Daucus carota, Elaeis guineensis, Fragaria vesca, Glycine max, Gossypium hirsutum, (Gossypium arboreum, Gossypium herbaceum, Gossypium vitifolium), Helianthusannuus, Hevea brasiliensis, Hordeum vulgare, Humulus lupulus, Ipomoea batatas, Juglans regia, Lens culinaris, Linum usitatissimum, Lycopersicon lycopersicum, Malus spec., Manihot esculenta, Medicago sativa, Musa spec., Nicotiana tabacum (N. rustica), Olea europaea, Oryza sativa, Phaseolus lunatus, Phaseolus vulgaris, Picea abies, Pinus spec., Pisum sativum, Prunus avium, Prunus persica, Pyrus communis, Ribes sylvestre, Ricinus communis, Saccharum officinarum, Secale cereale, Solanum tuberosum, Sorghum bicolor (s. vulgare), Theobroma cacao, Trifolium pratense, Tritium aestivum, Tritium durum, Vicia faba, Vitis vinifera and Zea mays.

Moreover, the herbicidal formulation or the aqueous spray liquor can also be used in cultures which are tolerant to the effect of herbicides through cultivation including genetic methods. Moreover, the herbicidal formulation or the aqueous spray liquor according to the invention can also be used in cultures which are tolerant to insects or fungal attack through cultivation including genetic methods.

The term "crops" as used herein includes also (crop) plants which have been modified by mutagenesis or genetic engineering in order to provide a new trait to a plant or to modify an already present trait. Mutagenesis includes techniques of random mutagenesis using X-rays or mutagenic chemicals, but also techniques of targeted mutagenesis, in order to create mutations at a specific locus of a plant genome. Targeted mutagenesis techniques frequently use oligonucleotides or proteins like CRISPR/Cas, zinc-finger nucleases, TALENs or meganucleases to achieve the targeting effect. Genetic engineering usually uses recombinant DNA techniques to create modifications in a plant genome which under natural circumstances cannot readily be obtained by cross breeding, mutagenesis or natural recombination. Typically, one or more genes are integrated into the genome of a plant in order to add a trait or improve a trait. These integrated genes are also referred to as transgenes in the art, while plant comprising such transgenes are referred to as transgenic plants. The process of plant transformation usually produces several transformation events, which differ in the genomic locus in which a transgene has been integrated. Plants comprising a specific transgene on a specific genomic locus are usually described as comprising a specific "event", which is referred to by a specific event name. Traits which have been introduced in plants or have been modified include in particular herbicide tolerance, insect resistance, increased yield and tolerance to abiotic conditions, like drought.

Herbicide tolerance has been created by using mutagenesis as well as using genetic engineering. Plants which have been rendered tolerant to acetolactate synthase (ALS) inhibitor herbicides by conventional methods of mutagenesis and breeding comprise plant varieties commercially available under the name Clearfield^{®}. However, most of the herbicide tolerance traits have been created via the use of transgenes.

Herbicide tolerance has been created to glyphosate, glufosinate, 2,4-D, dicamba, oxynil herbicides, like bromoxynil and ioxynil, sulfonylurea herbicides, ALS inhibitor herbicides and 4-hydroxyphenylpyruvate dioxygenase (HPPD) inhibitors, like isoxaflutole and mesotrione.

Transgenes which have been used to provide herbicide tolerance traits comprise: for tolerance to glyphosate: cp4 epsps, epsps grg23ace5, mepsps, 2mepsps, gat4601, gat4621 and goxv247, for tolerance to glufosinate: pat and bar, for tolerance to 2,4-D: aad-1 and aad-12, for tolerance to dicamba: dmo, for tolerance to oxynil herbicies: bxn, for tolerance to sulfonylurea herbicides: zm-hra, csr1-2, gm-hra, S4-HrA, for tolerance to ALS inhibitor herbicides: csr1-2, for tolerance to HPPD inhibitor herbicides: hppdPF, W336 and avhppd-03.

Transgenic corn events comprising herbicide tolerance genes are for example, but not excluding others, DAS40278, MON801, MON802, MON809, MON810, MON832, MON87411, MON87419, MON87427, MON88017, MON89034, NK603, GA21, MZHG0JG, HCEM485, VCO-Ø1981-5, 676, 678, 680, 33121,4114, 59122, 98140, Bt10, Bt176, CBH-351, DBT418, DLL25, MS3, MS6, MZIR098, T25, TC1507 and TC6275.

Transgenic soybean events comprising herbicide tolerance genes are for example, but not excluding others, GTS 40-3-2, MON87705, MON87708, MON87712, MON87769, MON89788, A2704-12, A2704-21, A5547-127, A5547-35, DP356043, DAS44406-6, DAS68416-4, DAS-81419-2, GU262, SYHTØH2, W62, W98, FG72 and CV127.

Transgenic cotton events comprising herbicide tolerance genes are for example, but not excluding others, 19-51a, 31707, 42317, 81910, 281-24-236, 3006-210-23, BXN 10211, BXN10215, BXN10222, BXN10224, MON1445, MON1698, MON88701, MON88913, GHB119, GHB614, LLCotton25, T303-3 and T304-40.

Transgenic canola events comprising herbicide tolerance genes are for example, but not excluding others, MON88302, HCR-1, HCN10, HCN28, HCN92, MS1, MS8, PHY14, PHY23, PHY35, PHY36, RF1, RF2 and RF3.

Insect resistance has mainly been created by transferring bacterial genes for insecticidal proteins to plants. Transgenes which have most frequently been used are toxin genes of *Bacillus spec.* and synthetic variants thereof, like cry1A, cry1Ab, cry1Ab-Ac, cry1Ac, cry1A.105, cry1F, cry1Fa2, cry2Ab2, cry2Ae, mcry3A, ecry3.1Ab, cry3Bb1, cry34Ab1, cry35Ab1, cry9C, vip3A(a), vip3Aa20. However, also genes of plant origin have been transferred to other plants. In particular genes coding for protease inhibitors, like CpTI and pinll. A further approach uses transgenes in order to produce double stranded RNA in plants to target and downregulate insect genes. An example for such a transgene is dvsnf7.

Transgenic corn events comprising genes for insecticidal proteins or double stranded RNA are for example, but not excluding others, Bt10, Bt11, Bt176, MON801, MON802, MON809, MON810, MON863, MON87411, MON88017, MON89034, 33121, 4114, 5307, 59122, TC1507, TC6275, CBH-351, MIR162, DBT418 and MZIR098.

Transgenic soybean events comprising genes for insecticidal proteins are for example, but not excluding others, MON87701, MON87751 and DAS-81419.

Transgenic cotton events comprising genes for insecticidal proteins are for example, but not excluding others, SGK321, MON531, MON757, MON1076, MON15985, 31707, 31803, 31807, 31808, 42317, BNLA-601, Event1, COT67B, COT102, T303-3, T304-40, GFM Cry1A, GK12, MLS 9124, 281-24-236, 3006-210-23, GHB119 and SGK321.

Increased yield has been created by increasing ear biomass using the transgene athb17, being present in corn event MON87403, or by enhancing photosynthesis using the transgene bbx32, being present in the soybean event MON87712.

Crops comprising a modified oil content have been created by using the transgenes: gm-fad2-1, Pj.D6D, Nc.Fad3, fad2-1A and fatb1-A. Soybean events comprising at least one of these genes are: 260-05, MON87705 and MON87769.

Tolerance to abiotic conditions, in particular to tolerance to drought, has been created by using the transgene cspB, comprised by the corn event MON87460 and by using the transgene Hahb-4, comprised by soybean event IND-ØØ41Ø-5.

Traits are frequently combined by combining genes in a transformation event or by combining different events during the breeding process. Preferred combination of traits are herbicide tolerance to different groups of herbicides, insect tolerance to different kind of insects, in particular tolerance to lepidopteran and coleopteran insects, herbicide tolerance with one or several types of insect resistance, herbicide tolerance with increased yield as well as a combination of herbicide tolerance and tolerance to abiotic conditions.

Plants comprising singular or stacked traits as well as the genes and events providing these traits are well known in the art. For example, detailed information as to the mutagenized or integrated genes and the respective events are available from websites of the organizations "International Service for the Acquisition of Agri-biotech Applications (ISAAA)" (http://www.isaaa.org/gmapprovaldatabase) and the "Centerfor Environmental Risk Assessment (CERA)" (http://cera-gmc.org/GMCropDatabase), as well as in patent applications, like EP3028573 and WO2017/011288.

The use the spray liquors according to the invention on crops may result in effects which are specific to a crop comprising a certain gene or event. These effects might involve changes in growth behavior or changed resistance to biotic or abiotic stress factors. Such effects may in particular comprise enhanced yield, enhanced resistance or tolerance to insects, nematodes, fungal, bacterial, mycoplasma, viral or viroid pathogens as well as early vigour, early or delayed ripening, cold or heat tolerance as well as changed amino acid or fatty acid spectrum or content.

Furthermore, plants are also covered that contain by the use of recombinant DNA techniques a modified amount of ingredients or new ingredients, specifically to improve raw material production, e.g., potatoes that produce increased amounts of amylopectin (e.g. Amflora^{®} potato, BASF SE, Germany).

Furthermore, it has been found that the combination of the compound of formula (I) and the herbicide may also be suitable for the defoliation and/or desiccation of plant parts, for which crop plants such as cotton, potato, oilseed rape, sunflower, soybean or field beans, in particular cotton, are suitable. In this regard, herbicidal compositions have been found for the desiccation and/or defoliation of plants, processes for preparing these compositions, and methods for desiccating and/or defoliating plants using the herbicidal compositions according to the invention.

As desiccants, herbicidal compositions according to the invention are suitable in particular for desiccating the above-ground parts of crop plants such as potato, oilseed rape, sunflower and soybean, but also cereals. This makes possible the fully mechanical harvesting of these important crop plants.

Also of economic interest is the facilitation of harvesting, which is made possible by concentrating within a certain period of time the dehiscence, or reduction of adhesion to the tree, in citrus fruit, olives and other species and varieties of pomaceous fruit, stone fruit and nuts. The same mechanism, i.e. the promotion of the development of abscission tissue between fruit part or leaf part and shoot part of the plants is also essential for the controlled defoliation of useful plants, in particular cotton.

Moreover, a shortening of the time interval in which the individual cotton plants mature leads to an increased fiber quality after harvesting.

The combination of the compound of the formula (I) and the herbicide may be applied in or on permanent cropland, or on permanent crops. A permanent crop is one produced from plants which last for many seasons, rather than being re-planted after each harvest. Permanent crops are grown on permanent crop land in the form of agricultural land that includes grasslands and shrublands, e.g. used to grow grape vines or coffee; orchards used to grow fruit or olives; and forested plantations, e.g. used to grow nuts or rubber. It does not include, however, tree farms intended to be used for wood or timber.

Preferred permanent croplands in the context of the present invention are plantations, grasslands and shrublands. Preferably, the permanent crops in the context of the present invention are plantation crops, and preferably are selected from the group consisting fruit crops and orchard crops (preferably fruit trees, citrus trees, mango trees, olive trees, grape vines, coffee, cocoa, tea, and berries (such as strawberries, raspberries, blueberries and currants)), Musaceae sp. crops (for example banana or plantain crops), nut trees (preferably almond trees, walnut trees, pistachio trees, pecan trees, hazelnut trees), oil palm trees, rubber trees, sugarcane and cotton.

More preferably, the permanent crops are fruit trees (preferably pome fruit trees and stone fruit trees; preferred fruit trees are apple trees, pear trees, apricot trees, plum trees, cherry trees, peach trees), olive trees, grape vines, coffee, tea), Musaceae sp. crops (preferably banana crops or plantain crops), nut trees (preferably almond trees, walnut trees, pistachio trees, pecan trees, hazelnut trees), oil palm trees, rubber trees, and citrus crops (preferably lemon, orange or grapefruit crops). Even more preferably, the permanent crops are selected from the group consisting of apple trees, pear trees, apricot trees, plum trees, cherry trees, peach trees, olive trees, grape vines, coffee, tea, banana crops, nut trees (preferably almond trees, walnut trees, pistachio trees), oil palm trees, rubber trees, and citrus crops (preferably lemon, orange or grapefruit crops). Particularly preferably, the permanent crops are selected from the group consisting of apple trees, pear trees, apricot trees, plum trees, cherry trees, peach trees, olive trees, grape vines, coffee, tea, banana crops, almond trees, walnut trees, oil palm trees, rubber trees, lemon crops, orange crops and grapefruit crops.

The combination of the compound of the formula (I) and the herbicide may also be applied on row crops and as well on specialty crops.

Row crops can be planted in rows wide enough to allow it to be tilled or otherwise cultivated by agricultural machinery, machinery tailored for the seasonal activities of row crops. The particularity of row crops is that they are planted and cultivated on a seasonal or yearly basis. Therefore, such crops yield products and profit relatively quickly and predictably. A row crop is one produced from plants which last for many seasons, rather than being re-planted after each harvest. Examples of row crops include soybeans, corn, canola, cotton, cereals or rice, but as well sunflower, potato, dry bean, field pea, flax, safflower, buckwheat and sugar beets.

Specialty crops are to be understood as fruits, vegetables or other speciality or plantation permanent crops such as trees, nuts, vines, (dried) fruits, ornamentals, oil palm, banana, rubber and the like, Horticulture and nursery crops, including floriculture, may also fall under the definition of speciality crops. Vegetable crops includes for example aubergine, beans, bell pepper, cabbage, chili, cucumber, eggplant, lettuce, melon, onion, potato, sweet potato, spinach and tomato. Plants being considered specialty crops are in general intensively cultivated. For weed control in vegetable crops, it may be desirable to shield the crops from contact with the spray solution that contains the herbicidal mixture according to the present invention.

In general, the crops which may be treated with the combination of the compound of the formula (I) and the herbicide may be of conventional origin or may be herbicide tolerant crops, preferably crops, which are tolerant at least against one of glufosinate, glyphosate and/or dicamba. The combination of the compound of the formula (I) and the herbicide shows high herbicidal effects also against select crop plants, such as barley and soybean. This effect can be used to control crop plants in crop rotation methods of previously grown crop cultures. Typically, residual crop plants from previous rotation cycles remain after harvest and continue to grow within the subsequently grown crop variety. This reduces the yield since the crop plants of two different crop rotation cycles compete on the same locus of growth. The combination of the compound of the formula (I) and the herbicide may thus be applied to control residual crop plants from previous crop rotation cycles to allow for a homogeneous coverage with the subsequent crop plant.

In a preferred embodiment, the combination of the compound of the formula (I) and the herbicide is applied once, twice or three times per Gregorian calendar year, i.e. in one application, in two applications or in three applications per year according to the Gregorian calendar. In a preferred embodiment, the herbicidal composition is applied twice per Gregorian calendar year, i.e. in two applications per year according to the Gregorian calendar. In an alternatively preferred embodiment, the combination of the compound of the formula (I) and the herbicide is applied one time per Gregorian calendar year, i.e. in one application per year according to the Gregorian calendar. In a preferred embodiment, the herbicidal composition is applied one time in about 12 months, i.e. in one application in about 12 months. In an alternative preferred embodiment, the combination of the compound of the formula (I) and the herbicide is applied between one and ten times per Gregorian calendar year, i.e. in up to ten applications per year according to the Gregorian calendar. This alternative preferred method is of particular usefulness in permanent crops, in particular those grown under tropical conditions; in which case weeds grow vigorously at any time of the year, and herbicide applications are to be repeated as soon as the previous treatment loses its effectiveness and weeds start to regrow.

The invention includes the use and methods of application of the combination of the compound of the formula (I) and the herbicide for controlling undesirable vegetation in crops in a burndown program, wherein the crop is produced by genetic engineering or by breeding, are tolerant to one or more herbicides and/or resistant to pathogens such as plant-pathogenous fungi, and/or to attack by insects; preferably tolerant to glufosinate.

Preferred are crops, which are tolerant to glufosinate, wherein the glufosinate tolerant crop plant is preferably selected from the group consisting of rice, canola, soybean, corn and cotton plants.

Transgenic corn events comprising glufosinate tolerance genes are for example, but not excluding others, 5307 × MIR604 × Bt11 × TC1507 × GA21 × MIR162 (event code: SYN-05307-1 × SYN-IR6Ø4-5 × SYN-BTØ11-1 × DAS-Ø15Ø7-1 × MON-ØØØ21-9 × SYN-IR162-4, gene: pat, e.g. commercially available as Agrisure^{®} Duracade^{™} 5222), 59122 (event code: DAS-59122-7, gene: pat, e.g. commercially available as Herculex^{™} RW), 5307 × MIR604 × Bt11 × TC1507 × GA21 (event code: SYN-Ø53Ø7-1 × SYN-IR6Ø4-5 × SYN-BTØ11-1 × DAS-Ø15Ø7-1 × MON-ØØØ21-9, gene: pat, e.g. commercially available as Agrisure^{®} Duracade^{™} 5122), 59122 × NK603 (event code: DAS-59122-7 × MON-ØØ6Ø3-6, gene: pat, e.g. commercially available as Herculex^{™} RW Roundup Ready^{™} 2), Bt10 (gene: pat, e.g. commercially available as Bt10), Bt11 (X4334CBR, X4734CBR) (event code: SYN-BTØ11-1, gene: pat, e.g. commercially available as Agrisure^{™} CB/LL), BT11 × 59122 × MIR604 × TC1507 × GA21 (event code: SYN-BTØ11-1 × DAS-59122-7 × SYN-IR6Ø4-5 × DAS-Ø15Ø7-1 × MON-ØØØ21-9, gene: pat, e.g. commercially available as Agrisure^{®} 3122), Bt11 × GA21 (event code: SYN-BTØ11-1 × MON-ØØØ21-9, gene: pat, e.g. commercially available as Agrisure^{™} GT/CB/LL), Bt11 × MIR162 (event code: SYN-BTØ11-1 × SYN-IR162-4, gene: pat, e.g. commercially available as Agrisure^{®} Viptera^{™} 2100), Bt11 × MIR162 × GA21 (event code: SYN-BTØ11-1 × SYN-IR162-4 × MON-ØØØ21-9, gene: pat, e.g. commercially available as Agrisure^{®} Viptera^{™} 3110), BT11 × MIR162 × MIR604 (event code: SYN-BTØ11-1 × SYN-IR162-4 × SYN-IR6Ø4-5, gene: pat, e.g. commercially available as Agrisure^{®} Viptera^{™} 3100), Bt11 × MIR162 × MIR604 × GA21 (event code: SYN-BTØ11-1 × SYN-IR162-4 × SYN-IR6Ø4-5 × MON-ØØØ21-9, gene: pat, e.g. commercially available as Agrisure^{®} Viptera^{™} 3111, Agrisure^{®} Viptera^{™} 4), Bt11 × MIR162 × TC1507 × GA21 (event code: SYN-BTØ11-1 × SYN-IR162-4 × DAS-Ø15Ø7-1 × MON-ØØØ21-9, gene: pat, e.g. commercially available as Agrisure^{™} Viptera 3220), Bt11 × MIR604 (event code: SYN-BTØ11-1 × SYN-IR6Ø4-5, gene: pat, e.g. commercially available as Agrisure^{™} CB/LL/RW), BT11 × MIR604 × GA21 (event code: SYN-BTØ11-1 × SYN-IR6Ø4-5 × MON-ØØØ21-9, gene: pat, e.g. commercially available as Agrisure^{™} 3000GT), Bt176 (176) (event code: SYN-EV176-9, gene: bar, e.g. commercially available as NaturGard KnockOut^{™}, Maximized), CBH-351 (event code: ACS-ZMØØ4-3, gene: bar, e.g. commercially available as Starlink^{™} Maize), DBT418 (event code: DKB-89614-9, gene: bar, e.g. commercially available as Bt Xtra^{™} Maize), MON89034 × TC1507 × MON88017 × 59122 (event code: MON-89Ø34-3 × DAS-Ø15Ø7-1 × MON-88Ø17-3 × DAS-59122-7, gene: pat, e.g. commercially available as Genuity^{®} SmartStax^{™}), MON89034 × TC1507 × NK603 (event code: MON-89Ø34-3 × DAS-01507-1 × MON-ØØ6Ø3-6, gene: pat, e.g. commercially available as Power Core^{™}), NK603 × T25 (event code: MON-ØØ6Ø3-6 × ACS-ZMØØ3-2, gene: pat, e.g. commercially available as Roundup Ready^{™} Liberty Link^{™} Maize), T14 (event code: ACS-ZMØØ2-1, gene: pat, e.g. commercially available as Liberty Link^{™} Maize), T25 (event code: ACS-ZMØØ3-2, gene: pat, e.g. commercially available as Liberty Link^{™} Maize), T25 × MON810 (event code: ACS-ZMØØ3-2 × MON-ØØ81Ø-6, gene: pat, e.g. commercially available as Liberty Link^{™} Yieldgard^{™} Maize), TC1507 (event code: DAS-01507-1, gene: pat, e.g. commercially available as Herculex^{™} I, Herculex^{™} CB), TC1507 × 59122 × MON810 × MIR604 × NK603 (event code: DAS-Ø15Ø7-1 × DAS-59122-7 × MON-00810-6 × SYN-IR6Ø4-5 × MON-ØØ6Ø3, gene: pat, e.g. commercially available asOptimum^{™} Intrasect Xtreme), TC1507 × 59122 (event code: DAS-Ø15Ø7-1 × DAS-59122-7, gene: pat, e.g. commercially available as Herculex XTRA^{™}), TC1507 × 59122 × MON810 × NK603 (event code: DAS-Ø15Ø7-1 × DAS-59122-7 × MON-ØØ81Ø-6 × MON-ØØ6Ø3-6, gene: pat, e.g. commercially available as Optimum^{™} Intrasect XTRA), TC1507 × 59122 × NK603 (event code: DAS-Ø15Ø7-1 × DAS-59122-7 × MON-ØØ6Ø3-6, gene: pat, e.g. commercially available as Herculex XTRA^{™} RR), TC1507 × MIR604 × NK603 (event code: DAS-Ø15Ø7-1 × SYN-lR6Ø4-5 × MON-ØØ6Ø3-6, gene: pat, e.g. commercially available as Optimum^{™} TRIsect), TC1507 × MON810 × NK603 (event code: DAS-Ø15Ø7-1 × MON-ØØ81Ø-6 × MON-ØØ6Ø3-6, gene: pat, e.g. commercially available as Optimum^{™} Intrasect), TC1507 × NK603 (event code: DAS-Ø15Ø7-1 × MON-ØØ6Ø3-6, gene: pat, e.g. commercially available as Herculex^{™} I RR), 3272 × Bt11 (event code:, SYN-E3272-5 × SYN-BTØ11-1 gene: pat), 3272 × Bt11 × GA21 (event code: SYN-E3272-5 × SYN-BTØ11-1 × MON-00021-9, gene: pat), 3272 × Bt11 × MIR604 (event code: SYN-E3272-5 × SYN-BTØ11-1 × SYN-IR6Ø4-5, gene: pat), 3272 × BT11 × MIR604 × GA21 (event code: SYN-E3272-5 × SYN-BTØ11-1 × SYN-IR6Ø4-5 × MON-ØØØ21-9, gene: pat), 33121 (event code: DP-Ø33121-3, gene: pat), 4114 (event code: DP-ØØ4114-3, gene: pat), 59122 × GA21 (event code: DAS-59122-7 × MON-ØØØ21-9, gene: pat), 59122 × MIR604 (event code: DAS-59122-7 × SYN-IR6Ø4-5, gene: pat), 5307 × MIR604 × Bt11 × TC1507 × GA21 × MIR162 (event code:, gene: pat), 59122 × MIR604 × GA21 (event code: DAS-59122-7 × SYN-IR6Ø4-5 × MON-ØØØ21-9, gene: pat), 59122 × MIR604 × TC1507 (event code: DAS-59122-7 × SYN-IR6Ø4-5 × DAS-Ø15Ø7-1, gene: pat), 59122 × MIR604 × TC1507 × GA21 (event code:, gene: pat), (event code: DAS-59122-7 × SYN-IR6Ø4-5 × DAS-01507-1 × MON-ØØØ21-9, gene: pat), 59122 × MON810 (event code: DAS-59122-7 × MON-ØØ81Ø-6, gene: pat), 59122 × MON810 × NK603 (event code: DAS-59122-7 × MON-ØØ81Ø-6 × MON-ØØ6Ø3-6, gene: pat), 59122 × TC1507 × GA21 (event code: DAS-59122-7 × DAS-Ø15Ø7-1 × MON-ØØØ21-9, gene: pat), 676 (event code: PH-ØØØ676-7, gene: pat), 678 (event code: PH-ØØØ678-9, gene: pat), 680 (event code: PH-ØØØ68Ø-2, gene: pat), 98140 × 59122 (event code: DP-Ø9814Ø-6 × DAS-59122-7, gene: pat), 98140 × TC1507 (event code: DP-Ø9814Ø-6 × DAS-Ø15Ø7-1, gene: pat), 98140 × TC1507 × 59122 (event code: DP-Ø9814Ø-6 × DAS-Ø15Ø7-1 × DAS-59122-7, gene: pat), 59122 × MON88017 (event code: DAS-59122-7 × MON-88Ø17-3, gene: pat), Bt11 × 59122 (event code: SYN-BTØ11-1 × DAS-59122-7, gene: pat), Bt11 × 59122 × GA21 (event code: SYN-BTØ11-1 × DAS-59122-7 × MON-ØØØ21-9, gene: pat), Bt11 × 59122 × MIR604 (event code: SYN-BTØ11-1 × DAS-59122-7 × SYN-IR6Ø4-5, gene: pat), Bt11 × 59122 × MIR604 × GA21 (event code: SYN-BTØ11-1 × DAS-59122-7 × SYN-IR6Ø4-5 × MON-ØØØ21-9, gene: pat), Bt11 × 59122 × MIR604 × TC1507 (event code: Bt11 × 59122 × MIR604 × TC1507, gene: pat), Bt11 × 59122 × TC1507 (event code: SYN-BTØ11-1 × DAS-59122-7 × DAS-Ø15Ø7-1, gene: pat), Bt11 × 59122 × TC1507 × GA21 (event code: SYN-BTØ11-1 × DAS-59122-7 × DAS-Ø15Ø7-1 × MON-ØØØ21-9, gene: pat), Bt11 × MIR162 × TC1507 (event code: SYN-BTØ11-1 × SYN-IR162-4 × DAS-01507-1, gene: pat), Bt11 × MIR604 × TC1507 (event code: SYN-BTØ11-1 × SYN-IR6Ø4-5 × DAS-Ø15Ø7-1, gene: pat), Bt11 × TC1507 (event code: SYN-BTØ11-1 × DAS-Ø15Ø7-1, gene: pat), Bt11 × TC1507 × GA21 (event code: SYN-BTØ11-1 × DAS-01507-1 × MON-ØØØ21-9, gene: pat), GA21 × T25 (event code: MON-ØØØ21-9 × ACS-ZMØØ3-2, gene: pat), MIR162 × TC1507 (event code: SYN-IR162-4 × DAS-01507-1, gene: pat), MIR162 × TC1507 × GA21 (event code: SYN-IR162-4 × DAS-01507-1 × MON-ØØØ21-9, gene: pat), MIR604 × TC1507 (event code: SYN-IR6Ø4-5 × DAS-Ø15Ø7-1, gene: pat), MON87427 × MON89Ø34 × TC15Ø7 × MON88Ø17 × 59122 (event code: MON-87427-7 × MON-89Ø34-3 × DAS-Ø15Ø7-1 × MON-88Ø17-3 × DAS-59122-7, gene: pat), MON89034 × 59122 (event code: MON-89Ø34-3 × DAS-59122-7, gene: pat), MON89034 × 59122 × MON88017 (event code:, gene: pat), MON89034 × TC1507 (event code: MON-89Ø34-3 × DAS-59122-7 × MON-88Ø17-3, gene: pat), (event code: MON-89Ø34-3 × DAS-Ø15Ø7-1, gene: pat), MIR604 × TC1507 (event code: SYN-IR6Ø4-5 × DAS-Ø15Ø7-1, gene: pat), MON87427 × MON89Ø34 × TC15Ø7 × MON88Ø17 × 59122 (event code: MON-87427-7 × MON-89Ø34-3 × DAS-Ø15Ø7-1 × MON-88Ø17-3 × DAS-59122-7, gene: pat), MON89034 × 59122 (event code: MON-89Ø34-3 × DAS-59122-7, gene: pat), MON89034 × 59122 × MON88017 (event code:, gene: pat), MON89034 × TC1507 (event code: MON-89Ø34-3 × DAS-59122-7 × MON-88017-3, gene: pat), (event code: MON-89Ø34-3 × DAS-Ø15Ø7-1, gene: pat), DLL25 (B16) (event code: DKB-8979Ø-5, gene: bar), MIR604 × TC1507 (event code: SYN-IR6Ø4-5 × DAS-Ø15Ø7-1, gene: pat), MON87427 × MON89Ø34 × TC15Ø7 × MON88Ø17 × 59122 (event code: MON-87427-7 × MON-89Ø34-3 × DAS-Ø15Ø7-1 × MON-88Ø17-3 × DAS-59122-7, gene: pat), MON89034 × 59122 (event code: MON-89Ø34-3 × DAS-59122-7, gene: pat), MON89034 × 59122 × MON88017 (event code: MON-89Ø34-3 × DAS-59122-7 × MON-88Ø17-3, gene: pat), MON89034 × TC1507 (event code: MON-89Ø34-3 × DAS-Ø15Ø7-1, gene: pat), MON89034 × TC1507 × 59122 (event code: MON-89Ø34-3 × DAS- 01507-1 × DAS-59122-7, gene: pat), MON89034 × TC1507 × MON88017 (event code: MON-89Ø34-3 × DAS-Ø15Ø7-1 × MON-88Ø17-3, gene: pat), MON89034 × TC1507 × MON88017 × 59122 × DAS40278 (event code: MON-89034-3 × DAS-Ø15Ø7-1 × MON-88Ø17-3 × DAS-59122-7 × DAS-4Ø278-9, gene: pat), MON89034 × TC1507 × MON88017 × DAS40278 (event code: MON-89Ø34-3 × DAS-01507-1 × MON-88Ø17-3 × DAS-59122-7 × DAS-4Ø278-9, gene: pat), MON89034 × TC1507 × NK603 × DAS40278 (event code: MON-89Ø34-3 × DAS-Ø15Ø7-1 × MON-ØØ6Ø3-6 × DAS-4Ø278-9, gene: pat), NK603 × MON810 × 4114 × MIR 604 (event code: MON-00603-6 × MON-00810-6 × DP004114-3 × SYN-IR604-4, gene: pat), TC1507 × MON810 × MIR604 × NK603 (event code: DAS-Ø15Ø7-1 × MON-ØØ81Ø-6 × SYN-IR6Ø4-5 × MON-ØØ6Ø3-6, gene: pat), TC1507 × 59122 × MON810 (event code: DAS-01507-1 × DAS-59122-7 × MON-ØØ81Ø-6, gene: pat), TC1507 × 59122 × MON88017 (event code: DAS-Ø15Ø7-1 × DAS-59122-7 × MON-88Ø17-3, gene: pat), TC1507 × GA21 (event code: DAS-Ø15Ø7-1 × MON-ØØØ21-9, gene: pat), TC1507 × MON810 (event code: DAS-Ø15Ø7-1 × MON-ØØ81Ø-6, gene: pat), TC1507 × MON810 × MIR162 × NK603 (event code: DAS-Ø15Ø7-1 × MON-ØØ81Ø-6 × SYN-IR162-4 × MON-ØØ6Ø3-6, gene: pat), 3272 × Bt11 × MIR604 × TC1507 × 5307 × GA21 (event code: SYN-E3272-5 × SYN-BTØ11-1 × SYN-IR6Ø4-5 × DAS-Ø15Ø7-1 × SYN-Ø53Ø7-1 × MON-ØØØ21-9, gene: pat), TC1507 × MIR162 × NK603 (event code: DAS-Ø15Ø7-1 × SYN-IR162-4 × MON-ØØ6Ø3-6, gene: pat), TC1507 × MON810 × MIR162 (event code: DAS-Ø15Ø7-1 × MON-ØØ81Ø-6 × SYN-IR162-4, gene: pat), MON87419 (event code: MON87419-8, gene: pat), TC1507 × MON88017 (event code: DAS-Ø15Ø7-1 × MON-88Ø17-3, gene: pat), TC6275 (event code: DAS-Ø6275-8, gene: bar), MZHG0JG (event code: SYN-ØØØJG-2, gene: pat), MZIR098 (event code: SYN-ØØØ98-3, gene: pat), Bt11 × MIR162 × MON89034 (event code: SYN-BTØ11-1 × SYN-IR162-4 × MON-89Ø34-3, gene: pat) and Bt11 × MIR162 × MON89Ø34 × GA21 (event code: SYN-BTØ11-1 × SYN-IR162-4 × MON-89Ø34-3 × MON-ØØØ21-9, gene: pat), 59122 × DAS40278 (event code: DAS-59122-7 × DAS-4Ø278-9, gene: pat), 59122 × MON810 × MIR604 (event code: DAS-59122-7 × MON-ØØ81Ø-6 × SYN-IR6Ø4-5, gene: pat), 59122 × MON810 × NK603 × MIR604 (event code: DAS-59122-7 × MON-ØØ81Ø-6 × MON-ØØ6Ø3-6 × SYN-IR6Ø4-5, gene: pat), 59122 × MON88017 × DAS40278 (event code: DAS-59122-7 × MON-88017-3 × DAS-4Ø278-9, gene: pat), 59122 × NK603 × MIR604 (event code: DAS-59122-7 × MON-ØØ6Ø3-6 × SYN-IR6Ø4-5, gene: pat), Bt11 × 5307 (event code: SYN-BTØ11-1 × SYN-Ø53Ø7-1, gene: pat), Bt11 × 5307 × GA21 (event code: SYN-BTØ11-1 × SYN-Ø53Ø7-1 × MON-ØØØ21-9, gene: pat), Bt11 × MIR162 x5307 (event code: SYN-BTØ11-1 × SYN-IR162-4 × SYN-Ø53Ø7-1, gene: pat), Bt11 × MIR162 × 5307 × GA21 (event code: SYN-BTØ11-1 × SYN-IR162-4 × SYN-Ø53Ø7-1 × MON-ØØØ21-9, gene: pat), BT11 × MIR162 × MIR604 × 5307 (event code: SYN-BTØ11-1 × SYN-IR162-4 × SYN-IR6Ø4-5 × SYN-Ø53Ø7-1, gene: pat), Bt11 × MIR162 × MIR604 × 5307 × GA21 (event code: SYN-BTØ11-1 × SYN-IR162-4 × SYN-IR6Ø4-5 × SYN-Ø53Ø7-1 xMON-00021-9, gene: pat), Bt11 × MIR162 × MIR604 × MON89034 × 5307 × GA21 (event code: SYN-BTØ11-1 × SYN-IR162-4 × SYN-IR6Ø4-5 × MON-89Ø34-3 × SYN-Ø53Ø7-1 × MON-ØØØ21-9, gene: pat), BT11 × MIR162 × MIR604 × TC1507 (event code: SYN-BTØ11-1 × SYN-IR162-4 × SYN-IR6Ø4-5 × DAS-Ø15Ø7-1, gene: pat), BT11 × MIR162 × MIR604 × TC1507 × 5307 (event code: SYN-BTØ11-1 × SYN-IR162-4 × SYN-IR6Ø4-5 × DAS-Ø15Ø7-1 × SYN-Ø53Ø7-1, gene: pat), Bt11 × MIR162 × MIR604 × TC1507 × GA21 (event code: SYN-BTØ11-1 × SYN-IR162-4 × SYN-IR6Ø4-5 × DAS-Ø15Ø7-1 × MON-ØØØ21-9, gene: pat), Bt11 × MIR162 × TC1507 × 5307 (event code: SYN-BTØ11-1 × SYN-IR162-4 × DAS-Ø15Ø7-1 × SYN-Ø53Ø7-1, gene: pat), BT11 × MIR162 × MIR604 × TC1507 × 5307 (event code: SYN-BTØ11-1 × SYN-IR162-4 × SYN-IR6Ø4-5 × DAS-Ø15Ø7-1 × SYN-Ø53Ø7-1, gene: pat), Bt11 × MIR162 × MIR604 × TC1507 × GA21 (event code: SYN-BTØ11-1 × SYN-IR162-4 × SYN-IR6Ø4-5 × DAS-Ø15Ø7-1 × MON-00021-9, gene: pat), Bt11 × MIR162 × TC1507 × 5307 (event code: SYN-BTØ11-1 × SYN-IR162-4 × DAS-Ø15Ø7-1 × SYN-Ø53Ø7-1, gene: pat), Bt11 × MIR162 × TC1507 × 5307 × GA21 (event code: SYN-BTØ11-1 × SYN-IR162-4 × DAS-Ø15Ø7-1 × SYN-05307-1 × MON-ØØØ21-9, gene: pat), Bt11 × MIR604 × 5307 (event code: SYN-BTØ11-1 × SYN-IR6Ø4-5 × SYN-Ø53Ø7-1, gene: pat), Bt11 × MIR604 × 5307 × GA21 (event code: SYN-BTØ11-1 × SYN-IR6Ø4-5 × SYN-Ø53Ø7-1 × MON-ØØØ21-9, gene: pat), Bt11 × MIR604 × TC1507 × 5307 (event code: SYN-BTØ11-1 × SYN-IR6Ø4-5 × DAS-Ø15Ø7-1 × SYN-Ø53Ø7-1, gene: pat), Bt11 × MIR604 × TC1507 × GA21 (event code: SYN-BTØ11-1 × SYN-IR6Ø4-5 × DAS-Ø15Ø7-1 × MON-ØØØ21-9, gene: pat), Bt11 × MON89034 (or Bt11 × MON89Ø34) (event code: SYN-BTØ11-1 × MON-89Ø34-3, gene: pat), Bt11 × MON89034 × GA21 (event code: SYN-BTØ11-1 × MON-89Ø34-3 × MON-ØØØ21-9, gene: pat), Bt11 × MON89Ø34 × GA21 (event code: SYN-BTØ11-1 × MON-89Ø34-3 × MON-ØØØ21-9, gene: pat), Bt11 × TC1507 × 5307 (event code: SYN-BTØ11-1 × DAS-Ø15Ø7-1 × SYN-Ø53Ø7-1, gene: pat), Bt11 × TC1507 × 5307 × GA21 (event code: SYN-BTØ11-1 × DAS-Ø15Ø7-1 × SYN-Ø53Ø7-1 × MON-ØØØ21-9, gene: pat), MIR162 × MIR604 × TC1507 × 5307 (event code: SYN-IR162-4 × SYN-IR6Ø4-5 × DAS-Ø15Ø7-1 × SYN-Ø53Ø7-1, gene: pat), MIR162 × MIR604 × TC1507 × 5307 × GA21 (event code: SYN-IR162-4 × SYN-IR6Ø4-5 × DAS-Ø15Ø7-1 × SYN-Ø53Ø7-1 × MON-00021-9, gene: pat), MIR162 × MIR604 × TC1507 × GA21 (event code: SYN-IR162-4 × SYN-IR6Ø4-5 × DAS-Ø15Ø7-1 × MON-ØØØ21-9, gene: pat), MIR162 × TC1507 × 5307 (event code: SYN-IR162-4 × DAS-Ø15Ø7-1 × SYN-Ø53Ø7-1, gene: pat), MIR162 × TC1507 × 5307 × GA21 (event code: SYN-IR162-4 × DAS-Ø15Ø7-1 × SYN-Ø53Ø7-1 × MON-ØØØ21-9, gene: pat), MIR604 × TC1507 × 5307 (event code: SYN-IR6Ø4-5 × DAS-Ø15Ø7-1 × SYN-Ø53Ø7-1, gene: pat), MIR162 × TC1507 × 5307 (event code: SYN-IR162-4 × DAS-Ø15Ø7-1 × SYN-Ø53Ø7-1, gene: pat), MIR162 × TC1507 × 5307 × GA21 (event code: SYN-IR162-4 × DAS-Ø15Ø7-1 × SYN-Ø53Ø7-1 × MON-ØØØ21-9, gene: pat), MIR604 × TC1507 × 5307 (event code: SYN-IR6Ø4-5 × DAS-Ø15Ø7-1 × SYN-Ø53Ø7-1, gene: pat), MIR604 × TC1507 × 5307 xGA21 (event code: SYN-IR6Ø4-5 × TC1507 × SYN-Ø53Ø7-1 × MON-ØØØ21-9, gene: pat), MIR604 × TC1507 × GA21 (event code: SYN-IR6Ø4-5 × TC1507 × MON-ØØØ21-9, gene: pat), MON87427 × 59122 (event code MON-87427-7 × DAS-59122-7:, gene: pat), MON87427 × MON89034 × 59122 (event code: MON-87427-7 × MON-89Ø34-3 × DAS-59122-7, gene: pat), MON87427 × MON89034 × MON88017 × 59122 (event code: MON-87427-7 × MON-89034-3 × MON-88Ø17-3 × 59122, gene: pat), MON87427 × MON89034 × TC1507 (event code: MON-87427-7 × MON-89Ø34-3 × DAS-Ø15Ø7-1, gene: pat), MON87427 × MON89034 × TC1507 × 59122 (event code: MON-87427-7 × MON-89Ø34-3 × DAS-01507-1 × DAS-59122-7, gene: pat), MON87427 × MON89034 × TC1507 × MON87411 × 59122 (event code: MON-87427-7 × MON-89Ø34-3 × DAS-Ø15Ø7-1 × MON-87411-9 × DAS-59122-7, gene: pat), MON87427 × MON89034 × TC1507 × MON87411 × 59122 × DAS40278 (event code: MON-87427-7 × MON-89Ø34-3 × DAS-Ø15Ø7-1 × MON-87411-9 × DAS-59122-7 × DAS-4Ø278-9, gene: pat), MON87427 × MON89034 × TC1507 × MON88017 (event code: MON-87427-7 × MON-89Ø34-3 × DAS-Ø15Ø7-1 × MON-88Ø17-3, gene: pat), MON87427 × TC1507 (event code: MON-87427-7 × DAS-01507-1, gene: pat), MON87427 × TC1507 × 59122 (event code: MON-87427-7 × DAS-01507-1 × DAS-59122-7, gene: pat), MON87427 × TC1507 × MON88017 (event code: MON-87427-7 × DAS-Ø15Ø7-1 × MON-88Ø17-3, gene: pat), MON87427 × TC1507 × MON88017 × 59122 (event code: MON-87427-7 × DAS-Ø15Ø7-1 × MON-88Ø17-3 × DAS-59122-7, gene: pat), MON89034 × 59122 × DAS40278 (event code: MON-89Ø34-3 × DAS-59122-7 × DAS-4Ø278-9, gene: pat), MON89034 × 59122 × MON88017 × DAS40278 (event code: MON-89Ø34-3 × DAS-59122-7 × MON-88Ø17-3 × DAS-4Ø278-9, gene: pat), MON89034 × TC1507 × 59122 × DAS40278 (event code: MON-89Ø34-3 × DAS- Ø15Ø7-1 × DAS-59122-7 × DAS-4Ø278-9, gene: pat), MON89034 × TC1507 × DAS40278 (event code: MON-89Ø34-3 × DAS-Ø15Ø7-1 × DAS-4Ø278-9, gene: pat), MON89034 × TC1507 × NK603 × MIR162 (event code: MON-89Ø34-3 × DAS-Ø15Ø7-1 × MON-ØØ6Ø3-6 × SYN-IR162-4, gene: pat), TC1507 × 5307 (event code: DAS-Ø15Ø7-1 × SYN-Ø53Ø7-1, gene: pat), TC1507 × 5307 × GA21 (event code: DAS-Ø15Ø7-1 × SYN-Ø53Ø7-1 × MON-ØØØ21-9, gene: pat), TC1507 × 59122 × DAS40278 (event code: DAS-Ø15Ø7-1 × DAS-59122-7 × DAS-4Ø278-9, gene: pat), TC1507 × 59122 × MON810 × MIR604 (event code: DAS-Ø15Ø7-1 × DAS-59122-7 × MON-ØØ81Ø-6 × SYN-IR6Ø4-5, gene: pat), TC1507 × 59122 × MON88017 × DAS40278 (event code: DAS-Ø15Ø7-1 × DAS-59122-7 × MON-88Ø17-3 × DAS-4Ø278-9, gene: pat), TC1507 × 59122 × NK603 × MIR604 (event code:, gene: pat) DAS-Ø15Ø7-1 × DAS-59122-7 × MON-ØØ6Ø3-6 × SYN-IR6Ø4-5, TC1507 × DAS40278 (event code: DAS-Ø15Ø7-1 × DAS-4Ø278-9, gene: pat), TC1507 × MON810 × MIR604 (event code: DAS-Ø15Ø7-1 × MON-ØØ81Ø-6 × SYN-IR6Ø4-5, gene: pat), TC1507 × MON810 × NK603 × MIR604 (event code: DAS-01507-1 × MON-ØØ81Ø-6 × MON-ØØ6Ø3-6 × SYN-IR6Ø4-5, gene: pat), TC1507 × MON88017 × DAS40278 (event code: DAS-Ø15Ø7-1 × MON-88Ø17-3 × DAS-4Ø278-9, gene: pat) and TC1507 × NK603 × DAS40278 (event code: DAS-Ø15Ø7-1 × MON-ØØ6Ø3-6 × DAS-4Ø278-9, gene: pat).

Transgenic soybean events comprising glufosinate tolerance genes are for example, but not excluding others, A2704-12 (event code: ACS-GMØØ5-3, gene: pat , e.g. commercially available as Liberty Link^{™} soybean), A2704-21 (event code: ACS-GMØØ4-2, gene: pat, e.g. commercially available as Liberty Link^{™} soybean), A5547-127 (event code: ACS-GMØØ6-4, gene: pat, e.g. commercially available as Liberty Link^{™} soybean), A5547-35 (event code: ACS-GMØØ8-6, gene: pat, e.g. commercially available as Liberty Link^{™} soybean), GU262 (event code: ACS-GMØØ3-1, gene: pat, e.g. commercially available as Liberty Link^{™} soybean), W62 (event code: ACS-GMØØ2-9, gene: pat, e.g. commercially available as Liberty Link^{™} soybean), W98 (event code: ACS-GMØØ1-8, gene: pat, e.g. commercially available as Liberty Link^{™} soybean), DAS68416-4 (event code: DAS-68416-4, gene: pat, e.g. commercially available as Enlist^{™} Soybean), DAS44406-6 (event code: DAS-444Ø6-6, gene: pat), DAS68416-4 × MON89788 (event code: DAS-68416-4 × MON-89788-1, gene: pat), SYHTØH2 (event code: SYN-ØØØH2-5, gene: pat), DAS81419 × DAS44406-6 (event code: DAS-81419-2 × DAS-444Ø6-6, gene: pat) and FG72 × A5547-127 (event code: MST-FGØ72-3 × ACS-GMØØ6-4, gene: pat).

Transgenic cotton events comprising glufosinate tolerance genes are for example, but not excluding others, 3006-210-23 × 281-24-236 × MON1445 (event code: DAS-21Ø23-5 × DAS-24236-5 × MON-Ø1445-2, gene: bar, e.g. commercially available as WideStrike^{™} Roundup Ready^{™} Cotton), 3006-210-23 × 281-24-236 × MON88913 (event code: DAS-21Ø23-5 × DAS-24236-5 × MON-88913-8, gene: bar, e.g. commercially available as Widestrike^{™} Roundup Ready Flex^{™} Cotton), 3006-210-23 × 281-24-236 × MON88913 × COT102 (event code: DAS-21Ø23-5 × DAS-24236-5 × MON-88913-8 × SYN-IR1Ø2-7, gene: pat, e.g. commercially available as Widestrike^{™} × Roundup Ready Flex^{™} × VIPCOT^{™} Cotton), GHB614 × LLCotton25 (event code: BCS-GHØØ2-5 × ACS-GHØØ1-3, gene: bar, e.g. commercially available as GlyTol^{™} Liberty Link^{™}), GHB614 × T304-40 × GHB119 (event code: BCS-GHØØ2-5 × BCS-GHØØ4-7 × BCS-GHØØ5-8, gene: bar, e.g. commercially available as Glytol^{™} × Twinlink^{™}), LLCotton25 (event code: ACS-GHØØ1-3, gene: bar, e.g. commercially available as ACS-GHØØ1-3), GHB614 × T304-40 × GHB119 × COT102 (event code: BCS-GHØØ2-5 × BCS-GHØØ4-7 × BCS-GHØØ5-8 × SYN-IR1Ø2-7, gene: bar, e.g. commercially available as Glytol^{™} × Twinlink^{™} × VIPCOT^{™} Cotton), LLCotton25 × MON15985 (event code: ACS-GHØØ1-3 × MON-15985-7, gene: bar, e.g. commercially available as Fibermax^{™} Liberty Link^{™} Bollgard II^{™}), T304-40xGHB119 (event code: BCS-GHØØ4-7 × BCS-GHØØ5-8, gene: bar, e.g. commercially available as TwinLink^{™} Cotton), GHB614 × T304-40 × GHB119 × COT102 (event code: BCS-GHØØ2-5 × BCS-GHØØ4-7 × BCS-GHØØ5-8 × SYN-IR1Ø2-7, gene: bar, e.g. commercially available as Glytol^{™} × Twinlink^{™} × VIPCOT^{™} Cotton), GHB119 (event code: BCS-GHØØ5-8, gene: bar), GHB614 × LLCotton25 × MON15985 (event code: CS-GHØØ2-5 × ACS-GHØØ1-3 × MON-15985-7, gene: bar), MON 88701-3 (event code: MON88701, gene: bar), T303-3 (event code: BCS-GHØØ3-6, gene: bar), T304-40 (event code: BCS-GHØØ3-6, gene: bar), (event code: BCS-GHØØ4-7, gene: bar), 81910 (event code: DAS-81910-7, gene: pat), MON8870 (event code: MON 88701-3, gene: bar), MON88701 × MON88913 (event code: MON 88701-3 × MON-88913-8, gene: bar), MON88701 × MON88913 × MON 15985 (event code: MON 88701-3 × MON-88913-8 × MON-15985-7, gene: bar), 281-24-236 × 3006-210-23 × COT102 × 81910 (event code: DAS-24236-5 × DAS-21Ø23-5 × SYN-IR1Ø2-7 × DAS-81910-7, gene: pat), COT102 × MON15985 × MON88913 × MON88701 (event code: SYN-IR1Ø2-7 × MON-15985-7 × MON-88913-8 × MON 88701-3, gene: bar) and 3006-210-23 × 281-24-236 × MON88913 × COT102 × 81910 (event code: DAS-21Ø23-5 × DAS-24236-5 × MON-88913-8 × SYN-IR1Ø2-7 × DAS-81910-7, gene: pat).

Transgenic canola events comprising glufosinate tolerance genes are for example, but not excluding others, HCN10 (Topas 19/2) (event code: , gene: bar, e.g. commercially available as Liberty Link^{™} Independence^{™}), HCN28 (T45) (event code: ACS-BNØØ8-2, gene: pat, e.g. commercially available as InVigor^{™} Canola), HCN92 (Topas 19/2 (event code: ACS-BNØØ7-1, gene: bar, e.g. commercially available as Liberty Link^{™} Innovator^{™}), MS1 (B91-4) (event code: ACS-BNØØ4-7, gene: bar, e.g. commercially available as InVigor^{™} Canola), MS1 × RF1 (PGS1) (event code: ACS-BNØØ4-7 × ACS-BNØØ1-4, gene: bar, e.g. commercially available as InVigor^{™} Canola), MS1 × RF2 (PGS2) (event code: ACS-BNØØ4-7 × ACS-BNØØ2-5, gene: bar, e.g. commercially available as InVigor^{™} Canola), MS1 × RF3 (event code: ACS-BNØØ4-7 × ACS-BNØØ3-6, gene: bar, e.g. commercially available as InVigor^{™} Canola), MS8 (event code: ACS-BNØØ5-8, gene: bar, e.g. commercially available as InVigor^{™} Canola), MS8 × RF3 (event code: ACS-BNØØ5-8 × ACS-BNØØ3-6, gene: bar, e.g. commercially available as InVigor^{™} Canola), RF1 (B93-101) (event code: ACS-BNØØ1-4, gene: bar, e.g. commercially available as InVigor^{™} Canola), RF2 (B94-2) (event code: ACS-BNØØ2-5, gene: bar, e.g. commercially available as InVigor^{™} Canola), RF3 (event code: ACS-BNØØ3-6, gene: bar, e.g. commercially available as InVigor^{™} Canola), MS1 × MON88302 (event code: ACS-BNØØ4-7 × MON-883Ø2-9, gene: bar, e.g. commercially available as InVigor^{™} × TruFlex^{™} Roundup Ready^{™} Canola), MS8 × MON88302 (event code: ACS-BNØØ5-8 × MON-883Ø2-9, gene: bar, e.g. commercially available as InVigor^{™} × TruFlex^{™} Roundup Ready^{™} Canola), RF1 × MON88302 (event code: ACS-BNØØ1-4 × MON-883Ø2-9, gene: bar, e.g. commercially available as InVigor^{™} × TruFlex^{™} Roundup Ready^{™} Canola), RF2 × MON88302 (event code: ACS-BNØØ2-5 × MON-883Ø2-9, gene: bar, e.g. commercially available as InVigor^{™} × TruFlex^{™} Roundup Ready^{™} Canola), HCN28 × MON88302 (event code: ACS-BNØØ8-2 × MON-883Ø2-9, gene: pat, e.g. commercially available as InVigor^{™} × TruFlex^{™} Roundup Ready^{™} Canola), HCN92 × MON88302 (event code: ACS-BNØØ7-1 × MON-883Ø2-9, gene: bar, e.g. commercially available as Liberty Link^{™} Innovator^{™} × TruFlex^{™} Roundup Ready^{™} Canola), HCR-1 (gene: pat), MON88302 × MS8 × RF3 (event code: MON-883Ø2-9 × ACS-BNØØ5-8 × ACS-BNØØ3-6, gene: bar), MON88302 × RF3 (event code: MON-883Ø2-9 × ACS-BNØØ3-6, gene: bar), MS8 × RF3 × GT73 (RT73) (event code:, gene: bar), PHY14 (event code: ACS-BNØØ5-8 × ACS-BNØØ3-6 × MON-ØØØ73-7, gene: bar), PHY23 (gene: bar), PHY35 (gene: bar) and PHY36 (gene: bar) and 73496 × RF3 (event code: DP-Ø73496-4 × ACS-BNØØ3-6, gene: bar).

Transgenic rice events comprising glufosinate tolerance genes are for example, but not excluding others, LLRICE06 (event code: ACS-OSØØ1-4, e.g. commercially available as Liberty Link^{™} rice), LLRICE601 (event code: BCS-OSØØ3-7, e.g. commercially available as Liberty Link^{™} rice) and LLRICE62 (event code: ACS-OSØØ2-5, e.g. commercially available as Liberty Link^{™} rice).

The application of the herbicidal formulation or the aqueous spray liquor can take place in the pre-emergence or in the post-emergence method. If the herbicidal formulation is not very compatible for certain cultivated plants, then application techniques can be employed in which the herbicidal formulation is sprayed using the spraying device such that the leaves of the sensitive cultivated plants are where possible not affected, whereas the herbicidal formulation reaches the leaves of undesired plants growing underneath or the uncovered soil surface (post-directed, lay-by).

The application of the combination of the herbicide and the copolymer CP provides an outstanding herbicidal activity against a broad spectrum of economically important harmful monocotyledonous and dicotyledonous harmful plants. Also here, post-emergence application is preferred.

Specifically, examples may be mentioned of some representatives of the monocotyledonous and dicotyledonous weed flora which can be controlled by the combinations according to the invention, without the enumeration being a restriction to certain species.

In the context of the present text, reference may be made to growth stages according to the BBCH monograph "Growth stages of mono-and dicotyledonous plants", 2nd edition, 2001, ed. Uwe Meier, Federal Biological Research Centre for Agriculture and Forestry (Biologische Bundesanstalt für Land und Forstwirtschaft).

Examples of monocotyledonous harmful plants on which the glufosinate combinations act efficiently are from amongst the genera Hordeum spp., Echinochloa spp., Poa spp., Bromus spp., Digitaria spp., Eriochloa spp., Setaria spp., Pennisetum spp., Eleusine spp., Eragrostis spp., Panicum spp., Lolium spp., Brachiaria spp., Leptochloa spp., Avena spp., Cyperus spp., Axonopris spp., Sorghum spp., and Melinus spp..

Particular examples of monocotyledonous harmful plants species on which the herbicidal compositions act efficiently are selected from amongst the species Hordeum murinum, Echinochloa crus-galli, Poa annua, Bromus rubens L., Bromus rigidus, Bromus secalinus L., Digitaria sanguinalis, Digitaria insularis, Eriochloa gracilis, Setaria faberi, Setaria viridis, Pennisetum glaucum, Eleusine indica, Eragrostis pectinacea, Panicum miliaceum, Lolium multiflorum, Brachiaria platyphylla, Leptochloa fusca, Avena fatua, Cyperus compressus, Cyperus esculentes, Axonopris offinis, Sorghum halapense, and Melinus repens.

In a preferred embodiment, the herbicidal compositions are used to control monocotyledonous harmful plant species, more preferably monocoty-ledonous plants of the species Echinochloa spp., Digitaria spp., Setaria spp., Eleusine spp. and Brachiarium spp.

Examples of dicotyledonous harmful plants on which the herbicidal compositions act efficiently are from amongst the genera Amaranthus spp., Erigeron spp., Conyza spp., Polygonum spp., Medicago spp., Mollugo spp., Cyclospermum spp., Stellaria spp., Gnaphalium spp., Taraxacum spp., Oenothera spp., Amsinckia spp., Erodium spp., Erigeron spp., Senecio spp., Lamium spp., Kochia spp., Chenopodium spp., Lactuca spp., Malva spp., Ipomoea spp., Brassica spp., Sinapis spp., Urtica spp., Sida spp, Portulaca spp., Richardia spp., Ambrosia spp., Calandrinia spp., Sisymbrium spp., Sesbania spp., Capsella spp., Sonchus spp., Euphorbia spp., Helianthus spp., Coronopus spp., Salsola spp., Abutilon spp., Vicia spp., Epilobium spp., Cardamine spp., Picris spp., Trifolium spp., Galinsoga spp., Epimedium spp., Marchantia spp., Solanum spp., Oxalis spp., Metricaria spp., Plantago spp., Tribulus spp., Cenchrus spp. Bidens spp., Veronica spp., and Hypochaeris spp..

Particular examples of dicotyledonous harmful plants species on which the herbicidal compositions act efficiently are selected from amongst the species Amaranthus spinosus, Polygonum convolvulus, Medicago polymorpha, Mollugo verticillata, Cyclospermum leptophyllum, Stellaria media, Gnaphalium purpureum, Taraxacum offi cinale, Oenothera laciniata, Amsinckia intermedia, Erodium cicutarium, Erodium moschatum, Erigeron bonariensis (Conyza bonariensis), Senecio vulgaris, Lamium amplexicaule, Erigeron canadensis, Polygonum aviculare, Kochia scoparia, Chenopodium album, Lactuca serriola, Malva parviflora, Malva neglecta, Ipomoea hederacea, Ipomoea lacunose, Brassica nigra, Sinapis arvensis, Urtica dioica, Amaranthus blitoides, Amaranthus retroflexus, Amaranthus hybridus, Amaranthus lividus, Sida spinosa, Portulaca oleracea, Richardia scabra, Ambrosia artemisiifolia, Calandrinia cau-lescens, Sisymbrium irio, Sesbania exaltata, Capsella bursa-pastoris, Sonchus oleraceus, Euphorbia maculate, Helianthus annuus, Coronopus didymus, Salsola tragus, Abutilon theophrasti, Vicia ben-ghalensis L., Epilobium paniculatum, Cardamine spp, Picris echioides, Trifolium spp., Galinsoga spp., Epimedium spp., Marchantia spp., Solanum spp., Oxalis spp., Metricaria matriccarioides, Plantago spp., Tribulus terrestris, Salsola kali, Cenchrus spp., Bidens bipinnata, Veronica spp., and Hypochaeris radicata.

In a preferred embodiment, the herbicidal compositions are used to control dicotyledonous harmful plant species, more preferably dicotyledonous plants of the species Amaranthus spp., Erigeron spp., Conyza spp., Kochia spp. and Abutilon spp.

By applying the aqueous spray liquore a large number of annual and perennial sedge weeds including Cyperus species such as purple nutsedge (Cyperus rotundus L.), yellow nutsedge (Cyperus esculentus L.), hime-kugu (Cyperus brevifolius H.), sedge weed (Cyperus microiria Steud), rice flatsedge (Cyperus iria L.), Cyperus difformis, Cyperus difformis L., Cyperus esculentus, Cyperus ferax, Cyperus flavus, Cyperus iria, Cyperus lanceolatus, Cyperus odoratus, Cyperus rotundus, Cyperus serotinus Rottb., Eleocharis acicularis, Eleocharis kuroguwai, Fimbristylis dichotoma, Fimbristylis miliacea, Scirpus grossus, Scirpus juncoides, Scirpus juncoides Roxb, Scirpus or Bolboschoenus maritimus, Scirpus or Schoenoplectus mucronatus, Scirpus planiculmis Fr. Schmidt and the like.

If the spray liquores are applied post-emergence to the green parts of the plants, growth likewise stops drastically a very short time after the treatment and the weed plants remain at the growth stage of the point of time of application, or they die completely after a certain time, so that in this manner competition by the weeds, which is harmful to the crops, is eliminated at a very early point in time and in a sustained manner.

Applying the combination of the herbicide and the copolymer CP results in a rapidly commencing and long-lasting herbicidal action. As a rule, the rainfastness of the herbicide active compounds in the combination according to the present invention is advantageous. In particular when the herbicidal compositions are employed application rates may be reduced, a broader spectrum of broad-leaved weeds and grass weeds may be controlled, the herbicidal action may take place more rapidly, the duration of action may be longer, the harmful plants may be controlled better while using only one, or few, applications, and the application period which is possible to be extended.

The abovementioned properties and advantages are of benefit for weed control practice to keep agricultural crops free from undesired competing plants and thus to safeguard and/or increase the yields from the qualitative and/or quantitative point of view. These herbicidal compositions markedly exceed the technical state of the art with a view to the properties described.

Owing to their herbicidal and plant-growth-regulatory properties, the herbicidal compositions can be employed for controlling harmful plants in genetically modified crops or crops obtained by mutation/selection. These crops are distinguished as a rule by particular, advantageous properties, such as resistances to herbicidal compositions or resistances to plant diseases or causative agents of plant diseases such as particular insects or microorganisms such as fungi, bacteria or viruses. Other particular properties relate, for example, to the harvested material with regard to quantity, quality, storability, composition and specific constituents. Thus, for example, transgenic plants are known whose starch content is increased or whose starch quality is altered, or those where the harvested material has a different fatty acid composition.

A particular aspect of the present invention also relates to a method of controlling undesired vegetation (e.g. harmful plants), which comprises applying the herbicidal compositions, preferably by the post-emergence method, to harmful or undesired plants, parts of said harmful or undesired plants, or the area where the harmful or undesired plants grow, for example the area under cultivation.

In the context of the present invention "controlling" denotes a significant reduction of the growth of the harmful plant(s) in comparison to the untreated harmful plants. Preferably, the growth of the harmful plant(s) is essentially diminished (60-79%), more preferably the growth of the harmful plant(s) is largely or fully suppressed (80-100%), and in particular the growth of the harmful plant(s) is almost fully or fully suppressed (90-100%).

Thus, in a further aspect, the present invention relates to a method for controlling undesired plant growth, and/or controlling harmful plants, comprising the step of applying the aqueous spray liquor containing a combination of the herbicide and the copolymer CP, preferably in one of the preferred embodiments defined herein, onto the undesired plants or the harmful plants, on parts of the undesired plants or the harmful plants, or on the area where the undesired plants or the harmful plants grow.

The aqueous spray liquor containing the combination of the herbicide and the copolymer CP may be used for controlling undesirable vegetation in burndown programs, in industrial vegetation management and forestry, in vegetable and perennial crops and in turf and lawn, wherein the herbicidal composition(s) can be applied pre- or post-emergence, *i.e.* before, during and/or after emergence of the undesirable plants. Preferred is the application as post-emergence treatment, i.e. during and/or after emergence of the undesirable plants. Herein, the herbicidal composition(s) are applied to a locus where crops will be planted before planting or emergence of the crop.

In industrial weed management and forestry, it is desirable to control a broad range of weeds for an extended period of time. The control of large weeds, or taller species such as bushes or trees may also be desirable. Industrial weed management includes for example railway and right-of-way management, fence lines and non-crop land such as industrial and building sites, gravel areas, roads or sidewalks. Forestry includes for example the clearing of existing forest or bushland, the removal of regrowth after mechanical forest cutting, or the management of weeds under forestry plantations. In the latter case, it may be desirable to shield desirable trees from contact with the spray solution that contains the herbicidal mixture according to the present invention.

The aqueous spray liquor containing the combination of the herbicide and the copolymer CP can also be used for weed control in turf and lawn provided the desirable grass species are tolerant to herbicidal composition. In particular, such herbicidal compositions can be used in desirable grass that has been rendered tolerant to the respective agrochemical active ingredient, e.g. glufosinate or its salts, by mutagenesis or genetic engineering.

Glufosinate and its salts are non-selective systemic herbicides having a good post-emergence activity against numerous weeds and thus can be used in burndown programs, in industrial vegetation management and forestry, in vegetable and perennial crops and in turf and lawn.

Therefore, the present invention also relates to a method for burndown treatment of undesirable vegetation in crops, comprising applying the aqueous spray liquor containing the combination of the herbicide and the copolymer CP to a locus where crops will be planted before planting (or seeding) or emergence of the crop. Herein, the herbicidal composition is applied undesirable vegetation or the locus thereof.

The present invention also relates to a method for controlling undesirable vegetation, which method comprises applying the aqueous spray liquor containing the combination of the herbicide and the copolymer CP to a locus where undesirable vegetation is present or is expected to be present. The application may be done before, during and/or after, preferably during and/or after, the emergence of the undesirable vegetation. In one embodiment, the application is carried out before emergence of the crop, which is cultivated at the locus where the undesirable vegetation is present or is expected to be present. In another embodiment, the application is carried out before planting the crop.

In burndown programs, the spray liquors can be applied prior to seeding (planting) or after seeding (or planting) of the crop plants but before the emergence of the crop plants, in particular prior to seeding. The spray liquors are preferably applied prior to seeding of the crop plants. For burndown, the spray liquors will generally be applied a date up to 9 months, frequently up to 6 months, preferably up to 4 months prior to planting the crop. The burndown application can be done at a date up to 1 day prior to emergence of the crop plant and is preferably done at a date prior to seeding/planting of the crop plant, preferably at a date of at least one day, preferably at least 2 days and in particular at least one 4 days prior to planting or from 6 months to 1 day prior emergence, in particular from 4 months to 2 days prior emergence and more preferably from 4 months to 4 days prior emergence. It is, of course, possible to repeat the burndown application once or more, e.g. once, twice, three times, four times or five times within that time frame.

It is a particular benefit of the spray liquor containing the herbicide and the copolymer CP that the application of the spray liquor provides for a very good post-emergence herbicide activity, i.e. they show a good herbicidal activity against emerged undesirable plants. Thus, in a preferred embodiment of invention, the spray liquors are applied post-emergence, i.e. during and/or after, the emergence of the undesirable plants. It is particularly advantageous to apply the spray liquors post emergent when the undesirable plant starts with leaf development up to flowering. The herbicidal compositions are particularly useful for controlling undesirable vegetation which has already developed to a state, which is difficult to control with conventional burndown mixtures, i.e. when the individual weed is taller than 10 cm (4 inches) or even taller than 15 cm (6 inches) and/or for heavy weed populations. In the case of a post-emergence treatment of the plants, the herbicidal compositions are preferably applied by foliar application.

The spray liquors can be applied in conventional manner by using techniques as skilled person is familiar with. Suitable techniques include spraying, atomizing, dusting, spreading or watering. The type of application depends on the intended purpose in a well-known manner; in any case, they should ensure the finest possible distribution of the active ingredients according to the invention.

In one embodiment, the spray liquors are applied to locus mainly by spraying, in particular foliar spraying of an aqueous dilution of the active ingredients of the mixture. Application can be carried out by customary spraying techniques using spray liquor rates of from about 10 to 2000 l/ha or 50 to 1000 l/ha (for example from 100 to 500 l/ha).

The required application rate of the herbicide active compound via the spray liquor depends on the density of the undesired vegetation, on the development stage of the plants, on the climatic conditions of the location where the mixture is used and on the application method.

In general, the rate of application of L-glufosinate or its salt is usually from 50 g/ha to 3000 g/ha and preferably in the range from 100 g/ha to 2000 g/ha or from 200 g/ha to 1500 g/ha of active substance (a.i.).

The spray liquor containing the copolymer CP and the herbicide provide for a persistent herbicidal activity, even under difficult weathering conditions, which allows a more flexible application in burndown applications and minimizes the risk of weeds escaping. Apart from that, the spray liquor containing the copolymer CP and the herbicide provide for superior crop compatibility with certain conventional crop plants and with herbicide tolerant crop plants, i.e. their use in these crops leads to a reduced damage of the crop plants and/or does not result in increased damage of the crop plants. Thus, the spray liquor containing the copolymer CP can also be applied after the emergence of the crop plants. The spray liquor containing the copolymer CP may also show an accelerated action on harmful plants, i.e. they may affect damage of the harmful plants more quickly.

The spray liquors containing the copolymer CP are also suitable for controlling weeds that are resistant to commonly used herbicides such as, for example, weeds that are resistant to glyphosate, weeds that are resistant to auxin inhibitor herbicides such as e. g. 2,4-D or dicamba, weeds that are resistant to photosynthesis inhibitors such as e. g. atrazine, weeds that are resistant to ALS inhibitors such as e. g. sulfonylureas, imidazolinones or triazolopyrimidines, weeds that are resistant to ACCase inhibitors such as e. g. clodinafop, clethodim or pinoxaden or weeds that are resistant to protoporphyrinogen-IX-oxidase inhibitors such as e. g. sulfentrazone, flumioxazine, fomesafen or acifluorfen, for example the weeds that are listed in the International Survey of Resistant Weeds (http://www.weedscience.org/Summary/SpeciesbySOATable.aspx). In particular, they are suitable for controlling the resistant weeds that are resistant to glufosinate or its salts, such as listed in the International Survey of Resistant Weeds, for example ACCase resistant Echinochloa crus-galli, Avena fatua, Alopecurus myosuroides, Echinochloa colona, Alopecurus japonicus, Bromus tectorum, Hordeum murinum, Ischaemum rugosum, Setaria viridis, Sorghum halepense, Alopecurus aequalis, Apera spica-venti, Avena sterilis, Beckmannia szygachne, Bromus diandrus, Digitaria sanguinalis, Echinocloa oryzoides, Echinochloa phyllopogon, Phalaris minor, Phalaris paradoxa, Setaria faberi, Setaria viridis, Brachypodium distachyon, Bromus diandrus, Bromus sterilis, Cynosurus echinatus, Digitaria insularis, Digitaria ischaemum, Leptochloa chinensis, Phalaris brachystachis, Rotboellia cochinchinensis, Digitaria ciliaris, Ehrharta longiflora, Eriochloa punctata, Leptochloa panicoides, Lolium persicum, Polypogon fugax, Sclerochloa kengiana, Snowdenia polystacha, Sorghum sudanese and Brachiaria plantaginea, ALS inhibitor resistant Echinochloa crus-galli, Poa annua, Avena fatua, Alopecurus myosuroides, Echinochloa colona, Amaranthus hybridus, Amaranthus palmeri, Amaranthus rudis, Conyza sumatrensis, Amaranthus retroflexus, Ambrosia artemisifolia, Conyza canadensis, Kochia scoparia, Raphanus raphanistrum, Senecio vernalis, Alopecurus japonicus, Bidens pilosa, Bromus tectorum, Chenopodium album, Conyza bonariensis, Hordeum murinum, Ischaemum rugosum, Senecio vulgaris, Setaria viridis, Sisymbrium orientale, Sorghum halepense, Alopecurus aequalis, Amaranthus blitum, Amaranthus powellii, Apera spica-venti, Avena sterilis, Brassica rapa, Bromus diandrus, Descurainia sophia, Digitaria sanguinalis, Echinochloa oryzoides, Echinochloa phyllopogon, Euphorbia heterophylla, Lactuca serriola, Phalaris minor, Phalaris paradoxa, Setaria faberi, Setaria viridis, Sinapis arvensis, Solanum ptycanthum, Sonchus oleraceus, Stellaria media, Amaranthus blitoides, Amaranthus spinosus, Amaranthus viridis, Ambrosia trifida, Bidens subalternans, Bromus diandrus, Bromus sterilis, Capsella bursa-pastoris, Centaurea cyanus, Cynosurus echinatus, Cyperus difformis, Fimbristilis miliacea, Galeopsis tetrahit, Galium aparine, Galium spurium, Helianthus annuus, Hirschfeldia incana, Limnocharis flava, Limnophila erecta, Papaver rhoeas, Parthenium hysterophorus, Phalaris brachystachis, Polygonum convolvulus, Polygonum lapathifolium, Polygonum persicaria, Ranunculus acris, Rottboellia cochinchinensis, Sagittaria montevidensis, Salsola tragus, Schoenoplectus mucronatus, Setaria pumila, Sonchus asper, Xanthium strumarium, Ageratum conyzoides, Alisma canaliculatum, Alisma plantago-aquatica, Ammannia auriculata, Ammannia coccinea, Ammannia arvensis, Anthemis cotula, Bacopa rotundifolia, Bifora radians, Blyxa aubertii, Brassica tournefortii, Bromus japonicus, Bromus secalinus, Lithospermum arvense, Camelina microcarpa, Chamaesyce maculata, Chrysanthemum coronarium, Clidemia hirta, Crepis tectorum, Cuscuta pentagona, Cyperus brevifolis, Cyperus compressus, Cyperus esculentus, Cyperus iria, Cyperus odoratus, Damasonium minus, Diplotaxis erucoides, Diplotaxis tenuifolia, Dopatrum junceum, Echium plantagineum, Elatine triandra, Eleocharis acicularis, Erucaria hispanica, Erysimum repandum, Galium tricornutum, Iva xanthifolia, Ixophorus unisetus, Lamium amplexicaule, Limnophilia sessiliflora, Lindernia dubia, Lindernia micrantha, Lindernia procumbens, Ludwigia prostrata, Matricaria recutita, Mesembryanthemum crystallinum, Monochoria korsakowii, Monochoria vaginalis, Myosoton aquaticum, Neslia paniculata, Oryza sativa var. sylvatica, Pentzia suffruticosa, Picris hieracioides, Raphanus sativus, Rapistrum rugosum, Rorippa indica, Rotala indica, Rotala pusilla, Rumex dentatus, Sagittaria guayensis, Sagittaria pygmaea, Sagittaria trifolia, Schoenoplectus fluviatilis, Schoenoplectus juncoides, Schoenoplectus wallichii, Sida spinosa, Silene gallica, Sinapis alba, Sisymbrium thellungii, Sorghum bicolor, Spergula arvensis, Thlaspi arvense, Tripleurospermum perforatum, Vaccaria hispanica and Vicia sativa, photosynthesis inhibitor resistant Echinochloa crus-galli, Poa annua, Alopecurus myosuroides, Echinochloa colona, Amaranthus hybridus, Amaranthus palmeri, Amaranthus rudis, Conyza sumatrensis, Amaranthus retroflexus, Ambrosia artemisifolia, Conyza canadensis, Kochia scoparia, Raphanus raphanistrum, Senecio vernalis, Alopecurus japonicus, Bidens pilosa, Bromus tectorum, Chenopodium album, Conyza bonariensis, Ischaemum rugosum, Senecio vulgaris, Setaria viridis, Sisymbrium orientale, Amaranthus blitum, Amaranthus powellii, Apera spica-venti, Beckmannia syzigachne, Brassica rapa, Digitaria sanguinalis, Euphorbia heterophylla, Phalaris minor, Phalaris paradoxa, Setaria faberi, Setaria viridis, Sinapis arvensis, Solanum ptycanthum, Stellaria media, Amaranthus blitoides, Amaranthus viridis, Bidens subalternans, Brachypodium distachyon, Capsella bursa-pastoris, Chloris barbata, Cyperus difformis, Echinochloa erecta, Epilobium ciliatum, Polygonum aviculare, Polygonum convolvulus, Polygonum lapathifolium, Polygonum persicaria, Portulaca oleracea, Schoenoplectus mucronatus, Setaria pumila, Solanum nigrum, Sonchus asper, Urochloa panicoides, Vulpia bromoides, Abutilon theophrasti, Amaranthus albus, Amaranthus cruentus, Arabidopsis thaliana, Arenaria serpyllifolia, Bidens tripartita, Chenopodium album, Chenopodium ficifolium, Chenopodium polyspermum, Crypsis schoenoides, Datura stramonium, Epilobium tetragonum, Galinsoga ciliata, Matricaria discoidea, Panicum capillare, Panicum dichotomiflorum, Plantago lagopus, Polygonum hydopiper, Polygonum pensylvanicum, Polygonum monspeliensis, Rostraria, smyrnacea, Rumex acetosella, Setaria verticillata and Urtica urens, PS-I-electron diversion inhibitor resistant Poa annua, Conyza sumatrensis, Conyza canadensis, Alopecurus japonicus, Bidens pilosa, Conyza bonariensis, Hordeum murinum, Ischaemum rugosum, Amaranthus blitum, Solanum ptycanthum, Arctotheca calendula, Epilobium ciliatum, Hedyotis verticillata, Solanum nigrum, Vulpia bromoides, Convolvulus arvensis, Crassocephalum crepidioides, Cuphea carthagensis, Erigeron philadelphicus, Gamochaeta pensylvanica, Landoltia punctata, Lepidium virginicum, Mazus fauriei, Mazus pumilus, Mitracarpus hirtus, Sclerochloa dura, Solanum americanum and Youngia japonica, glyphosate resistant Poa annua, Echinochloa colona, Amaranthus hybridus, Amaranthus palmeri, Amaranthus rudis, Conyza sumatrensis, Ambrosia artemisifolia, Conyza canadensis, Kochia scoparia, Raphanus raphanistrum, Bidens pilosa, Conyza bonariensis, Hordeum murinum, Sorghum halepense, Brassica rapa, Bromus diandrus, Lactuca serriola, Sonchus oleraceus, Amaranthus spinosus, Ambrosia trifida, Digitaria insularis, Hedyotis verticillata, Helianthus annuus, Parthenium hysterophorus, Plantago lanceolata, Salsola tragus, Urochloa panicoides, Brachiaria eruciformis, Bromus rubens, Chloris elata, Chloris truncata, Chloris virgata, Cynodon hirsutus, Lactuca saligna, Leptochloa virgata, Paspalum paniculatum and Tridax procumbens, microtubule assembly inhibitor resistant Echinochloa crus-galli, Poa annua, Avena fatua, Alopecurus myosuroides, Amaranthus palmeri, Setaria viridis, Sorghum halepense, Alopecurus aequalis, Beckmannia syzigachne and Fumaria densifloria, auxin herbicide resistant Echinochloa crus-galli, Echinochloa colona, Amaranthus hybridus, Amaranthus rudis, Conyza sumatrensis, Kochia scoparia, Raphanus raphanistrum, Chenopodim album, Sisymbrium orientale, Descurainia sophia, Lactuca serriola, Sinapis arvensis, Sonchus oleraceus, Stellaria media, Arctotheca calendula, Centaurea cyanus, Digitaria ischaemum, Fimbristylis miliacea, Galeopsis tetrahit, Galium aparine, Galium spurium, Hirschfeldia incana, Limnocharis flava, Limnocharis erecta, Papaver rhoeas, Plantago lanceolata, Ranunculus acris, Carduus nutans, Carduus pycnocephalus, Centaurea soltitialis, Centaurea stoebe ssp. Micranthos, Cirsium arvense, Commelina diffusa, Echinochloa crus-pavonis, Soliva sessilis and Sphenoclea zeylanica, HPPD inhibitor resistant Amaranthus palmeri and Amaranthus rudis, PPO inhibitor resistant Acalypha australis, Amaranthus hybridus, Amaranthus palmeri, Amaranthus retroflexus, Amaranthus rudis, Ambrosia artemisifolia, Avena fatua, Conyza sumatrensis, Descurainia sophia, Euphorbia heterophylla and Senecio vernalis, carotenoid biosynthesis inhibitor resistant Hydrilla verticillata, Raphanus raphanistrum, Senecio vernalis and Sisymbrium orientale, VLCFA inhibitor resistant Alopecurus myosuroides, Avena fatua and Echinochloa crus-galli.

### Examples

The invention is elucidated in more detail by the examples hereinafter.

The following abbreviations are used:
- C₁₃-oxo-3EO: ammonium salt of branched C₁₃-alkyl ether sulfate with 3 EO (based on C₁₃-oxo alcohol)
- C₁₂C₁₈-6EO: ammonium salt of linear C₁₂-C₁₈ alkyl ether sulfate with 6 EO
- EO: ethylene oxide (= CH₂CH₂O)
- PO: 1,2-propylene oxide (= CH₂CH(CH₃)O)
- SLES: sodium lauryl ether sulfate
- SL: Aqueous soluble concentrate formulation

The compounds of the formula (I), i.e. ammonium salt of branched C₁₃-alkyl ether sulfate with 3 EO (C₁₃-oxo-3EO) and ammonium salt of linear C₁₂-C₁₈-alkyl ether sulfate with 6 EO (C₁₂C₁₈-6EO), and sodium lauryl ether sulfate (SLES), which is not according to the invention, were used as aqueous concentrates.

The herbicide compound (L-glufosinate) were used as aqueous solution of the respective glufosinate salt (TC) at the given concentration.

The effect-improving action of the compound of the formula (I) on herbicides according to the invention was demonstrated by the following greenhouse experiments, which are hereinafter referred to as "inventive examples" (IE).

For comparison, two different types of comparative examples were carried out. In the first type of comparative example (CE1), the herbicide compound was solely applied without any adjuvant. In the second type of comparative example (CE2), the herbicide compound was applied with sodium lauryl ether sulfate (SLES), which is used as an adjuvant, but not according to the formula (I).

All details related to the applied compound of the formula (I), the herbicide compound and the comparative adjuvants are summarized in the following.

| | Herbicide (Formulation) | Adjuvant (Formulation) | Table |
|---|---|---|---|
| Com para tive exam ples | | | |
| CE1-A, CE1-B | L-glufosinate ammonium (600 g/l TC) | No adjuvant | 1,4 |
| CE2-A, CE2-B, CE2-C, CE2-D | L-glufosinate ammonium (600 g/l TC) | SLES (756 g/l SL) | 2, 5, 7, 9-a, 9-b |

| Inventive examples | | | |
|---|---|---|---|
| IE1-A, IE1-D | L-glufosinate ammonium (600 g/l TC) | C₁₃-oxo-3EO (756 g/l SL) | 3, 10 |
| IE2-B, IE2-C, IE2-D | L-glufosinate ammonium (600 g/l TC) | C₁₂C₁₈-6EO (756 g/l SL) | 6, 8-a, 8-b, 11 |
| IE3-A | L-glufosinate ammonium (600 g/l TC) | SLES (756 g/l SL) + C₁₂C₁₈-6EO (756 g/l SL) | 12-a, 12-b |
| IE3-B | L-glufosinate ammonium (600 g/l TC) | SLES (756 g/l SL) + C₁₃-oxo-3EO(756 g/l SL) | 13-a, 13-b |

| | | | |
|---|---|---|---|
| TC = technical concentrate | | | |

A greenhouse study was conducted to evaluate the effect of the compounds of formula (I) and other adjuvants on the weed control efficacy of glufosinate. Seedlings of grass plants (AVEFA, ECHCG, DIGSA and SETVI) and broadleaf weeds (KCHSC, CHEAL, AMAPA, AMATA and ABUTH) were grown to a height of 3 to 20 cm, depending on the plant habit in 10 × 10 × 10 cm pots filled with sandy planting soil (Limburgerhof soil). The weeds were treated with postemergence applications of glufosinate ammonium at the respective application rates given in the following tables, either alone or combined with various amounts of the respective adjuvants.

For this, the herbicide formulation and the respective adjuvant were introduced into tap water to obtain the spray liquor. All mixtures resulted in stable, clear spray solutions. The spray liquor was then applied to the plant a spray volume of 200 l/ha using a sprayer (XR Teejet 110015).

The test period extended over 21 days. During this time, the plants were tended, and their response to the treatments with active compound was evaluated.

The evaluation for the damage caused by the chemical compositions was carried out using a scale from 0 to 100%, compared to the untreated control plants. Here, 0 means no damage and 100 means complete destruction of the plants.

The plants used in the greenhouse experiments belonged to the following species:

| Scientific Name | Code | Common Name |
|---|---|---|
| Abutilon theophrasti | ABUTH | velvetleaf |
| Avena fatua | AVEFA | wild oat |
| Chenopodium album | CHEAL | lambsquarter |
| Digitaria sanguinalis | DIGSA | large crabgrass |
| Echinochloa crus-galli | ECHCG | barnyardgrass |
| Lolium multiflorum Lam. | LOLMU | italian rye-grass |
| Kochia scoparia | KCHSC | kochia |
| Zea mays L. | ZEAMX | corn, volunteer |
| Polygonum aviculare L. | POLAV | knotweed, prostrate |
| Barley (spring) | HORVS | spring barley |
| Soft wheat (spring) | TRZAS | spring wheat |
| Amaranthus tuberculatus | AMATU | tall waterhemp |

The results are summarized in the following tables that show the applied doses of the individual actives as gram of active ingredient per hectare (g ai/ha), the herbicidal activity of the individual actives and of their combinations in post-emergence application assessed 20 day after treatment (DAT), respectively. It is to note that serveral stuies that were carried out under the same conditions do not exibit identical, but slightly deviating results. Nevertheless, such deviation is within the acceptable accuracy range so that the tendencies, which the results of the studies under the same conditions show, are the same.

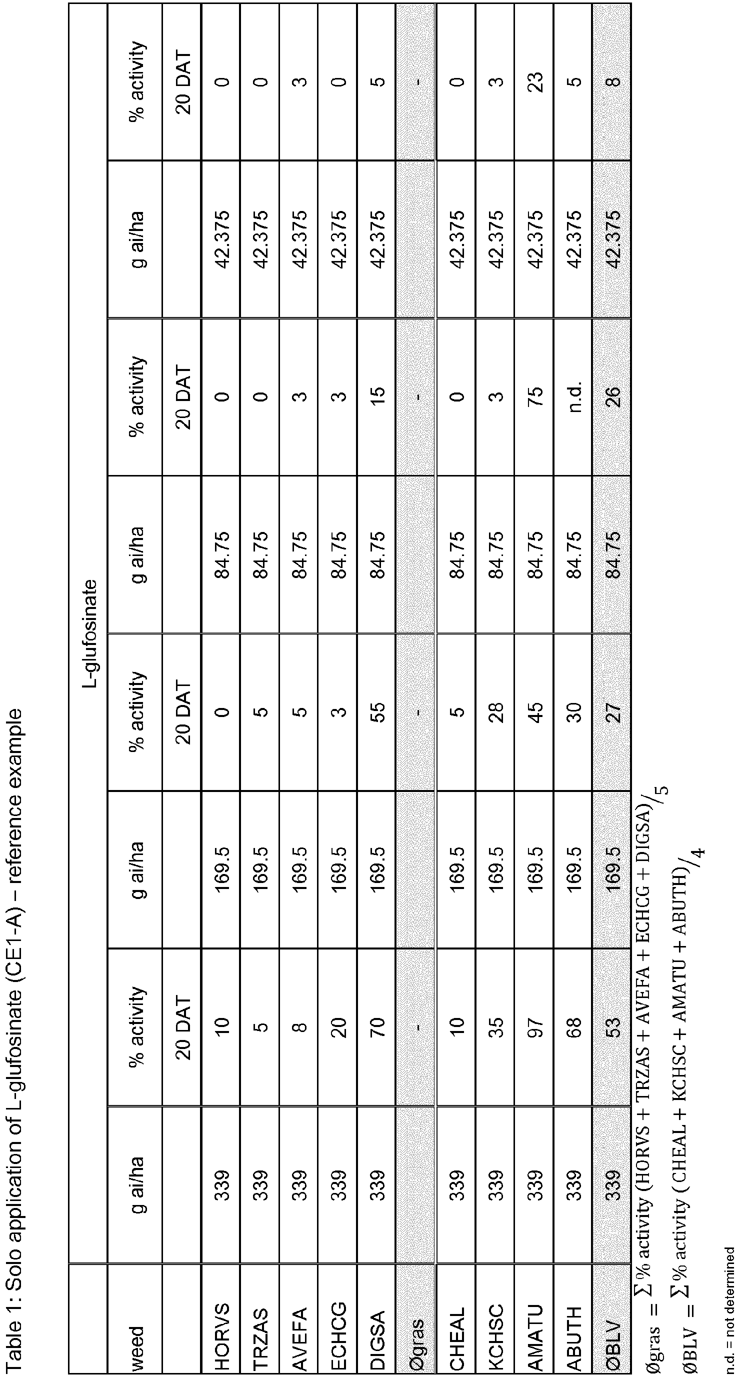

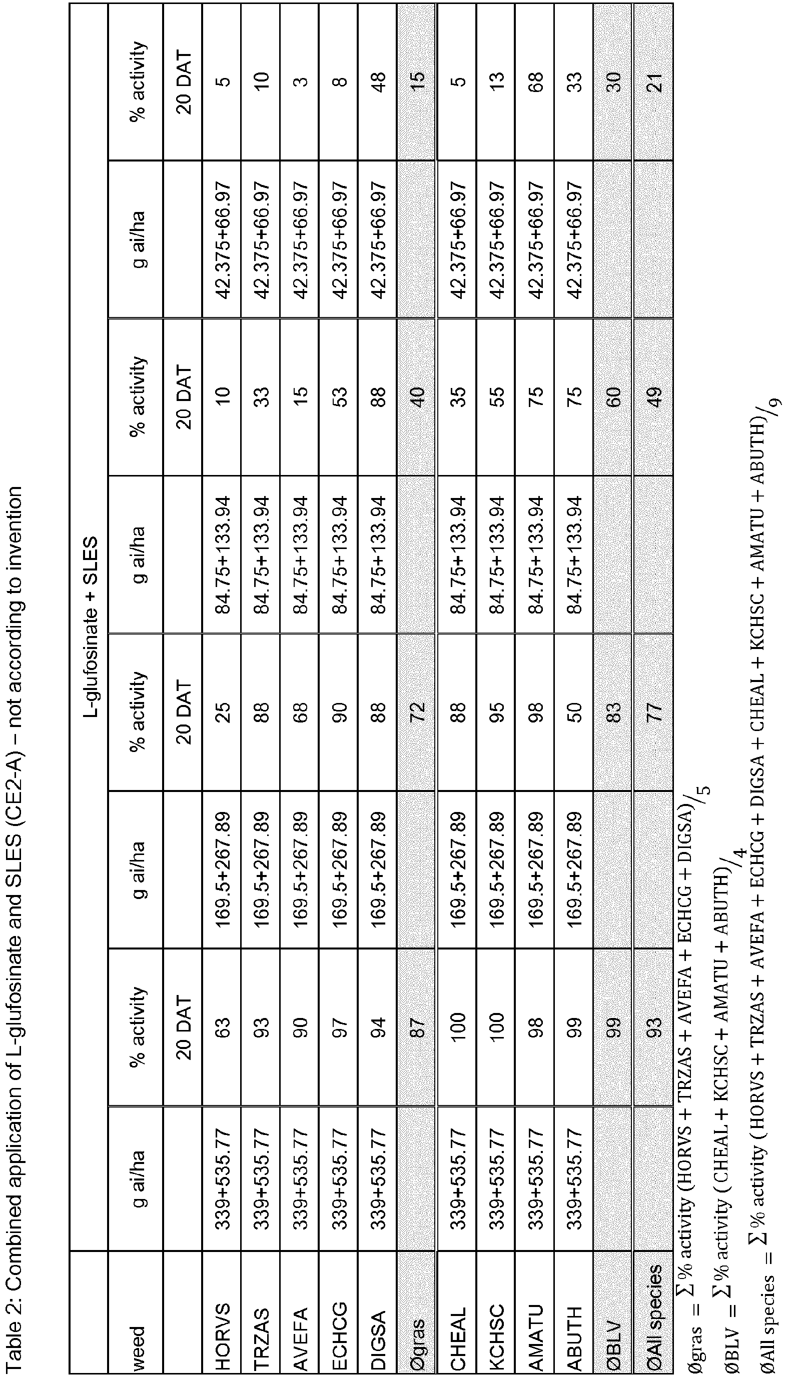

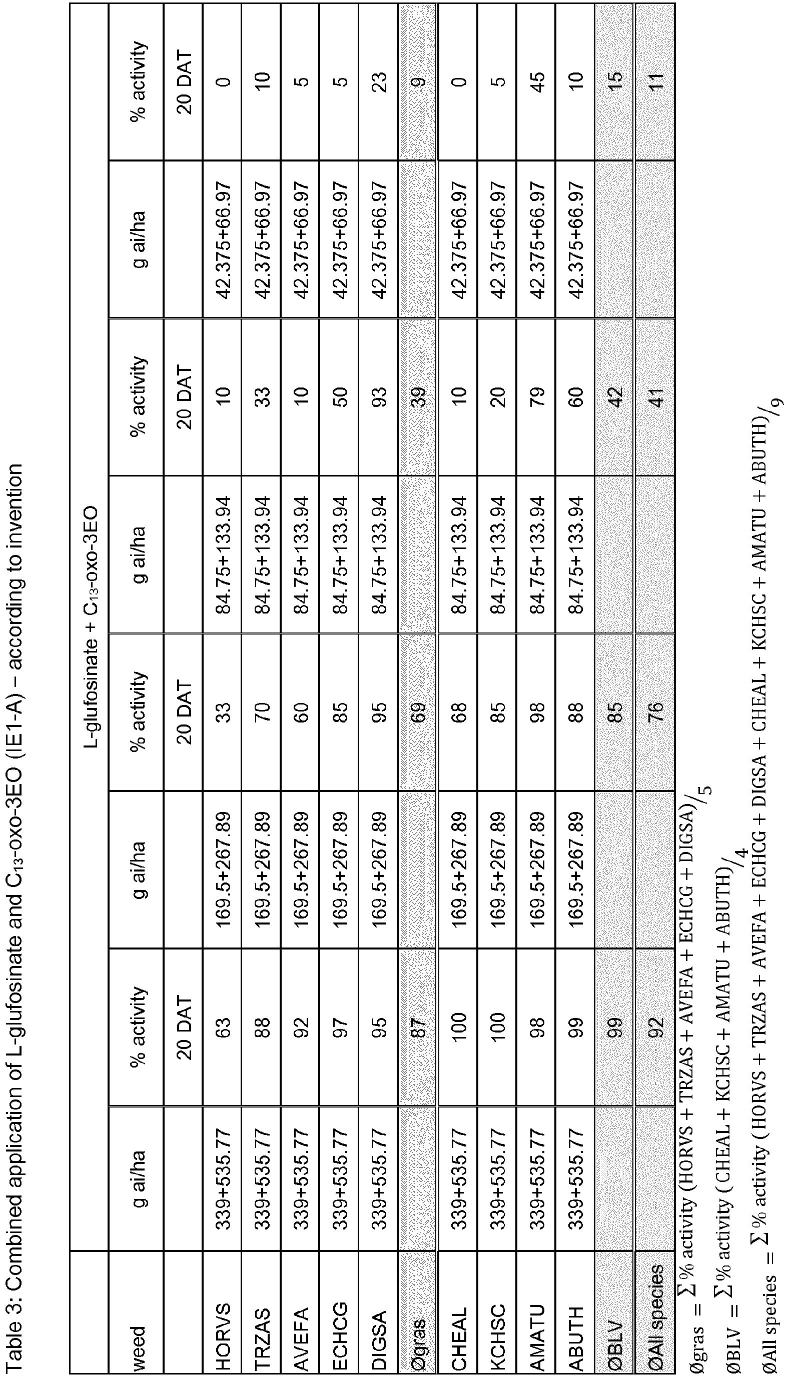

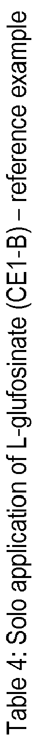

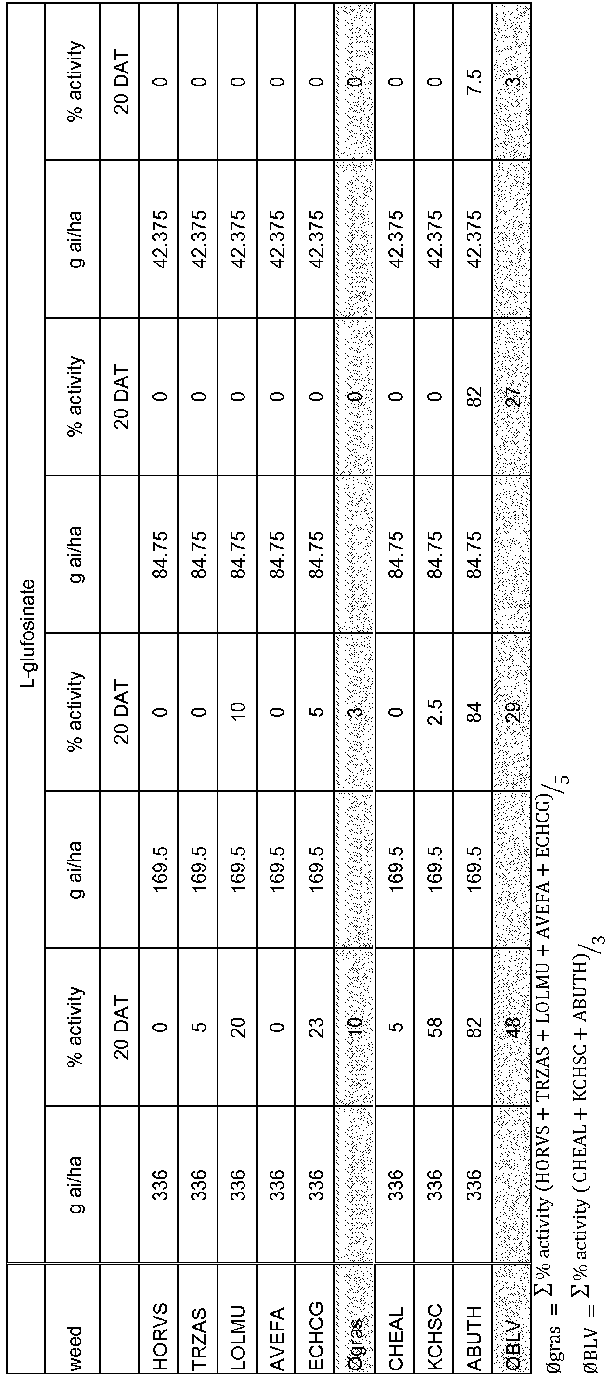

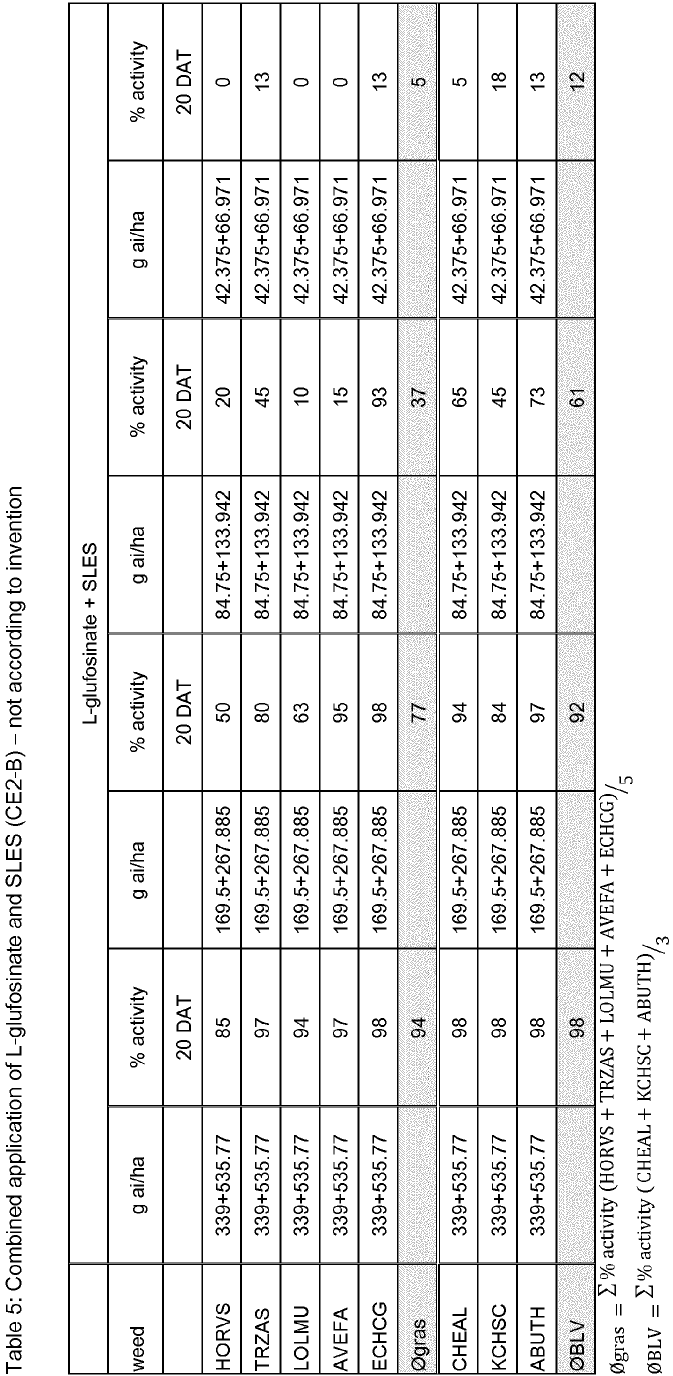

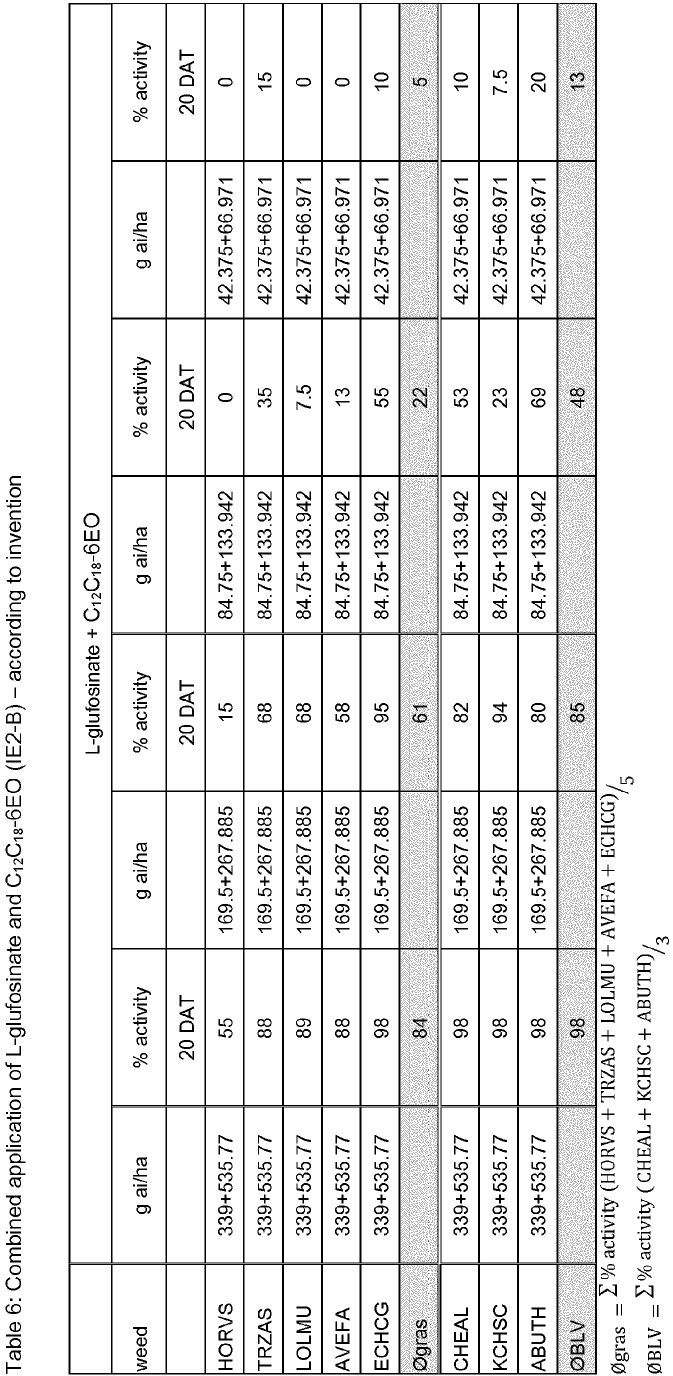

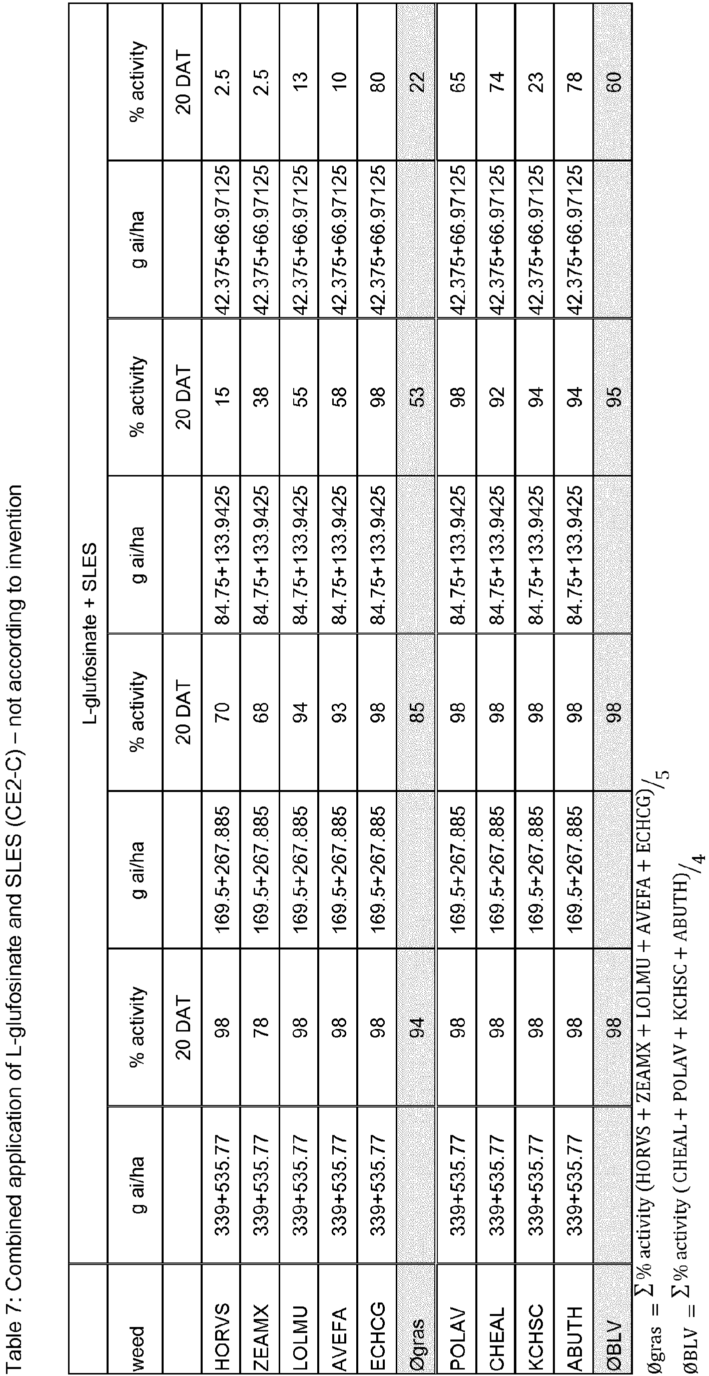

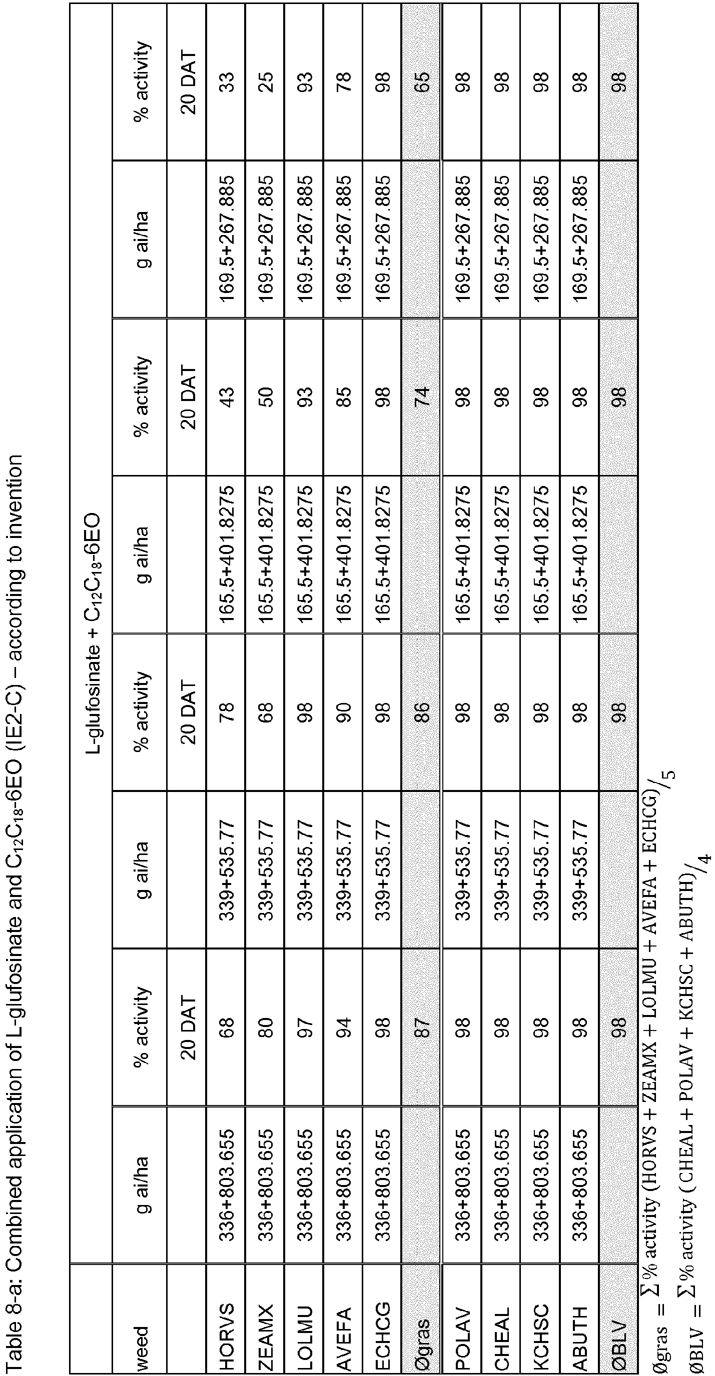

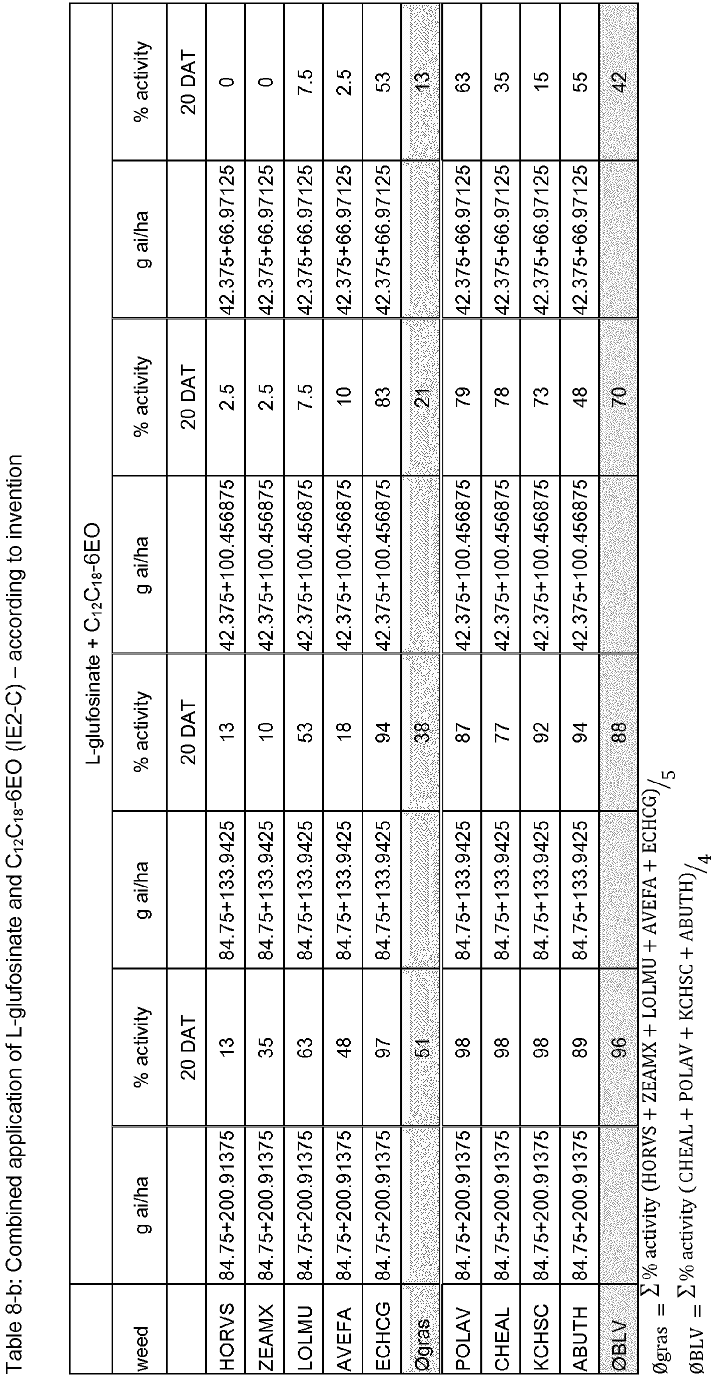

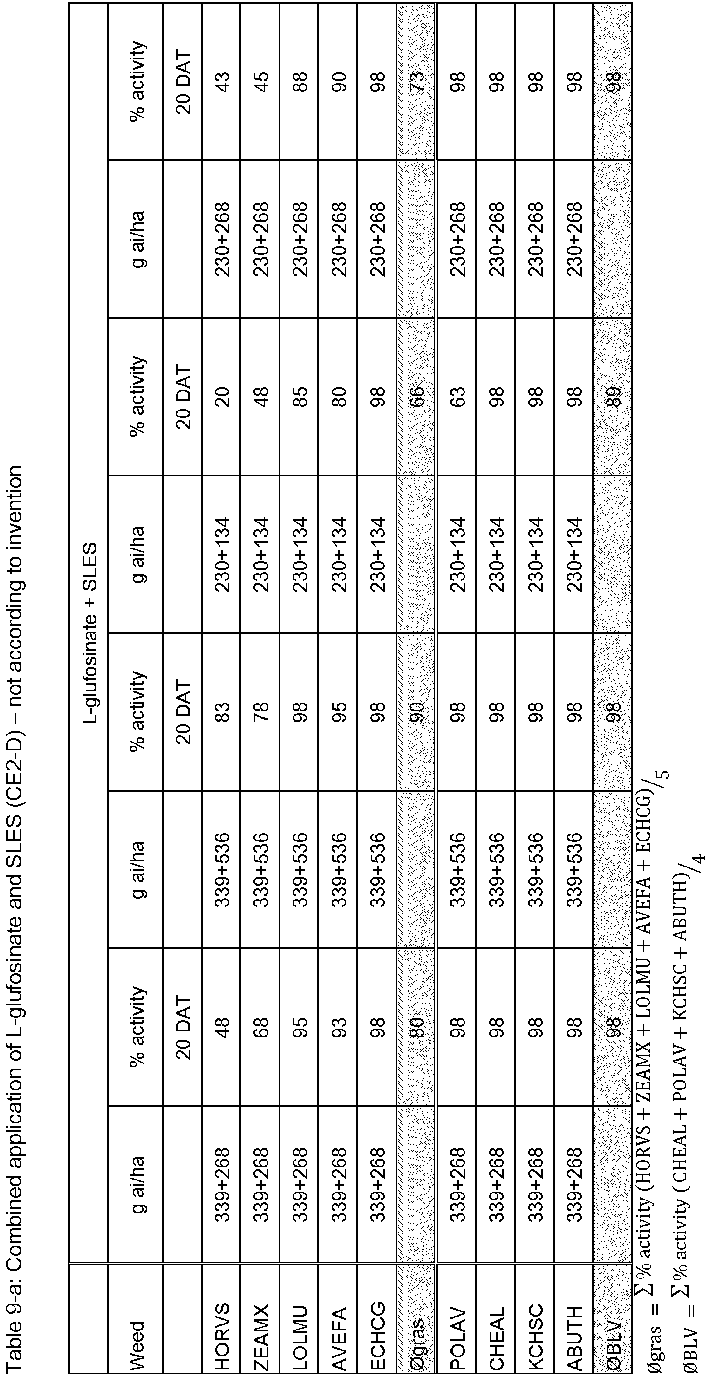

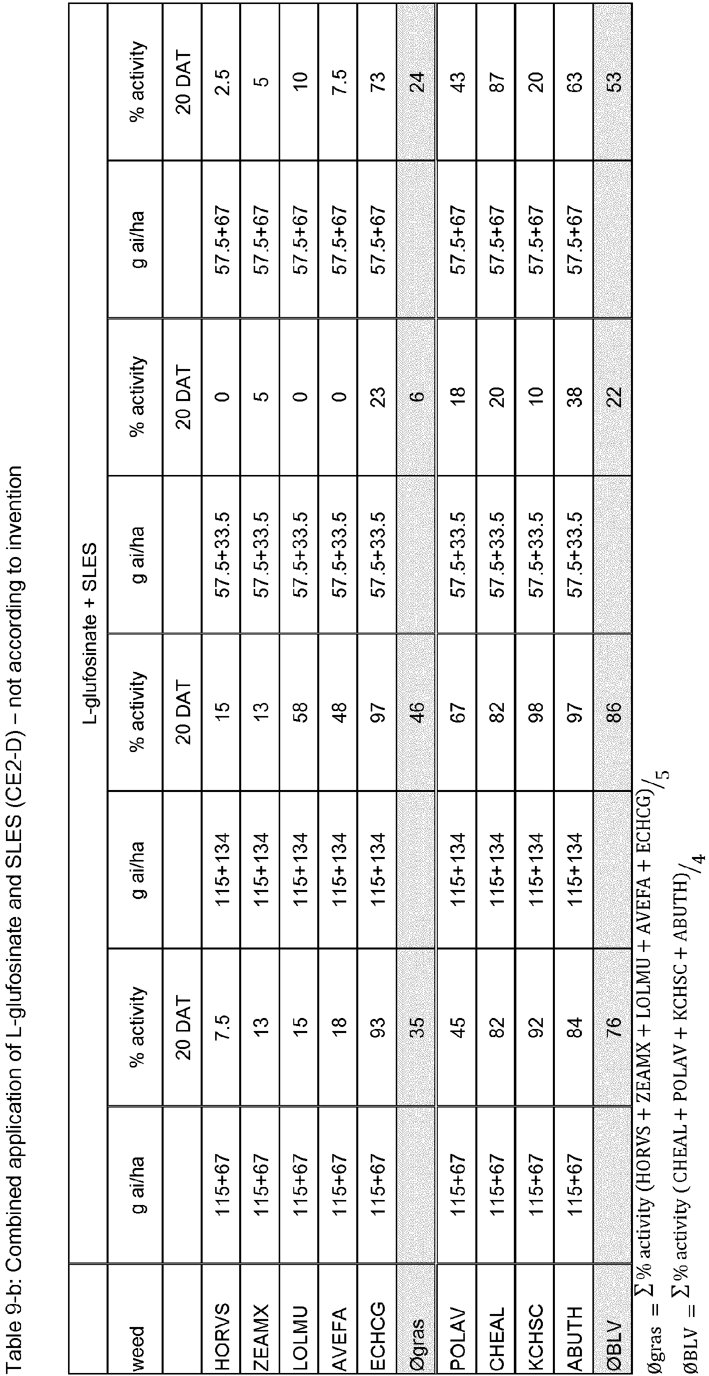

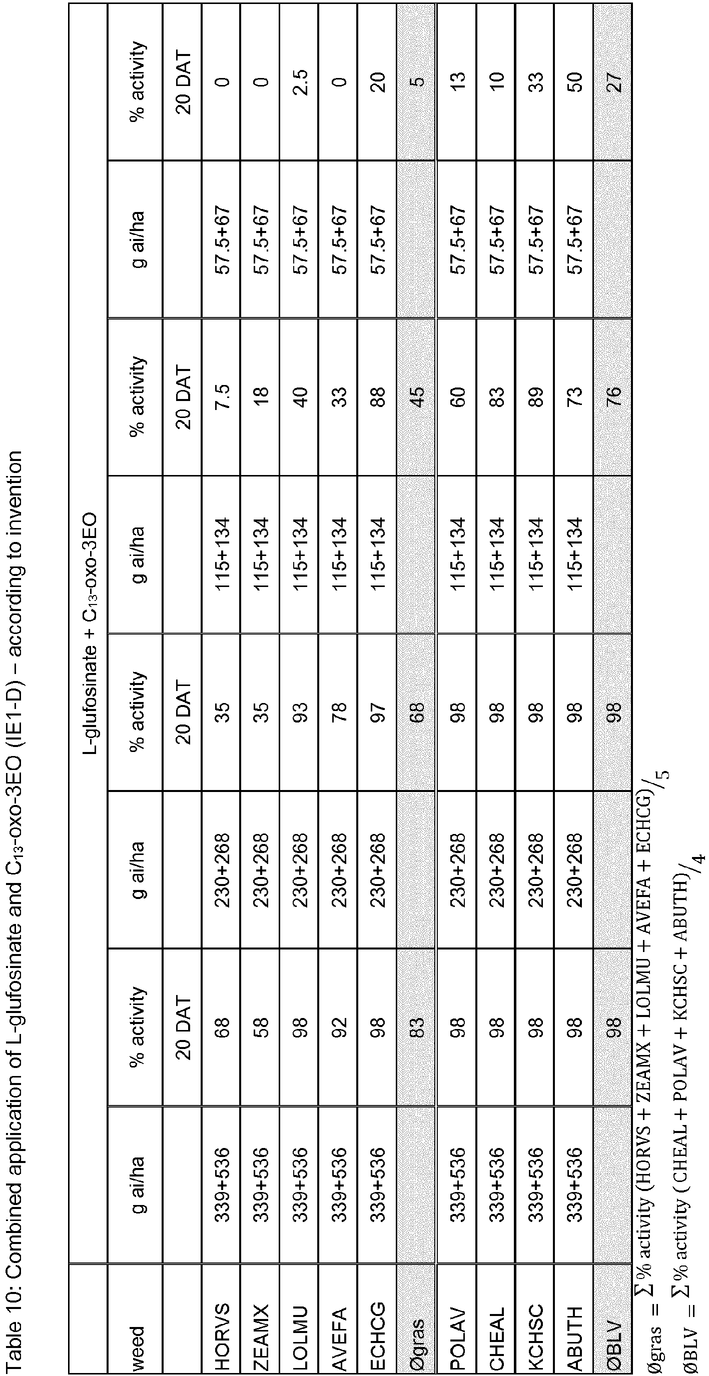

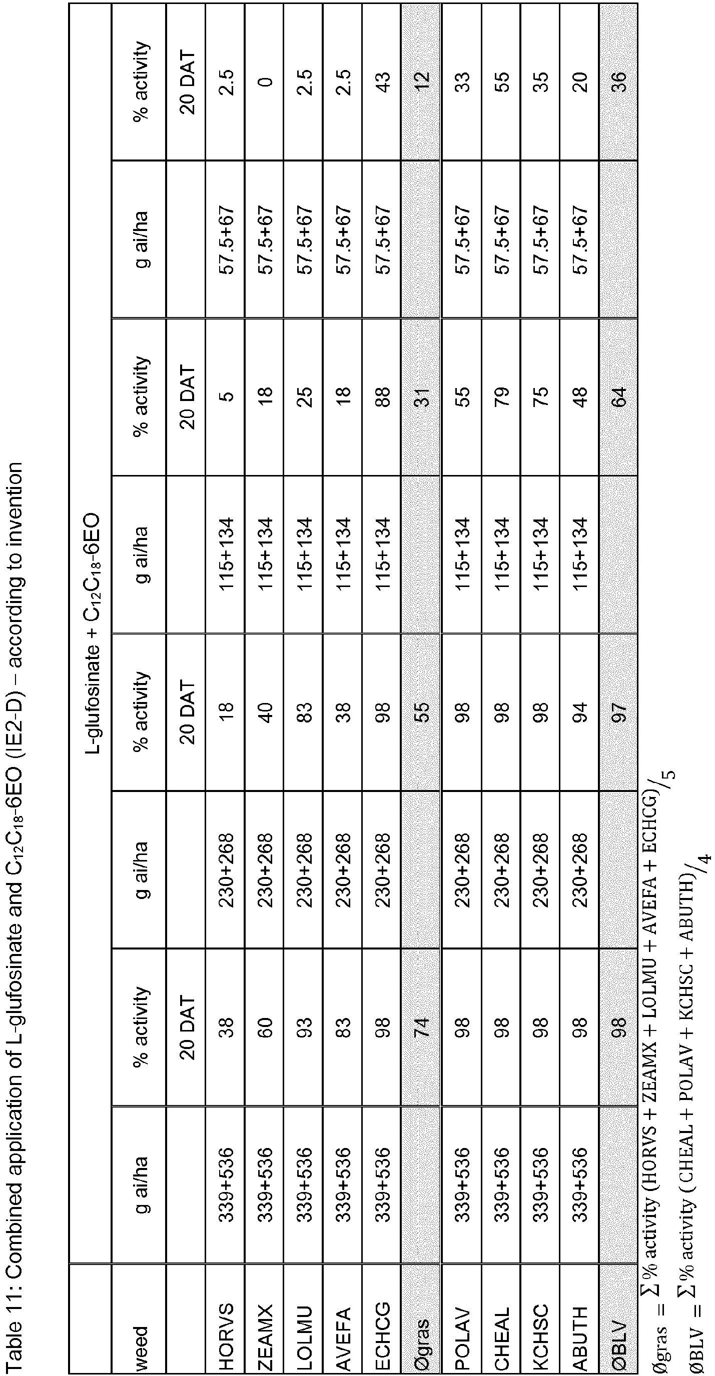

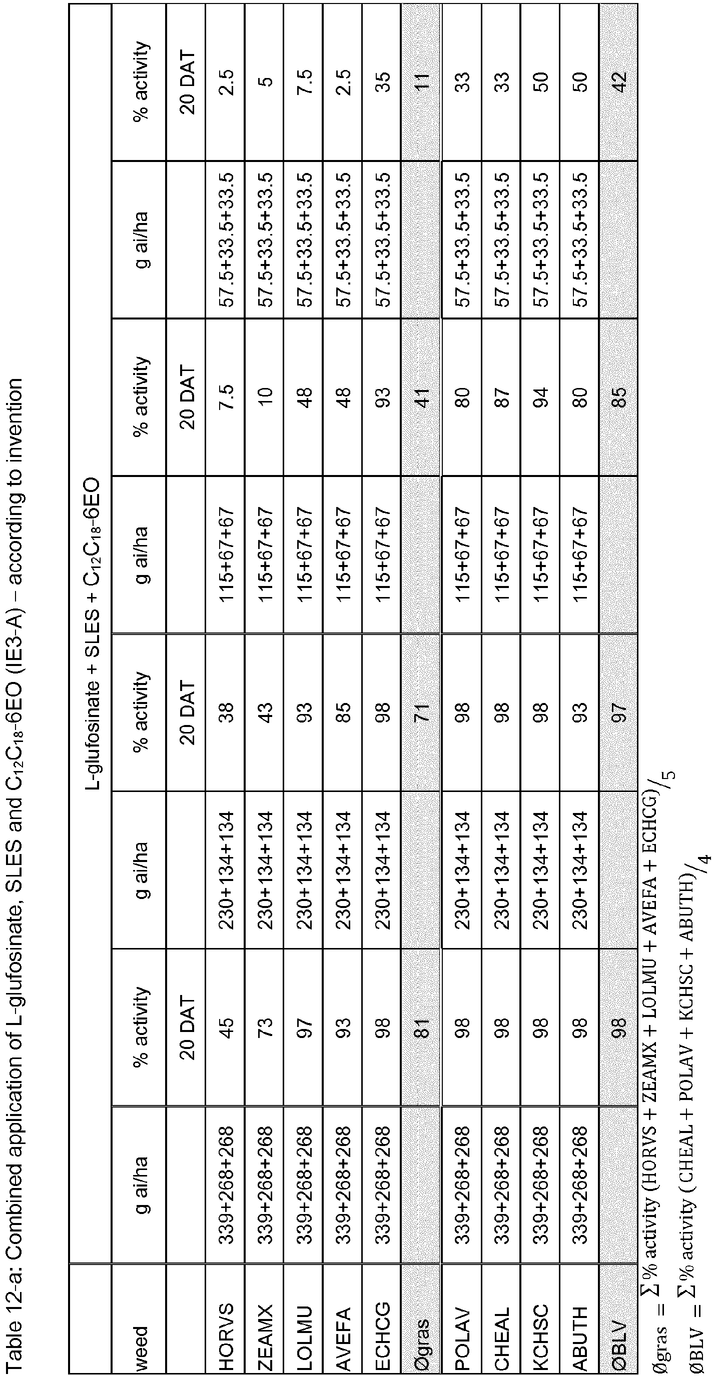

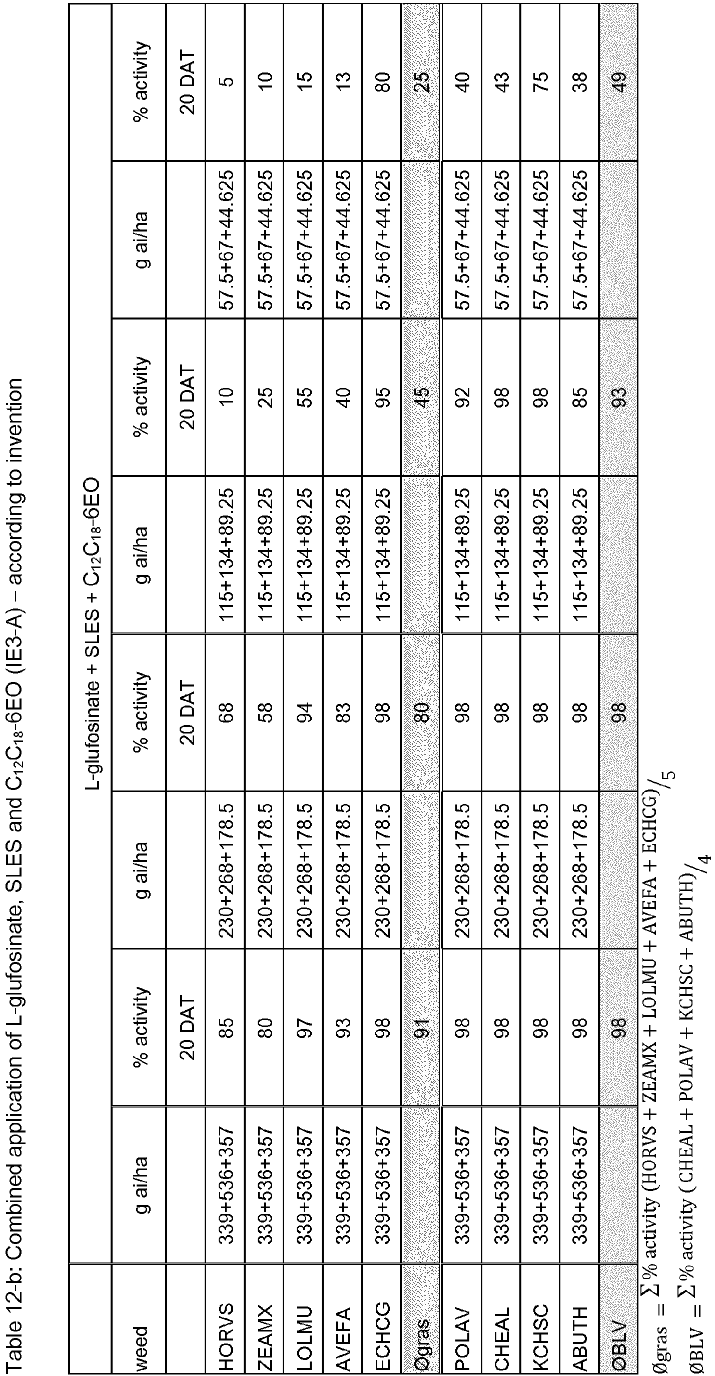

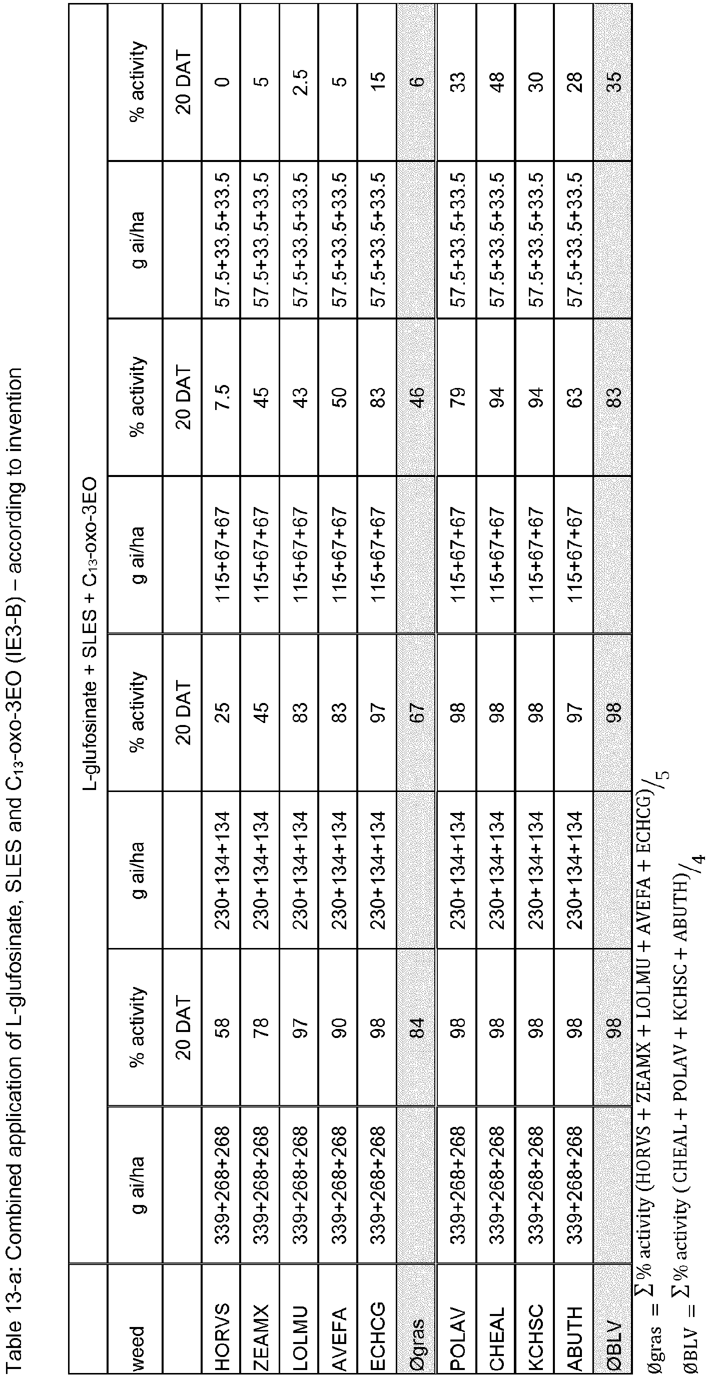

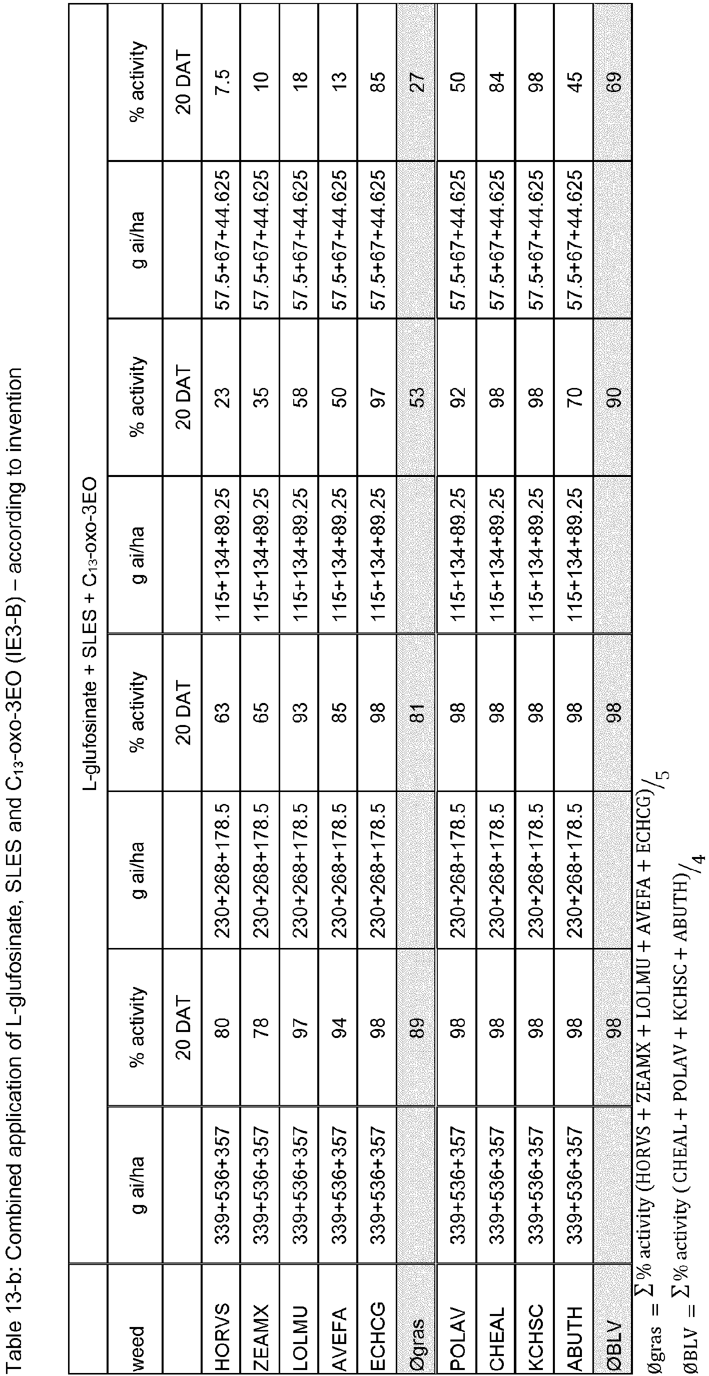

## Claims

1. Use of at least one compound of the formula (I)
[R-O-(A-O)ₙ-SO₃]⁻ M⁺ (I)
in which
M⁺ is a cation;
A is C₂-C₃-alkandiyl;
R is selected from linear or branched C₁₁-C₂₀-alkyl and mixtures thereof; and
n is a natural positive number of 2 to 12 where the number average of n is in the range of 3 to 10;
for increasing the herbicidal effect of one or more herbicide compounds.

2. A method for controlling undesired plants, wherein at least one compound of the formula (I) according to claim 1 and at least one herbicide compound are applied to the undesired plants or their habitat.

3. The use or method according to any one of preceding claims, wherein the cation M⁺ is monovalent and selected from the group consisting of alkali metal ions, NH₄⁺ and H₄₋ₘNR¹ₘ⁺, where R¹ is selected from the group consisting of alkyl, optionally substituted by hydroxyl, methoxy, amino, alkylamino or dialkylamino, cycloalkyl, (Alk-NR')BN(R")₂, (CH₂CH₂O)ₖCH₂CH₂OH and (CH₂CH(CH₃)O)ₜCH₂CH(CH₃)OH, where t is 0, 1 or 2, k is 0, 1 or 2, Alk is alkylene, B is alkylene, R' is hydrogen or alkyl, R" is hydrogen or alkyl and m is an integer in the range of 1 to 4.

4. The use or method according to any one of preceding claims, wherein the number average of n is in the range of 3 to 8.

5. The use or method according to any one of preceding claims, wherein A is CH₂CH₂ or a combination of CH₂CH₂ and CH₂CH(CH₃).

6. The use or method according to any one of preceding claims, wherein R is selected from the group consisting of linear C₁₂-C₁₈-alkyl and the number average of n is in the range of 5 to 8.

7. The use or method according to any one of claims 1 to 5, wherein R is selected from the group consisting of branched C₁₂-C₁₄-alkyl and the number average of n is in the range of 3 to 5.

8. The use or method according to claim 7, wherein A is CH₂CH₂.

9. The use or method according to claims 6 to 8, wherein at least one compound of the formula (I) is used in combination with at least one further adjuvant, which is different from the compounds of the formula (I).

10. The use or method according to any one of preceding claims, wherein the herbicide compound is selected from at least one herbicide compound of the groups (a) to (o):
(a) herbicide compounds of the group of the glutamine synthetase inhibitors;
(b) herbicide compounds of the group of the enolpyruvyl shikimate 3-phosphate synthase inhibitors (EPSP inhibitors);
(c) herbicide compounds of the group of acetolactate synthase inhibitors (ALS inhibitors);
(d) herbicide compounds of the group of protoporphyrinogen-IX oxidase inhibitors;
(e) herbicide compounds of the group of auxinic herbicides and auxin transport inhibitors;
(f) herbicide compounds of the group of photosynthesis inhibitors;
(g) herbicide compounds of the group of lipid biosynthesis inhibitors (acetyl-CoA carboxylase inhibitors, ACCase inhibitors);
(h) lipid biosynthesis inhibitors other than ACCase-inhibitors;
(i) bleacher herbicides;
(j) 7,8-dihydropteroate synthase inhibitors (DHP inhibitors);
(k) mitosis inhibitors;
(l) inhibitors of the synthesis of very long chain fatty acids (VLCFA inhibitors);
(m) cellulose biosynthesis inhibitors;
(n) decoupler herbicides;
(o) other herbicides selected from the group consisting of bromobutide, chlorflurenol, chlorflurenol-methyl, cinmethylin, cumyluron, cyclopyrimorate and its salts and esters, dazomet, difenzoquat, difenzoquat-metilsulfate, dimethipin, DSMA, dymron, endothal and its salts, etobenzanid, flamprop, flamprop-isopropyl, flamprop-methyl, flamprop-M-isopropyl, flamprop-M-methyl, flurenol, flurenol-butyl, flurprimidol, fosamine, fosamine-ammonium, indanofan, maleic hydrazide, mefluidide, metam, methiozolin, methyl azide, methyl bromide, methyl-dymron, methyl iodide, MSMA, oleic acid, oxaziclomefone, pelargonic acid, pyributicarb, quinoclamine, tetflupyrolimet, tridiphane and 6 chloro-3-(2-cyclopropyl-6-methylphenoxy)-4-pyridazinol (CAS 499223-49-3) and its salts and esters, and 6-chloro-4-(2,7-dimethyl-1-naphthyl)-5-hydroxy-2-methyl-pyridazin-3-one (CAS 2414510-21-5) (HST-inhibitor; FMC).

11. The use or method according to any one of preceding claims, wherein the herbicide compound comprises a herbicide compound of the group (a), which is selected from the group consisting of glufosinate, glufosinate salts and combinations thereof.

12. The use or method according to claim 11, wherein the herbicide compound comprises at least one further herbicide compound which is selected from groups (b) to (o) as defined in claim 11.

13. The use or method according to any one of preceding claims, wherein the weight ratio of the compound of the formula (I) to the herbicide compound is in the range of 1:10 to 10:1.

14. The use or method according to any one of preceding claims, wherein the compound of the formula (I) and the herbicide compound are tank-mixed.

15. A herbicidal formulation comprising
i. at least one compound of the formula (I) according to the definition in any one of claims 1 to 9; and
ii. at least one herbicide compound.

16. The herbicidal formulation according to claim 15, wherein the formulation is a soluble liquid (SL) formulation.

17. An aqueous spray liquor comprising
i. at least one compound of the formula (I) according to the definition in any one of claims 1 to 9; and
ii. at least one herbicide compound.
